(19) Europäisches Patentamt
European Patent Office
Office européen des brevets

(11) EP 2 993 867 A1

(12) EUROPEAN PATENT APPLICATION

(43) Date of publication:
**09.03.2016 Bulletin 2016/10**

(51) Int Cl.:
***H04L 29/08*** *(2006.01)* ***G06F 9/455*** *(2006.01)*
***H04L 29/06*** *(2006.01)*

(21) Application number: **15182844.9**

(22) Date of filing: **28.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.09.2014 JP 2014179654**

(71) Applicant: **FUJITSU LIMITED**
**Kawasaki-shi,**
**Kanagawa 211-8588 (JP)**

(72) Inventor: **OGUCHI, Naoki**
**Kawasaki-shi, Kanagawa, 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

# (54) COMMUNICATION SYSTEM, CONTROL APPARATUS, AND COMMUNICATION METHOD

(57) With a view to speeding up transfer of data of arbitrary size, a communication system is provided which includes a plurality of communication apparatus including a source communication apparatus, a destination communication apparatus, and at least one relay communication apparatus, the source communication apparatus being configured to transmit data to the destination communication apparatus via the at least one relay communication apparatus, each adjacent pair of the plurality of communication apparatus being coupled by each of a plurality of communication networks, each of the plurality of communication networks in which each communication protocol selected from each protocol set is used for transmitting data, each protocol set including at least one communication protocol, each of the at least one relay communication apparatus being configured to perform each relay processing, each relay processing including each conversion of communication protocol applied to the data when a prior communication protocol applied to the data in an upstream communication network coupled to a corresponding relay communication apparatus is different from a posterior communication protocol applied to the data in a downstream communication network coupled to the corresponding relay communication apparatus, and a control apparatus configured to: for each relay communication apparatus and for each combination of the prior communication protocol and the posterior communication protocol, store each relay processing time length that is a time length taken for each relay processing performed by each relay communication apparatus, when transmitting a specified data, for each combination of communication protocols that are used in the plurality of communication networks respectively, estimate each transferring time length based on a size of the specified data and each overall throughput of the plurality of communication networks to which each combination of communication protocols is applied, each transferring time length being a time length taken for transferring the specified data in the plurality of communication networks except for time length taken for relay processing performed by the at least one of relay communication apparatus, for each combination of communication protocols that are used in the plurality of communication networks respectively, estimate each total transmission time length taken for transmission of the specified data from the source communication apparatus to the destination communication apparatus based on each stored relay processing time length and each estimated transferring time length, and select a combination of communication protocols that are to be used in the plurality of communication networks respectively, based on each estimated total transmission time length.

EP 2 993 867 A1

FIG. 24

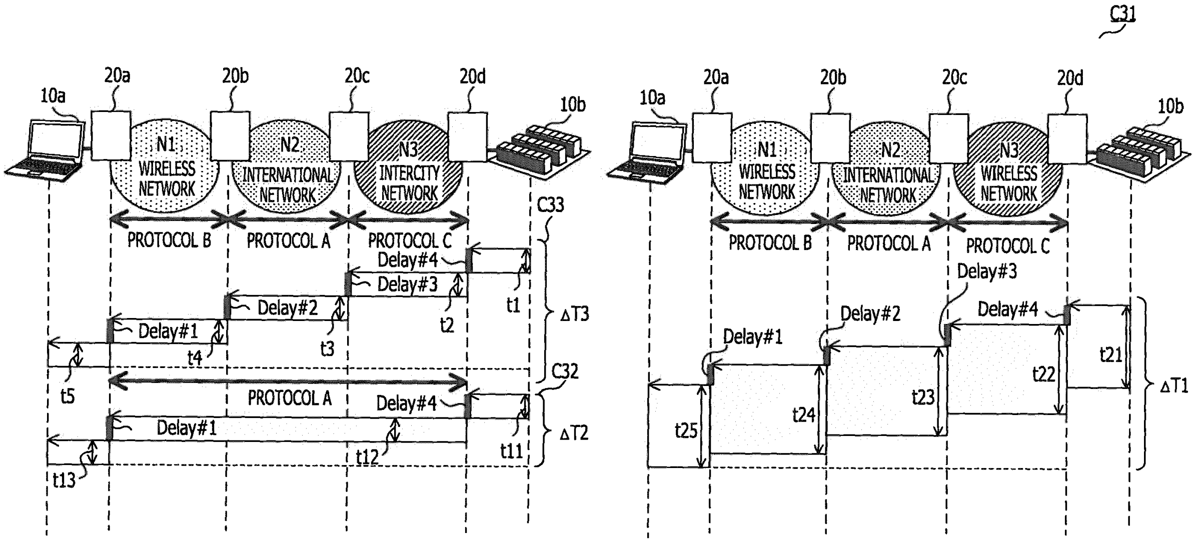
C31
10a
20a
20b
20c
20d
10b
N1 WIRELESS NETWORK
N2 INTERNATIONAL NETWORK
N3 INTERCITY NETWORK
N3 WIRELESS NETWORK
PROTOCOL B
PROTOCOL A
PROTOCOL C
Delay#1
Delay#2
Delay#3
Delay#4
C32
C33
t1
t2
t3
t4
t5
t11
t12
t13
t21
t22
t23
t24
t25
ΔT1
ΔT2
ΔT3

**Description**

FIELD

The embodiments discussed herein are related to communication that is performed between plurality of communication apparatuses.

BACKGROUND

With an increase in usage of cloud systems, the number of times that a user accesses a server from a client terminal in a cloud data center increases. In most cases, the cloud data center is positioned geographically far away from a current location of the client terminal, such as overseas. Accordingly, in communication between the client terminal and the server of cloud data center, round trip delay time (RTT) of packet has a tendency to increase. However, in a situation where the RTT is great and communication is performed using a transmission control protocol (TCP), when packet discarding occurs once, communication speed is greatly decreased and it is difficult to increase throughput.

In order to improve average throughput between the client terminal and the server, an apparatus called a WAN acceleration apparatus is installed at both ends of a wide area network (WAN). One of the WAN acceleration apparatuses measures a size of burst data that is transmitted by a certain apparatus, and selects a protocol that operates according to an algorithm that has less latency which is estimated from the size of the burst data and characteristics of a network. The WAN acceleration apparatus terminates communication of the burst data, and transfers the burst data to a destination using the selected protocol. A counter WAN acceleration apparatus converts the received packet into a packet that is used in TCP communication, and then transfers a resulting packet to a destination (for example, Japanese Laid-open Patent Publication No. 2013-179502).

A case C1 in FIG. 1 illustrates an example of a network in which communication is performed using a WAN acceleration apparatus. A WAN may include plurality of types of networks that have different communication environments. In an example that is illustrated in the case C1 in FIG. 1, a wireless network, an international network, and an intercity network are included in a wide area network. A wireless network has a tendency to experience a greater packet loss than the other networks, while an international network has a tendency to experience a greater delay than the other networks. Accordingly, when transfer processing is performed using the same protocol in all these networks, it is difficult to improve the throughput. For example, although WAN acceleration apparatuses 5a and 5b perform the transfer processing using a protocol that is effective in throughput improvement in an international network, which causes a great delay, when the packet loss in the wireless network that has an influence on the WAN acceleration apparatuses 5a and 5b, less throughput improvement is achieved.

As illustrated in a case C2 in FIG. 1, an attempt is made to perform the transfer processing with a protocol suitable for properties of each of the networks by installing the WAN acceleration apparatus 5 at both ends of every network that has different properties. In an example in a case C2, the WAN acceleration apparatuses 5c and 5d perform communication with a protocol suitable to properties of the wireless network. In the same manner, the WAN acceleration apparatuses 5e and 5f perform communication with a protocol suitable for properties of an international network, and WAN acceleration apparatuses 5g and 5h perform communication with a protocol suitable for properties of an intercity network. Moreover, the WAN acceleration apparatuses 5d and 5e operate as one relay site, and the WAN acceleration apparatuses 5f and 5g operates as one relay site as well. Communication is performed with the TCP between the WAN acceleration apparatuses in the same relay site.

SUMMARY

TECHNICAL PROBLEM

When a protocol suitable for transfer is used for every network characteristic that is included in a wide area network, in communication in which an amount of transfer data is great, even if time is taken in protocol conversion, because communication time is greatly shortened by improvement in throughput, the time taken for transfer processing is shortened. However, in communication in which the amount of transfer data is small, an amount of time taken for the protocol conversion is greater than an amount by which communication time that results from the improvement in throughput is shortened, and instead, time is taken in transfer.

It is desirable to speed up transfer of data of arbitrary size.

SOLUTION TO PROBLEM

According to an embodiment of an aspect of the invention, a communication system includes a plurality of communication apparatus including a source communication apparatus, a destination communication apparatus, and at least one relay communication apparatus, the source communication apparatus being configured to transmit data to the destination communication apparatus via the at least one relay communication apparatus, each adjacent pair of the plurality of communication apparatus being coupled by each of a plurality of communication networks, each of the plurality of communication networks in which each communication protocol selected from each protocol set is used for transmitting data, each protocol set including at least one communication protocol, each of the at least one relay communication apparatus being configured to perform each relay processing, each relay processing including each conversion of communication protocol applied to the data when a prior communication protocol applied to the data in an upstream communication network coupled to a corresponding relay communication apparatus is different from a posterior communication protocol applied to the data in a downstream communication network coupled to the corresponding relay communication apparatus, and a control apparatus configured to: for each relay communication apparatus and for each combination of the prior communication protocol and the posterior communication protocol, store each relay processing time length that is a time length taken for each relay processing performed by each relay communication apparatus, when transmitting a specified data, for each combination of communication protocols that are used in the plurality of communication networks respectively, estimate each transferring time length based on a size of the specified data and each overall throughput of the plurality of communication networks to which each combination of communication protocols is applied, each transferring time length being a time length taken for transferring the specified data in the plurality of communication networks except for time length taken for relay processing performed by the at least one of relay communication apparatus, for each combination of communication protocols that are used in the plurality of communication networks respectively, estimate each total transmission time length taken for transmission of the specified data from the source communication apparatus to the destination communication apparatus based on each stored relay processing time length and each estimated transferring time length, and select a combination of communication protocols that are to be used in the plurality of communication networks respectively, based on each estimated total transmission time length.

ADVANTAGEOUS EFFECTS OF INVENTION

An advantageous effect of an embodiment of the invention is to speed up transfer of data of arbitrary size.

BRIEF DESCRIPTION OF DRAWINGS

FIG. 1 is a diagram illustrating an example of communication that uses a WAN acceleration apparatus;
FIG. 2 is a diagram for describing an example of processing that is performed in communication according to an embodiment;
FIG. 3 is a diagram illustrating an example of a configuration of a transfer apparatus;
FIG. 4 is a diagram illustrating an example of a management server;
FIG. 5 is a diagram illustrating an example of a configuration of a communication apparatus;
FIG. 6 is a diagram illustrating an example of a hardware configuration;
FIG. 7 is a diagram illustrating an example of a communication system;
FIG. 8 is a diagram illustrating an example of a path management table;
FIG. 9A is a sequence diagram for describing an example of processing for estimating performance for every protocol conversion pattern;
FIG. 9B is a sequence diagram for describing an example of the processing for estimating the performance for every protocol conversion pattern;
FIG. 10 is a diagram illustrating an example of an information element that is included in a quality measurement request message;
FIG. 11 is a diagram illustrating an example of an information element that is included in a measurement packet and a measurement response packet;
FIG. 12 is a diagram illustrating an example of an information element that is included in the quality measurement response message;
FIG. 13 is a diagram illustrating an example of a processing delay table;
FIG. 14 is a diagram illustrating an example of data in a characteristics table;
FIG. 15 is a diagram illustrating an example of a communication quality table;
FIG. 16A is a diagram illustrating an example of a performance estimation table;
FIG. 16B is a diagram illustrating an example of a performance estimation table;
FIG. 16C is a diagram illustrating an example of a performance estimation table;
FIG. 16D is a diagram illustrating an example of a performance estimation table;

FIG. 16E is a diagram illustrating an example of a performance estimation table;
FIG. 16F is a diagram illustrating an example of a performance estimation table;
FIG. 16G is a diagram illustrating an example of a performance estimation table;
FIG. 17 is a diagram illustrating an example of a method of separation into sections;
FIG. 18A is a sequence diagram for describing an example of setting of a conversion pattern that is applied to data transfer;
FIG. 18B is a sequence diagram for describing an example of setting of a conversion pattern that is applied to data transfer;
FIG. 18C is a sequence diagram for describing an example of setting of a conversion pattern that is applied to data transfer;
FIG. 19 is a diagram illustrating examples of an allocation request message and an allocation response message;
FIG. 20 is a diagram illustrating an example of a relationship between the time that is taken for the data transfer and a burst size;
FIG. 21 is a diagram illustrating an example a message that is used when a relay table is set;
FIG. 22 is a diagram for describing an example of the data transfer;
FIG. 23 is a flowchart for describing an example of processing by a management server;
FIG. 24 is a diagram for describing an example of an effect that is obtained according to a first embodiment;
FIG. 25 is a diagram for describing an example of the effect that is obtained according to the first embodiment;
FIG. 26 is a diagram illustrating an example of a configuration of a transfer apparatus according to a second embodiment;
FIG. 27A is a sequence diagram for describing an example of data transfer;
FIG. 27B is a sequence diagram for describing an example of data transfer;
FIG. 27C is a sequence diagram for describing an example of data transfer;
FIG. 28 is a diagram illustrating examples of a filter registration message and a filter registration response message;
FIG. 29 is a diagram illustrating an example of a filter table;
FIG. 30 is a diagram illustrating an example of a relay table that is retained by a transfer apparatus;
FIG. 31 is a flowchart for describing an example of operation of the transfer apparatus;
FIG. 32 is a diagram for describing an example of a system to which a third embodiment is applied;
FIG. 33 is a diagram for describing an example of a performance estimation table;
FIG. 34 is a diagram for describing an example of the data transfer that is performed according to the third embodiment;
FIG. 35 is a diagram for describing an example of a change in an application pattern over time; and
FIG. 36 is a diagram illustrating an example in a case where the communication apparatus and the transfer apparatus are mounted in the same apparatus.

## DESCRIPTION OF EMBODIMENTS

FIG. 2 is a diagram for describing an example of processing that is performed in communication according to an embodiment. The transfer apparatus 20 is set to be able to operate as a WAN acceleration apparatus. In FIG. 2, a path that leads from a communication apparatus 10a that is a transmission source to a communication apparatus 10b that is a data destination passes through networks N1 to N3 that have different communication quality. The communication apparatus 10a accesses the wide area network through a transfer apparatus 20a, and a communication apparatus 10b accesses the wide area network through a transfer apparatus 20d. Additionally, the transfer apparatus 20b is installed in a border between the network N1 and the network N2, and a transfer apparatus 20c is installed in a border between the network N2 and the network N3. Accordingly, the transfer apparatuses 20a to 20d are included on a communication path between the communication apparatus 10a and the communication apparatus 10b. Furthermore, the transfer apparatuses 20a to 20d are set to be able to communicate with a management server 50 (a management apparatus) that determines whether the protocol conversion is performed in each transfer apparatus. In the following description, an area where transmission processing is performed that uses a different protocol from a protocol that is used by the communication apparatus 10a that is a data transmission source is expressed as a "section." The communication is performed with the same type of protocol without performing protocol termination or protocol conversion processing in one section. Moreover, a case where a packet that is transmitted with a certain protocol is terminated and is retransferred as a packet having the same protocol is set to be also included in the protocol conversion processing.

In a case where the protocol conversion is performed on the path that leads from the communication apparatus 10a to the communication apparatus 10b in all the transfer apparatuses 20a to 20d, as illustrated in a case C11, the wide area network is divided into 3 sections by which the transfer apparatuses 20 are separated from each other. The case C11 illustrates a case where a protocol A is used in a section between the transfer apparatuses 20a and 20b, a protocol B is used in a section between the transfer apparatuses 20b and 20c, and a protocol C is used in a section between the transfer apparatus 20c and 20d.

Case C12 is, for example, a case where the transfer apparatuses 20a and 20d perform the protocol conversion, but a different transfer apparatus 20 does not convert a protocol. In this case, the wide area network is treated as one section from the transfer apparatus 20a to the transfer apparatus 20d.

According to an amount of data that is transmitted and received between a communication apparatus that is a transmission source and a communication apparatus that is a destination, the management server 50 determines the number of times that a protocol which is used in the transfer processing is converted, and a type of protocol that is used in the transfer processing, in such a manner that data transfer time is shortened. That is, the management server 50 determines the number of times of protocol conversion or a type of protocol conversion from the shortening of transfer time that results from using a protocol suitable for a network and thus improving throughput and from a delay time due to the protocol conversion processing, in such a manner that the transfer time is shortened.

For example, in the case C11, because the protocol conversion is performed in each of the transfer apparatuses 20a to 20d, the conversion of a protocol that is used for data transfer is performed four times between the communication apparatus 10a and the communication apparatus 10b. However, in the case C11, because the protocol suitable for a communication characteristic is used in any one of the networks N1 to N3, the throughput is high. Accordingly, in a case where an amount of transfer data is comparatively great, it is predicted that the transfer time will be shortened by the improvement in the throughput to a much greater extent than a delay due to the protocol conversion. Accordingly, in a case where as a result of performing data backup or the like between the communication apparatus 10a and the communication apparatus 10b, an amount of data that is transferred is comparatively great, as in the case C11, the management server 50 determines that a protocol is to be changed for every network.

On the other hand, in a case where an amount of data that is transmitted from the communication apparatus 10a to the communication apparatus 10b is comparatively small, an amount of delay due to the protocol conversion is greater than a prediction value of an amount by which transfer time due to the improvement in the throughput is shortened. Accordingly, in case C12, the management server 50 determines that the transfer processing is to be performed using the same protocol in apparatuses ranging from the transfer apparatus 20a to the transfer apparatus 20d and thus the number of times of protocol conversion is decreased, resulting in avoiding the delay due to the protocol conversion processing.

In this manner, according to an amount of transmission data, for every combination of protocols that is used in the transfer apparatus 20, the management server 50 calculates the time that will be taken to transmit data from the communication apparatus 10a to the communication apparatus 10b, and determines a protocol that is used in each transfer apparatus, using a result of the calculation. Accordingly, in accordance with an amount of data that is transferred, the management server 50 may select a combination of protocols with which the time that is taken for data transfer is short. Additionally, the management server 50 notifies the transfer apparatuses 20a to 20d of a protocol that is used for the transfer apparatus 20, in a state where the protocol is associated with information that identifies data. For example, the management server 50 may notify the transfer apparatus 20 of information on the protocol that is used for the data transfer, in a state where the protocol is associated with information on a session that is used for the data transfer. Because the transfer apparatus 20 performs the transfer processing according to the notification by the management server 50, an optimal protocol that is used for the transfer processing in each transfer apparatus 20 may be selected in accordance with the amount of transmission data. Therefore, according to the amount of data, efficient transfer processing is performed.

## Apparatus Configuration

FIG. 3 is a diagram illustrating an example of a configuration of the transfer apparatus 20. The transfer apparatus 20 includes an interface unit 21, distribution units 22 and 26, protocol reception processing units 23 to 25, and protocol transmission processing units 27 to 29. Additionally, the transfer apparatus 20 includes a test packet output unit 31, a processing delay calculation unit 32, a measurement packet processing unit 33, a measurement packet generation unit 34, a proxy processing unit 35, a relay table 37, and a transfer destination setting unit 38 as well.

The interface unit 21 transmits and receives a packet between the transfer apparatus 20, and a communication apparatus 10, the management server 50 and a different transfer apparatus 20. The interface unit 21 outputs a received packet to the distribution unit 22. The distribution unit 22 performs packet distribution processing using pieces of information indicating a destination of a packet, a transmitting source of the packet, and a type of the packet, and the like. According to a type of transport layer protocol, the distribution unit 22, for example, outputs a packet of which a transmission source is not the management server 50 and which is destined for the transfer apparatus 20 to which the distribution unit 22 belongs, to any one among a first protocol reception processing unit 23, a second protocol reception processing unit 24, and a third protocol reception processing unit 25. Furthermore, the distribution unit 22 outputs the packet that is received from the management server 50, to a control unit 40. The control unit 40 stores a reception protocol, a transmission protocol, address information or port information that is used for the transfer processing, and the like in the relay table 37, for every communication session, using the packet that is received from the management server 50.

The protocol reception processing units 23 to 25 perform termination processing of a transport protocol on a packet that is input. Moreover, the first protocol reception processing unit 23, the second protocol reception processing unit 24, and the third protocol reception processing unit 25 are set to process different protocols, respectively. Any one of the protocol reception processing units 23 to 25 adds a destination Internet Protocol (IP) address of, a destination port of, and protocol information of a packet, and the like to data in the packet that is input, and outputs the resulting packet to the proxy processing unit 35.

The proxy processing unit 35 uses the address information or the port information that is added to the data that is input and searches the relay table 37, and thus specifies a destination of the data that is input and a protocol that is used for transfer. Along with the data, the proxy processing unit 35 outputs a data transfer destination or information on the protocol that is used for transfer to a distribution unit 26. According to the protocol that is used for transfer, the distribution unit 26 outputs the information that is input, to any one of a first protocol transmission processing unit 27, a second protocol transmission processing unit 28, and a third protocol transmission processing unit 29. The protocol transmission processing units 27 to 29 processes the data that is input, using the designated protocol, and outputs the post-processing data to the transfer destination setting unit 38 along with the destination address information and the like. The transfer destination setting unit 38 sets a header of the packet that is input.

The test packet output unit 31 generates a test packet that is used for measuring the time that is taken for protocol conversion. Like the packet that is a target for the transfer processing, the test packet goes through processing operations in the distribution unit 22, the protocol reception processing units 23 to 25, the proxy processing unit 35, the protocol transmission processing units 27 to 29, and then is output to the processing delay calculation unit 32. The processing delay calculation unit 32 calculates a period of time from a point in time at which the test packet is output from the test packet output unit 31 to a point in time at which the test packet is input, as a processing delay due to the protocol conversion.

The measurement packet generation unit 34 generates a measurement packet for measuring communication quality such as a discarding rate and round trip delay time in the communication between the transfer apparatus 20 that is a transfer destination, and the transfer apparatus 20 to which the measurement packet generation unit 34 belongs, and transmits the generated measurement packet to the transfer apparatus 20 that is a transfer destination, through the interface unit 21 and the like. When receiving the measurement packet, the measurement packet processing unit 33 suitably obtains the round trip delay time or a packet discarding rate using information in the measurement packet.

FIG. 4 is a diagram illustrating an example of a configuration of the management server 50. The management server 50 includes an interface unit 51, a communication processing unit 52, a communication quality acquisition unit 53, a notification processing unit 54, and a protocol allocation unit 60. The protocol allocation unit 60 includes a calculation unit 61 and a selection unit 62. Additionally, the management server 50 includes a path management table 71, a characteristics table 72, a processing delay table 73, a communication quality table 74, and a performance estimation table 75.

The interface unit 51 performs connection processing for communicating with the transfer apparatus 20, and receives a packet. The communication processing unit 52 manages a control session between the management server 50 and the transfer apparatus 20. The communication quality acquisition unit 53 acquires information indicating quality of communication from each transfer apparatus to a transfer destination of the packet transferred by the transfer apparatus.

The path management table 71 records the transfer apparatus 20 that is included on a packet transfer path, in a state where the transfer apparatus 20 is associated with information that specifies a combination of communication apparatuses 10 that performs communication that involves the transfer apparatus 20. The characteristics table 72 stores the information for specifying throughput from a combination of the discarding rate and the delay time, with respect to each transport layer protocol that has a likelihood of being used for transfer. The processing delay table 73 stores the processing delay that results when the protocol conversion processing is performed in each transfer apparatus 20. The communication quality table 74 stores the communication quality such as the discarding rate or the delay time between each of the plurality of transfer apparatuses 20. The performance estimation table 75 stores a performance that is estimated for every conversion pattern of a protocol that has a likelihood of being applied to a path between a transmission source and a destination of data that is a transfer target. Specific examples of the path management table 71, the characteristics table 72, the processing delay table 73, the communication quality table 74, and the performance estimation table 75, and methods of using these components will be described below.

The protocol allocation unit 60 allocates a protocol that is used for the transfer processing, to each transfer apparatus 20. The calculation unit 61 generates the performance estimation table 75 using the path management table 71, the characteristics table 72, the processing delay table 73, and the communication quality table 74. The selection unit 62 acquires information on an amount of transmission target data, and selects a protocol conversion pattern from the performance estimation table 75.

FIG. 5 is a diagram illustrating an example of a configuration of a communication apparatus 10. The communication apparatus 10 includes an interface unit 11, an IP processing unit 12, a transport protocol processing unit 13, the application processing unit 14, a distribution control unit 15, a transfer destination setting unit 16, and a distribution table 17. The interface unit 11 transmits and receives a packet. The IP processing unit 12 processes an IP header. The transport protocol processing unit 13 performs transport layer processing, such as re-transmission control between the communication apparatus 10 and a final destination of data, transfer layer control, and order determination control. The application processing unit 14 processes data in a packet. The distribution control unit 15 records information of a packet that is transmitted through the transfer apparatus 20, in the distribution table 17. Moreover, the distribution control unit 15 is suitably set to acquire a control message from the management server 50, and thus updates the distribution table 17. The distribution table 17 stores information, such as an address or a port number for specifying a packet that is transferred to the transfer apparatus 20, an IP address that is allocated to the transfer apparatus 20 that is a transfer destination of the packet, and the like. The transfer destination setting unit 16 rewrites header information in order to set a transfer destination of the packet that corresponds to a condition which is recorded in the distribution table 17 to be in the transfer apparatus 20.

FIG. 6 is a diagram illustrating an example of a hardware configuration. Any one of the transfer apparatus 20, the management server 50, and the communication apparatus 10, as illustrated in FIG. 6, includes a processor 81, a memory 82, a bus 84, and network interface cards (NIC) 87a and 87b. The processor 81 executes a program that is stored in the memory 82. The bus 84 connects the processor 81, the memory 82, and the NIC 87 to each other in such a manner that data input and output is made possible. Moreover, any one of the apparatuses may include an arbitrary number of the NICs 87 or of the antennas 88 according to a network that is connected. Furthermore, any one of the apparatuses may optionally include a storage 83, an output device 85, an input device 86, and the like. Furthermore, in any one of the apparatuses, the number of the NICs 87 is an arbitrary number according to packaging.

In the communication apparatus 10, the processor 81 operates the IP processing unit 12, the transport protocol processing unit 13, the application processing unit 14, the distribution control unit 15, and the transfer destination setting unit 16. Furthermore, the interface unit 11 is realized by the NIC 87 or the antenna 88. The distribution table 17 is stored in the memory 82.

In the transfer apparatus 20, the processor 81 operates as the distribution units 22 and 26, the protocol reception processing units 23 to 25, the protocol transmission processing units 27 to 29, the proxy processing unit 35, and the transfer destination setting unit 38. Additionally, the processor 81 realizes the test packet output unit 31, the processing delay calculation unit 32, the measurement packet processing unit 33, and the measurement packet generation unit 34 as well. The memory 82 retains the relay table 37, and suitably retains data that is used for processing in the processor 81. The interface unit 21 is realized by the NIC 87 or the antenna 88.

In the management server 50, the processor 81 operates as the communication processing unit 52, the communication quality acquisition unit 53, the notification processing unit 54, and the protocol allocation unit 60. The memory 82 retains the path management table 71, the characteristics table 72, the processing delay table 73, the communication quality table 74, the performance estimation table 75, and suitably retains the data that is used for the processing in the processor 81. The interface unit 51 is realized by the NIC 87 or the antenna 88.

## First Embodiment

For their descriptions, which are provided below, examples of a first embodiment are set to be for collection of information for performing estimation of communication performance, for estimation of performance for every protocol conversion pattern, and for determination and setting of a conversion pattern that is applied to communication, and are categorized into communication processing operations. Moreover, the collection of information for performing the estimation of the communication performance and the estimation of the performance for every protocol conversion pattern are set to be performed every predetermined time. Accordingly, the conversion pattern that is applied to the communication is performed based on a result of the latest performance estimation that is obtained when the determination of the conversion pattern is performed.

Moreover, in the following description, several specific protocol examples are illustrated, but these are only examples. An arbitrary transport protocol may be used for communication between the transfer apparatuses 20.

### 1. Collection of the Information for the Estimation of the Communication Performance

FIG. 7 is a diagram illustrating an example of a communication system. As illustrated in FIG. 7, the communication apparatus 10a is described below, using, for example, a case where communication is performed between the communication apparatus 10a and the communication apparatus 10b through a wide area network including the networks N1 to N3. In the following description, the communication apparatus 10a is set to be a terminal and the communication apparatus 10b is set to be an overseas cloud server. Furthermore, the communication apparatus 10a is set to form a communication session through a domestic wireless access network between the communication apparatus 10a and the transfer apparatus 20a. The network N1 is set to be a wireless network in which discarding occurs comparatively frequently, the network N2 is set to be an international network in which a long delay time occurs, and the network N3 is set to be an intercity network that is comparatively better in communication quality. Furthermore, the transfer apparatus 20a is installed between the communication apparatus 10a and the network N1, and the transfer apparatus 20d is installed between the communication apparatus 10b and the network N3. Additionally, the transfer apparatus 20b is set to perform relay processing between the network N1 and the network N2, and the transfer apparatus 20c is set to perform relay processing between the network N2 and the network N3. FIG. 7 also illustrates an IP address that is allocated to each apparatus.

FIG. 8 is a diagram illustrating an example of the path management table 71. In the path management table 71, a list for the transfer apparatuses 20 that are included on a path is recorded for every combination of a network including a packet destination and a network including a packet transmission source. Accordingly, the communication quality acquisition unit 53 in the management server 50 specifies the transfer apparatus 20 that is included on a processing target path, using the path management table 71. For example, a path that is used when the communication apparatus 10b (150.20.19.29) transmits data to the communication apparatus 10a (133.150.114.56) corresponds to transmission from a network with an address of 150.20.19.0 to an address of 133.150.114.0. Therefore, the communication quality acquisition unit 53 specifies, from the first entry in the path management table 71 that is illustrated in FIG. 8, that a packet is transmitted to the transfer apparatuses 20d, 20c, 20b, and 20a in this order.

FIGs. 9A and 9B are sequence diagrams for describing an example of processing for estimating performance for every protocol conversion pattern. Moreover, in the following description, an identifier for identifying the transfer apparatus 20a is set to be "WO #1." In the same manner, an identifier of the transfer apparatus 20b is set to be "WO #2," an identifier of the transfer apparatus 20c is set to be "WO #3," and an identifier of the transfer apparatus 20d is set to be "WO #4." Furthermore, in the following description, in order to make it easy to identify an apparatus that is operating, a letter that is allocated to the transfer apparatus 20 or the communication apparatus 10 that is operating is placed after a reference numeral. For example, a control unit 40a is the control unit 40 that is included in the transfer apparatus 20a. Furthermore, the order in which measurement processing operations are performed in the transfer apparatuses 20a to 20d may be changed according to packaging.

In Step S1, the communication quality acquisition unit 53 specifies the transfer apparatus 20 that is used for transmission of data from the communication apparatus 10b to the communication apparatus 10a. The communication quality acquisition unit 53 generates a quality measurement request message that is destined for the specified transfer apparatus 20, and transmits the quality measurement request message through the interface unit 51 (Step S2).

FIG. 10 illustrates an example of an information element that is included in a payload of the quality measurement request message that is destined for the transfer apparatus 20a. Information for specifying a message type, a size, and a measurement target is included in the quality measurement request message. In an example in FIG. 10, a processing delay due to a change in a protocol within the transfer apparatus 20a (150.80.65.98) is designated as a measurement target. Additionally, a packet discarding rate or RTT in sections between the transfer apparatuses 20b, 20c, and 20d that may be a transfer destination of a data packet from the transfer apparatus 20a may be designated. Here, 180.90.14.6 is set to be assigned to the transfer apparatus 20b, 120.160.50.1 is set to be assigned to the transfer apparatus 20c, and 160.10.1.5 is set to be assigned to the transfer apparatus 20d. Moreover, the communication quality acquisition unit 53 transmits a result of adding a header indicating that a destination is the transfer apparatus 20a and a transmission source is the management server 50, to the information element that is illustrated in FIG. 10, as the quality measurement request message, to the transfer apparatus 20a. In the same manner, the communication quality acquisition unit 53 also generates the quality measurement request message that is destined for the transfer apparatuses 20b to 20d, and transmits the generated quality measurement request message toward a transfer apparatus that is a destination.

In Step S2 in FIG. 9A, a distribution unit 22a of the transfer apparatus 20a acquires the quality measurement request message through an interface unit 21a. Because a transmission source of the quality measurement request message is the management server 50, the distribution unit 22a outputs the quality measurement request message to the control unit 40. The control unit 40 requests the measurement packet generation unit 34a to perform processing for measuring the packet discarding rate and the RTT between the transfer apparatus 20 to which the control unit 40 belongs and a different transfer apparatus 20, which are designated in the quality measurement message. A measurement packet generation unit 34a of the transfer apparatus 20a generates a measurement packet that is destined for the transfer apparatus 20 that is designated by the control unit 40a. The measurement packet generation unit 34a generates the measurement packet that is destined for the transfer apparatuses 20b to 20d.

M1 in FIG. 11 is an example of an information element that is included in a payload of the measurement packet. A message type, a size, a transmission source address, a destination address, and a time stamp are included in the payload of the measurement packet. A value of the message type is a value (0x6) indicating the presence of a measurement packet, and the transmission time of the measurement packet is recorded in the time stamp. The measurement packet generation unit 34a transmits the generated measurement packet to a destination through the interface unit 21a (Step S3 in FIG. 9A). In FIG. 9A, in order for the drawing to be easily viewed, a situation in which the measurement packet is transmitted to each apparatus is indicated by one arrow, but the measurement packets of which the number is determined in advance to calculate the packet discarding rate are set to be transmitted to the transfer apparatus 20 that is a destination.

A distribution unit 22b of the transfer apparatus 20b acquires the measurement packet transmitted from the transfer apparatus 20a, through an interface unit 21b. The distribution unit 22b outputs the measurement packet to a measurement packet processing unit 33b. The measurement packet processing unit 33b generates a measurement response packet that is destined for the transfer apparatus 20a that is a transmission source of the measurement packet.

M2 in FIG. 11 is an example of an information element that is included in a payload of the measurement response packet. A message type, a size, a transmission source address, a destination address, and a time stamp are included in the payload of the measurement response packet. A value of the message type is a value (0x7) indicating the presence of a measurement response packet, and a value of the time stamp that is included in the measurement packet is recorded in the time stamp. The measurement packet processing unit 33b transmits the generated measurement response packet to a destination, through the interface unit 21b and the like (Step S4 in FIG. 9A). Furthermore, measurement packet processing and measurement response packet transmission are also performed in the transfer apparatus 20c and the transfer apparatus 20d. Moreover, each transfer apparatus 20 transmits the number of measurement response packets that is the same as the number of received measurement packets.

In Step S5, the measurement packet processing unit 33a of the transfer apparatus 20a acquires the measurement response packet received from the transfer apparatuses 20b to 20d, through the distribution unit 22a and the like. The measurement packet processing unit 33a obtains the RTT and the packet discarding rate for every transmission source of the measurement response packet. The measurement packet processing unit 33a sets a difference between the reception time of the measurement response packet and the time stamp in the measurement response packet to be the RTT between the transmission sources of the measurement response packet. Furthermore, the measurement packet processing unit 33a obtains the discarding rate from the following equation (1).

$$PWA\ (\%) = (Ns - Nr)/Ns \times 100 \qquad (1)$$

where Nr is the number of measurement response packets received from a transfer apparatus 20, and Ns is the number of measurement packets transmitted to a processing-target transfer apparatus 20. Furthermore, PWA is the packet discarding rate. Moreover, the measurement packet processing unit 33a is set to suitably acquire the number of times that the measurement packet is transmitted from the measurement packet generation unit 34a to each transfer apparatus 20. The measurement packet processing unit 33a outputs the obtained result of the processing to the control unit 40a.

Processing operations in Steps S6 to S8 are performed based on the quality measurement request message that is received by the transfer apparatus 20b in Step S2. Processing operations in Steps S6 to S8 are the same as those in Steps S3 to S5. Furthermore, processing operations in Steps S9 to S11 are performed in the same manner as those in Steps S6 to S8, based on the quality measurement request message received by the transfer apparatus 20c, and processing operations in Steps S12 to S14 in FIG. 9B are performed in the same manner as those in Steps S6 to S8, based on the quality measurement request message received by the transfer apparatus 20d.

In Step S15 in FIG. 9B, the control unit 40a of the transfer apparatus 20a requests a test packet output unit 31a to output the test packet. The test packet output unit 31a outputs the test packet to the distribution unit 22a. The time at which the test packet is output to the distribution unit 22a and information for specifying contents of a protocol change that is performed on the test packet are included in a payload of the test packet. According to a protocol that is used in the test packet, the distribution unit 22a outputs the test packet to any one of the first protocol reception processing unit 23, the second protocol reception processing unit 24, and the third protocol reception processing unit 25. For example, the first protocol reception processing unit 23 is set to process a TCP and the second protocol transmission processing unit 28 is set to process a scalable TCP (STCP). Additionally, the fact that the test packet is changed from a TCP protocol to the STCP is recorded in the payload of the test packet. In this case, the distribution unit 22a outputs the test packet to a first protocol reception processing unit 23a. The first protocol reception processing unit 23a outputs information indicating the presence of the data in the test packet and of the test packet, to a proxy processing unit 35a. When it is specified, using data that is input, that the test packet is converted into the STCP, the proxy processing unit 35a outputs the data to a second protocol transmission processing unit 28a. The second protocol transmission processing unit 28a converts a protocol of the test packet, and outputs a result of the conversion to a distribution unit 26a. The distribution unit 26a outputs a post-conversion test packet to a processing delay calculation unit 32a. The processing delay calculation unit 32a sets a difference between the time at which the test packet is input and the time information in the test packet to be the processing delay that occurs in a case where the protocol is converted from the TCP to the STCP. Moreover, in the same manner, the transfer apparatus 20a is set to perform the measurement of the processing delay that uses the test packet, on all combinations of protocols that are available for conversion.

In Step S16 to S18, processing that is the same as the processing in Step S15 is performed in the transfer apparatuses 20b to 20d, and thus the processing delay in each transfer apparatus 20 is measured. The processing delay calculation unit 32a notifies the control unit 40a of an obtained value of the processing delay in a state of being associated with a combination of protocols that is available for conversion.

FIG. 12 is a diagram illustrating an example of the information element that is included in the payload of the quality measurement response message generated by the transfer apparatus 20a. The control unit 40a generates a quality measurement response message using data that is input from the measurement packet processing unit 33a and the processing delay calculation unit 32a. Pieces of information relating to a message type, a size, a processing delay that occurs in the transfer apparatus which generates the quality measurement response message, communication quality between the transfer apparatus to which the control unit 40a belongs and a different transfer apparatus, and the like are included in the quality measurement response message. A result of the measurement of the processing delay with respect to each of the combinations of protocols that are available for conversion processing in the transfer apparatus 20a that is a transmission source is included in the quality measurement response message. The processing delay is a combination of a pre-conversion protocol type, a post-conversion protocol type, and a processing delay. Moreover, the pre-conversion protocol type is a protocol that is used in the test packet that is generated by the test packet output unit 31, and the post-conversion protocol is a protocol that is used in the test packet that is output to the processing delay calculation unit 32.

Items of communication quality, of which the number is the same as the number of transmission sources of the measurement packet from the transfer apparatus 20a are included in the quality measurement response message. An address of the transmission source of the measurement packet, a measurement flag, and a result of the measurement are included in each of the items of communication quality. The measurement flag is used for specifying a type of measured value. FIG. 12 illustrates a case where measurement targets are the packet discarding rate and the RTT.

When generating the quality measurement response message including the information element that is illustrated in FIG. 12, the control unit 40a adds a destination to a header designated by the management server 50. The control unit 40a transmits the quality measurement response message to the management server 50 through the interface unit 21a (Step S19).

In Steps S20 to S22, the transfer apparatuses 20b to 20d transmit the quality measurement response message to the management server 50. Processing operations that are performed in the transfer apparatuses 20b to 20d are the same as those in the transfer apparatus 20a, which are described referring to FIG. 12. The management server 50 estimates the communication quality for every protocol conversion pattern using the processing delay in each transfer apparatus 20, which is acquired from the transfer apparatuses 20a to 20d, or the communication quality between the transfer apparatuses 20 (Step S23).

2. Estimation of the Performance for Every Protocol Conversion Pattern

Next, processing that the management server 50 performs when receiving the quality measurement response message and the estimation of the performance for every protocol conversion pattern are described in detail. Here, the protocol conversion pattern is set to include information on which transfer apparatus 20 on the path the protocol conversion processing is performed in and information on a protocol that each apparatus which performs the protocol conversion processing uses for the transfer processing.

The communication quality acquisition unit 53 of the management server 50 acquires the quality measurement response message from each transfer apparatus 20 through the interface unit 51 and the communication processing unit 52. The communication quality acquisition unit 53 stores processing delay information that is included in the quality measurement response message, in the processing delay table 73.

FIG. 13 is a diagram illustrating an example of the processing delay table 73. A combination of a pre-conversion protocol type, a post-conversion protocol type, and a processing delay for every transfer apparatus 20 is recorded in the processing delay table 73.

FIG. 14 is a diagram illustrating an example of data in the characteristics table 72. For each protocol, the throughput that is estimated to be obtained when the protocol is used is recorded, as a function of a combination of the RTT and the discarding rate, in the characteristics table 72. FIG. 14 illustrates the data in the characteristics table 72 as a flag for every RTT and an estimated throughput in each protocol as a function of the discarding rate. A flag G1 illustrates a relationship between the throughout and the discarding rate in a case where the RTT is 50 ms. In the same manner, a flag G2, a flag G3, a flag G4, a flag G5, and a flag G6 illustrate the relationships between the throughput and the discarding rate in a case where RTT = 120 ms, in a case where RTT = 200 ms, in a case where RTT = 250 ms, in a case where RTT = 320 ms, and in a case where RTT = 370 ms, respectively. The fact common to any protocol is that when the RTT is increased, the throughput is decreased and thus the higher the discarding rate, the lower the throughput, but an influence of the RTT or the discarding rate on the throughout differs from protocol to protocol.

The communication quality acquisition unit 53 obtains the throughput associated with the RTT and the discarding rate in the quality measurement response message from the characteristics table 72, and thus obtains the throughput that is expected in the communication between the transfer apparatuses 20, for every protocol. For example, in a case where the management server 50 receives the quality measurement response message including data that is illustrated in FIG. 12, from the transfer apparatus 20a, the communication quality acquisition unit 53 acquires items of communication quality 1 to 3 in FIG. 12. The communication quality acquisition unit 53 recognizes from the communication quality 1 that the RTT and the discarding rate between the transfer apparatus 20a and the transfer apparatus 20b are 120 ms and 0.4%, respectively. Accordingly, the communication quality acquisition unit 53 estimates, using the flag G2 in FIG. 14, that the throughput between the transfer apparatus 20a and the transfer apparatus 20b is 70 Mbps in a case where a random packet stream (RPS) is used. In the same manner, the communication quality acquisition unit 53 estimates that when a universal network acceleration protocol (UNAP) is used between the transfer apparatus 20a and the transfer apparatus 20b, the throughput is 75 Mbps, and that when the STCP is used, the throughput is 15 Mbps. The communication quality acquisition unit 53 records the obtained throughput in the communication quality table 74, along with the discarding rate and the RTT.

FIG. 15 is a diagram illustrating an example of the communication quality table 74. Information that the communication quality acquisition unit 53 obtains using the information that is illustrated in the communication quality 1 in FIG. 12 is recorded in a field that appears first from the top in the communication quality table 74 for a path that runs from the transfer apparatus 20a to the transfer apparatus 20b. Between the transfer apparatus 20a and the transfer apparatus 20c, in a section between the transfer apparatus 20a and the transfer apparatus 20d, the communication quality acquisition unit 53 also obtains the throughput in the same manner, and records an obtained value in the communication quality table 74. Additionally, the communication quality acquisition unit 53 also performs processing on the quality measurement response messages that are transmitted from the transfer apparatus 20b, the transfer apparatus 20c, and the transfer apparatus 20d, and thus generates the communication quality table 74 as illustrated in FIG. 15.

When the communication quality table 74 is generated, the calculation unit 61 obtains a function expressing the transfer time that is taken in a case where one or more of the transfer apparatuses 20 on a path performs the protocol conversion processing, using the processing delay table 73 and the communication quality table 74. At this time, the calculation unit 61 calculates the function expressing the transfer time for all combinations of sections that are applied to a wide area network. Moreover, the calculation unit 61 obtains the function expressing the transfer time for all combinations of types of protocols that are used in each section. The function expressing the transfer time is expressed by the following equation (2).

$$\Delta T = D/B + PT \qquad (2)$$

where ΔT is the time that is taken for transfer, D is a burst size of data that is transferred, B is throughput in a link in which a bottleneck occurs on a transfer path, and PT is a total value for protocol conversion processing. Here, the burst size is set to indicate a total amount of data that is transmitted at intervals of less than retransmission time out (RTO). Therefore, the transfer time is expressed as a function of burst size D, using throughput B in the bottleneck and total time PT that is taken for the protocol conversion processing. In order to describe the transfer time, the throughput B in the bottleneck and the total time PT that is taken for the protocol conversion processing are recorded in the performance estimation table 75.

FIGs. 16A to 16G are examples of the performance estimation table 75. An example of estimation processing of communication performance, for example, in a case where the communication apparatus 10b transmits data to the communication apparatus 10a using the TCP, is described below. Here, for communication between the transfer apparatuses 20, any one among UNAP, RSP, and STCP is set to be used. The transfer apparatus 20d converts a protocol of a packet that is received from the communication apparatus 10b, from the TCP to any one of the protocols that are used for the communication between the transfer apparatuses 20. In the same manner, the transfer apparatus 20a reconverts the protocol of the packet, which is transferred to the communication apparatus 10a, to the TCP. Information of each transfer apparatus 20 is recorded in the performance estimation tables 75 that are illustrated in FIGs. 16A to 16G, using an identifier of the transfer apparatus 20. The performance estimation table 75 includes the number of sections, an applied ranges of protocol sessions, an application protocol, a bottleneck link, identification information on the transfer apparatus 20 that converts a protocol, a sum of processing delays, and an ID.

FIG. 17 is a diagram illustrating an example of separation into sections. A section and an applied ranges of protocol sessions will be described below referring to FIG. 17. As illustrated in a case C24, the transfer apparatus 20a and the transfer apparatus 20d perform the protocol conversion processing, but are set to perform the transfer processing using the same protocol between the transfer apparatuses 20a to 20d. In this case, a section from the transfer apparatus 20a to the transfer apparatus 20d is treated as one section. Furthermore, the applied ranges of protocol sessions is set to be a session between the transfer apparatus 20a and the transfer apparatus 20d. In this case, with the protocol that is used, the calculation unit 61 calculates three types that are illustrated by ID = 1.1 to 1.3 in FIG. 16A, as a function expressing the transfer time.

A method of calculating a function is described here using a case where ID = 1.1 as an example. ID = 1.1 is a function expressing performance in a case where the transfer apparatuses from the transfer apparatus 20d (WO #4) to the transfer apparatus 20a (WO #1) perform the transfer processing using the UNAP. Because the number of links that are used in a wide area network is 1, the bottleneck link occurs in a link from the transfer apparatus 20d (WO #4) to the transfer apparatus 20a (WO #1). The throughput that results when data is transferred from the communication apparatus 10b to the communication apparatus 10a is throughput in a bottleneck link. Additionally, regardless of an amount of data that is transferred, a total value of processing delays due to the protocol conversion is a sum of the time that the transfer apparatus 20d takes to convert a protocol from the TCP to the UNAP, and the time that the transfer apparatus 20a takes to convert the protocol from the UNAP to the TCP. The calculation unit 61 reads from the processing delay table 73 (FIG. 13) the fact that the time that the transfer apparatus 20d (WO #4) takes to convert the protocol from the TCP to the UNAP is 2 ms. The calculation unit 61 calculates the processing delay when ID = 1.1, as 4 ms, from the fact that the time that the transfer apparatus 20a (WO #1) takes to convert the protocol from the UNAP to the TCP is also 2 ms. Moreover, a function for obtaining the transfer time on a path that is specified with a different ID is set to be obtained also in the same manner.

Next, as illustrated in a case C23 in FIGs. 17, the transfer apparatus 20a, the transfer apparatus 20b, and the transfer apparatus 20d perform the protocol conversion processing, but the transfer apparatus 20c is set not to perform the protocol conversion. In this case, a path that leads from the transfer apparatus 20d to the transfer apparatus 20a is treated as two sections, that is, a section between the transfer apparatus 20d (WO #4) and the transfer apparatus 20b (WO #2) and a section from the transfer apparatus 20b (WO #2) to the transfer apparatus 20a (WO #1). In this case, with the protocol that is used, the calculation unit 61 calculates 9 types that are illustrated by ID = 2.1 to 2.9 in FIG. 16B, as a function expressing the transfer time.

As illustrated in a case C22 in FIG. 17, the transfer apparatus 20a, the transfer apparatus 20c, and the transfer apparatus 20d perform the protocol conversion processing, but even if the transfer apparatus 20b does not perform the protocol conversion, the path that leads from the transfer apparatus 20a to the transfer apparatus 20d is treated as two sections. The sections in this case are a section between the transfer apparatus 20d (WO #4) and the transfer apparatus 20c (WO #3), and a section from the transfer apparatus 20c (WO #3) to the transfer apparatus 20a (WO #1). With the protocol that is used, the calculation unit 61 calculates 9 types that are illustrated by ID = 2.10 to 2.18 in FIG. 16C, as a function expressing the transfer time.

On the other hand, as illustrated in a case C21 in FIG. 17, in a case where all transfer apparatuses from the transfer apparatus 20a to the transfer apparatus 20d perform the protocol conversion processing, the path that leads from the transfer apparatus 20a to the transfer apparatus 20d is treated as 3 sections. The 3 sections are a section between the transfer apparatus 20d (WO #4) and the transfer apparatus 20c (WO #3), a section between the transfer apparatus 20c and the transfer apparatus 20b (WO #2), and a section between the transfer apparatus 20b and the transfer apparatus 20a (WO #1). According to the protocol that is used, the calculation unit 61 calculates functions of 27 types that are illustrated by ID = 3.1 to 3.27 in FIGs. 16D to 16G, as the transfer time.

Moreover, even in a case where the number of sections = 0 as a processing condition in a case where the protocol is not converted in any of the transfer apparatuses 20, the calculation unit 61 obtains a function expressing the transfer time. A function that is used in a case where the number of sections = 0 is indicated in ID = 0 in FIG. 16A.

The method of estimating the communication quality in the case where data is transferred from the communication apparatus 10b to the communication apparatus 10a is described referring to FIGs. 16A to 17, but the estimation of the communication quality that is to be applied when the data is transferred from the communication apparatus 10a to the communication apparatus 10b is also performed by the same processing.

3. Determination and Setting of a Conversion Pattern that is Applied to Communication

FIGs. 18A to 18C are sequence diagrams for describing an example of determination of a conversion pattern that is applied, which is performed at the time of the data transmission, and an example of setting of the conversion pattern that is applied. An example of processing that is performed when the conversion pattern is selected will be described below using a case where the communication apparatus 10a requests the communication apparatus 10b to transfer data, and the data is transferred from the communication apparatus 10b to the communication apparatus 10a, as an example. The communication apparatus 10a is set to acquire the data using a transfer application such as a wget. Moreover, according to packaging, modification is made such as performing setting in the downlink direction earlier than in the uplink direction. Furthermore, the management server 50 is set in such a manner that setting to any one of the transfer apparatuses 20a to 20d may be first performed.

In Step S31 in FIG. 18A, an application processing unit 14a of the communication apparatus 10a requests a transport protocol processing unit 13a to perform path setting between the communication apparatus 10a and the communication apparatus 10b. The transport protocol processing unit 13a is set to notify a distribution control unit 15a that an IP address that is set for a path is 150.20.19.29 and that a port number of a setting destination is 2003. Furthermore, the application processing unit 14a specifies a burst size from a type of an application that is used and notifies the distribution control unit 15a of the burst size. Here, the application processing unit 14 is set to predict that 500 bytes of data is transmitted as a command in the uplink direction and that approximately 10 Mbytes of data is transferred in the downlink direction. The distribution control unit 15a notifies the management server 50 that the communication with the communication apparatus 10b starts, and transmits an allocation request message in order to make a request for allocation of a protocol that is used in each transfer apparatus 20 on a communication path.

M11 in FIG. 19 is an example of an information element that is included in the allocation request message, and M12 is an example of an information element that is included in an allocation response message. The allocation response message will be described below (Step S45 in FIG. 18C). A message type, a size, information for specifying a section in which data communication is performed, and a burst size are included in the allocation request message. In an example in FIG. 19, the information for specifying the section in which the data communication is performed is a combination of an address of an apparatus that is a transmission source and a port number, in the data communication in the uplink (UL) direction, and an address of a destination and a port number, in the data communication in the downlink direction. Moreover, information in the downlink direction may be used as the information for specifying the section in which communication of data in the allocation request message is performed. The burst size includes at least one among a burst size of data that is transmitted in the uplink direction and a burst size of data that is transmitted in the downlink (DL) direction. Moreover, in the following description, communication from the communication apparatus 10a to the communication apparatus 10b is set to be communication in the uplink direction, and communication from the communication apparatus 10b toward the communication apparatus 10a is set to be communication in the downlink direction.

In Step S32, the selection unit 62 of the management server 50 acquires data in the allocation request message through the interface unit 51 or the communication processing unit 52. The communication processing unit 52 selects a combination of protocols with which the transfer time is shortest, for the communication path in the direction in which the burst size is included in the allocation request message, using the performance estimation table 75.

FIG. 20 illustrates an example of a relationship between the time that is taken for the data transfer and the burst size. In FIG. 20, in order to make the drawing easily visible, one portion of a function that is specified from information that is included in the performance estimation table 75 is expressed as a function of a burst size. A function E, a function F, and a function G are functions that are obtained in a case where the number of sections = 1, in a case where the number of sections = 2, and in a case where the number of sections = 3, respectively. The data transfer time $\Delta T$, as illustrated in Equation (2), is in direct proportion to a burst size D. This relationship of direct proportion is expressed by a straight line. Additionally, a straight-line section indicates a total value of the times that are taken for the protocol conversion processing. Therefore, as illustrated in FIG. 20, in the transfer of data that has a small burst size, an influence of the time that is taken for the protocol conversion is great. On the other hand, as the burst size becomes increased, the influence of the bottleneck link on the throughput becomes greater than the influence of the time that is taken for the protocol conversion. Accordingly, in the notified burst size, the selection unit 62 selects a combination of protocols with which the transfer time is most shortened.

For example, the selection unit 62 is set to select a combination of protocols that is used for transfer from among combinations of protocols that correspond to the functions E, F, and G. In this case, a two-dot chain line H indicates a value that represents the shortest estimated data transfer time among the functions E to G. According to the two-dot chain line H, the selection unit 62 predicts the time that is taken for the transfer of the data of the notified burst size. That is, in the communication in which the burst size is equal to or less than b1, the selection unit 62 selects processing of a wide area network as one section by selecting the function E. As indicated by an arrow in FIG. 20, in the communication in which the burst size is greater than b1 but is equal to or less than b2, the selection unit 62 selects the processing of the wide area network as two sections, using a combination of protocols that correspond to the function F. In the communication in which the burst size is greater than b2, the selection unit 62 selects the processing of the wide area network as three sections, using a combination of protocols that correspond to the function G. In other words, the selection unit 62 selects the protocol conversion pattern that may shorten the data transfer time, using an amount by which transfer time that is obtained by changing the protocol and thus increasing the throughput in the bottleneck link is shortened, and the time that is taken for the protocol conversion processing.

The selection unit 62 performs the processing as described referring to FIG. 20, using all pieces of data in the performance estimation table 75. That is, for the downlink direction, the selection unit 62 calculates the transfer time in the burst size in the downlink direction for every type of protocol that is used by the transfer apparatus 20, using all the functions in the performance estimation table 75 that is obtained for the downlink direction. Additionally, the selection unit 62 selects a combination of protocols with which the transfer time is shortest, as a target that is used for transfer. Furthermore, for the uplink direction, the selection unit 62 performs the same processing as well.

In a case where the allocation request message that is illustrated M11 in FIG. 19 is acquired, the selection unit 62 determines that the protocol conversion processing time that corresponds to a section on a plot in FIG. 20 may be ignored, because the burst size in the downlink direction is 10 Mbytes. Accordingly, the selection unit 62 selects a combination of protocols with which the throughput in the bottleneck link is maximized. Here, a combination corresponding to ID = 3.2 that is illustrated in FIG. 16D is set to be selected as a combination of protocols that is used for the communication in the downlink direction.

On the other hand, for the UL direction, because the burst size is 500 bytes, an influence that the protocol conversion processing time corresponding to a section on the plot in FIG. 20 has on the transfer time is set to be greater than an amount by which transfer time due to an improvement in the throughput is shortened. Accordingly, a protocol with which the time that is taken for conversion is short is selected as a protocol that is used in a section from the transfer apparatus 20a to the transfer apparatus 20d. In the following description, in the uplink direction, according to a combination corresponding to ID = 1.3 that is illustrated in FIG. 16A, the STCP is set to be used. The selection unit 62 outputs the selected result to the notification processing unit 54.

As illustrated in Step S33 in FIG. 18A, the notification processing unit 54 transmits a relay table registration message in order to request the transfer apparatus 20d performing the protocol conversion processing to set a protocol for the communication in the uplink direction.

M21 in FIG. 21 indicates an information element that is included in the relay table registration message (may be abbreviated as "relay table registration msg" in figures), and M22 indicates information that is included in a relay table registration response message (may be abbreviated as "relay table registration res msg" in figures). A message type, a size, the information element that specifies a packet that is a protocol conversion target, and contents of conversion processing are included in the relay table registration message. A transmission source address of, a transmission source port number of, a destination address of, a destination port number of, and a combination of protocols of a packet are designated as information that specifies a reception packet (a packet in the inbound direction) that is a protocol conversion target. Furthermore, a transmission source address, a transmission source port number, a destination address, and a destination port number that are set to be in a transmission packet (a packet in the outbound direction), and a protocol that is used after conversion are designated as contents of the conversion processing. For example, in a case where 500 bytes of data is transmitted in the uplink direction from the communication apparatus 10a toward the communication apparatus 10b, the transfer apparatus 20d converts a packet that is used by the STCP into a packet that is used by the TCP. In this case, pieces of information that specify packets that are protocol conversion targets in the transfer apparatus 20d are as follows.

Transmission source address: 150.80.65.98 (transfer apparatus 20a)

Transmission source port: 5004

Destination address: 160.10.1.5 (transfer apparatus 20d)

Destination port: 6001

Protocol: STCP. Additionally, the following pieces of information are designated as contents of the conversion processing that is performed in the transfer apparatus 20d.

Transmission source address: 133.150.114.56 (the communication apparatus 10a)

Transmission source port: 4008

Destination address: 150.20.19.29 (the communication apparatus 10b)

Destination port: 2003

Protocol: TCP

In Step S34 in FIG. 18A, a control unit 40d of the transfer apparatus 20d puts contents of the relay table registration message in a relay table 37d. The control unit 40d sets a port to be in a connection waiting state in such a manner that a packet may be received through a port designated as a destination port in the inbound direction. Next, the control unit 40d stores in a distribution unit 22d the fact that a packet transmitted from a port 5004 of the transfer apparatus 20a to a port 6001 of the transfer apparatus 20d is output to the protocol reception processing unit that processes the STCP. Additionally, the control unit 40d generates the relay table registration response message in order to notify the management server 50 of a result of putting the contents of the relay table registration message in the relay table 37d.

M22 in FIG. 21 indicates the information element that is included in the relay table registration response message. In addition to the information element that is included in the relay table registration message, a result code indicating whether or not the contents have been successfully put in the relay table 37 is included in the relay table registration response message. Result code = 1 indicates that the contents are successfully put in the relay table 37, and result code = 0 indicates that the contents have not been successfully put in the relay table 37. The control unit 40d notifies that the contents are successfully put in the relay table 37, by transmitting the relay table registration response message to the management server 50 (Step S35).

In Step S36, the management server 50 transmits the relay table registration message to the transfer apparatus 20a as well in order to make a request for setting of a protocol for the communication in the uplink direction. Furthermore, the transfer apparatus 20a also performs the same processing as the transfer apparatus 20d.

In Step S37, the management server 50 transmits the control message including information for setting a distribution table 17a to the communication apparatus 10a in order to set a transfer destination of a packet that is destined for the communication apparatus 10b to be in the transfer apparatus 20a (WO #1). Information for setting the distribution table 17 is the same as the information element that is included in the relay table registration message. The distribution control unit 15a of the communication apparatus 10a performs setting of the distribution table 17a using the control message (Step S38). Additionally, the distribution control unit 15a transmits a response message that expresses a result of the putting in the distribution table 17a to the management server 50 (Step S39). Moreover, the information element in the response message is the same information element that is included in the relay table registration response message.

When setting of a path in the uplink direction is ended, the management server 50 performs setting processing in the downlink direction as well. The management server 50 transmits the relay table registration message to the transfer apparatuses 20a to 20d, and each transfer apparatus 20 updates the relay table 37 according to the relay table registration message (Step S40 to S43). Additionally, the management server 50 performs processing for transferring a packet that is destined for the communication apparatus 10a, to the transfer apparatus 20d, by performing the setting processing of a distribution table 17b on the communication apparatus 10b as well in the same manner as on the communication apparatus 10a (Step S44).

When receiving the relay table registration response message from an apparatus that is a setting target, the notification processing unit 54 of the management server 50 transmits an allocation response message to a terminal (Step S45 in FIG. 18C). A message type, a size, information for specifying a section in which the data communication is performed, and a result code are included in the allocation response message (M12 in FIG. 19). The result code is the same as the result code in the relay table registration response message.

Thereafter, as illustrated in Step S46, a three-way handshake between the communication apparatus 10a and the communication apparatus 10b is performed. After the three-way handshake between the communication apparatus 10a and the communication apparatus 10b, data is transferred between the communication apparatus 10a and the communication apparatus 10b according to the relay table 37 in each transfer apparatus 20 (Step S47). Processing operations that are performed in Steps S46 and S47 in FIG. 18C are described in detail referring to FIG. 22.

4. Transfer Processing of Data

FIG. 22 is a diagram for describing an example of data transfer. In FIG. 22, an example of the distribution table 17a that is retained by the communication apparatus 10a and an example of the relay table 37 that is retained by each transfer apparatus 20 are also illustrated in combination. Moreover, in FIG. 22, in order to make the drawing easily visible, the relay table 37 is described as being divided into a table including data that is used in the uplink direction and a table including data that is used in the downlink direction, but these may be included in one table.

In the three-way handshake, the transport protocol processing unit 13a of the communication apparatus 10a outputs a SYN packet to an IP processing unit 12a in order to generate a TCP session between the communication apparatus 10a and the communication apparatus 10b. The IP processing unit 12a adds an IP header to the SYN packet, and then outputs the resulting SYN packet to the transfer destination setting unit 16a. The transfer destination setting unit 16a searches the distribution table 17a for a combination of a destination IP address of a packet and a port number as keywords. The transfer destination setting unit 16a specifies that entries in a distribution table 17a including destination addresses of a packet are updated with pieces of information such as destination addresses as follows.

Transmission source address: 133.150.114.56 (communication apparatus 10a)

Transmission source port: 4008

Destination address: 150.80.65.98 (transfer apparatus 20a)

Destination port: 5002

The transfer destination setting unit 16a performs setting in such a manner that a packet reaches WO #1, by re-writing a header of a packet according to the distribution table 17a. Additionally, the transfer destination setting unit 16a suitably uses a routing table as well and thus rewrites a MAC header as well. As illustrated by arrow A1 in FIG. 22, the transfer destination setting unit 16a transmits the generated packet through an interface unit 11a.

In FIG. 22, the distribution unit 22a of the transfer apparatus 20a acquiring a reception packet is indicated by the arrow A1. The distribution unit 22a outputs the reception packet to the protocol reception processing unit that processes a TCP packet, according to the setting that is performed by the control unit 40a when the relay table registration message is received. The reception packet is processed in a processing unit that processes a TCP protocol. The SYN packet from the communication apparatus 10a is terminated in the transfer apparatus 20a. Data in the reception packet is output to the proxy processing unit 35a, along with header information or a type of protocol.

The proxy processing unit 35a determines processing of the data that is input, using header information and a relay table 37a-u. In the relay table 37a-u, it is stated that a packet that is transmitted from a No. 4008 port of the communication apparatus 10a and is destined for a No. 5002 port of the transfer apparatus 20a is converted into a packet that is transmitted from a No. 5004 port of the transfer apparatus 20a that is destined for a No. 6001 port of the transfer apparatus 20d. Additionally, in the relay table 37a-u, it is also stated that a protocol that is used for transmission is an STCP. Accordingly, the proxy processing unit 35a outputs data to the distribution unit 26a, along with address information and port information that are used for a post-conversion packet and with a type of protocol.

The distribution unit 26a performs output to the protocol transmission processing unit that performs processing which uses a protocol that is designated in the proxy processing unit 35a. The distribution unit 26a further adds the IP header that is generated using information that is notified from the proxy processing unit 35a, to data of which processing is finished in the protocol transmission processing unit. The distribution unit 26a outputs the generated packet to a transfer destination setting unit 38a. The transfer destination setting unit 38a sets information on the transfer destination by searching the routing table for the destination address of a packet that is input, as a keyword. The distribution unit 26a transmits a post-processing packet to the transfer apparatus 20d through the interface unit 21a (an arrow A2). Moreover, at this time, the control unit 40a is suitably set to establish an STCP communication session between the transfer apparatus 20a and the transfer apparatus 20d.

In FIG. 22, the distribution unit 22d of the transfer apparatus 20d acquiring the reception packet is indicated by the arrow A2. According to setting that is based on the relay table registration message, the distribution unit 22d outputs the reception packet to the protocol reception processing unit that processes an STCP packet. Accordingly, the STCP packet from the transfer apparatus 20a is terminated in the transfer apparatus 20d. The data in the reception packet is output to a proxy processing unit 35d, along with header information and a type of protocol.

In the relay table 37d-u, it is stated, for recording, that a packet that is transmitted from a No. 5004 port of the transfer apparatus 20a and that is destined for a No. 6001 port of the transfer apparatus 20d is converted into a TCP packet that is transmitted from a No. 4008 port of the communication apparatus 10a that is destined for a No. 2003 port of the communication apparatus 10b. Accordingly, the proxy processing unit 35d requests a distribution unit 26d to set data to be a TCP packet that is destined for a No. 2003 port of the communication apparatus 10b, using the relay table 37d-u. In the distribution unit 26d and a transfer destination setting unit 38d, processing that is the same as the processing by the transfer apparatus 20a, which is illustrated referring to the arrow A2, is performed. As a result, a packet that is destined for the No. 2003 port of the communication apparatus 10b including the data in the SYN packet generated in the communication apparatus 10a is transmitted to the communication apparatus 10b (an arrow A3).

In a transport protocol processing unit 13b of the communication apparatus 10b, a SYN/ACK packet that is destined for the communication apparatus 10a is set to be generated, by processing the SYN packet. The transfer destination setting unit 16b transmits a packet including the following pieces of information, by re-writing the SYN/ACK packet that is destined for the communication apparatus 10a according to the distribution table 17b.

Transmission source address: 150.20.19.29 (the communication apparatus 10b)

Transmission source port: 2003

Destination address: 160.10.1.5 (the transfer apparatus 20d)

Destination port: 2100

By an arrow A4, the distribution unit 22d of the transfer apparatus 20d is meant to acquire the reception packet. According to the setting that is based on the relay table registration message, the distribution unit 22d outputs the reception packet in the downlink direction to the protocol reception processing unit that processes the TCP packet. Accordingly, the TCP packet from the communication apparatus 10b is terminated in the transfer apparatus 20d. The data in the reception packet is output to the proxy processing unit 35d, along with header information and a type of protocol.

In the relay table 37d-d, it is stated, for recording, that a packet that is transmitted from the No. 2003 port of the communication apparatus 10b and that is destined for a No. 2100 port of the transfer apparatus 20d is converted into a packet that is transmitted from a No. 2300 port of the transfer apparatus 20d and that is destined for a No. 5001 port of the transfer apparatus 20c. Furthermore, in the relay table 37d-d, it is also stated, for recording, that a UNAP is used for the transfer processing. Accordingly, the proxy processing unit 35d requests the distribution unit 26d to set data to be a UNAP packet that is destined for the No. 5001 port of the transfer apparatus 20c, using the relay table 37d-d. In the distribution unit 26d and the transfer destination setting unit 38d, the processing that is the same as the processing by the transfer apparatus 20a, which is described referring to the arrow A2, is performed. As a result, a packet including data in the SYN/ACK packet generated in the communication apparatus 10b is transmitted to a destination that is the No. 5001 port of the transfer apparatus 20c (an arrow A5).

By the arrow A5, a distribution unit 22c of the transfer apparatus 20c is meant to output the reception packet to the protocol reception processing unit that processes the UNAP packet, according to the setting that is based on the relay table registration message. The data in the reception packet is output to a proxy processing unit 35c, along with header information and a type of protocol.

In a relay table 37c, it is stated, for recording, that the packet that is transmitted from the No. 2300 port of the transfer apparatus 20d and that is destined for the No. 5001 port of the transfer apparatus 20c is converted into a packet that is transmitted from a No. 3001 port of the transfer apparatus 20c and that is destined for a No. 5400 port of the transfer apparatus 20b. Furthermore, in the relay table 37c, it is also stated, for recording, that the UNAP is used for the transmission processing. Accordingly, a proxy processing unit 35c requests a distribution unit 26c to set data to be a UNAP packet that is destined for the No. 5400 port of the transfer apparatus 20b. In the distribution unit 26c and a transfer destination setting unit 38c, because processing that is the same as the processing by the transfer apparatus 20a, which is described referring to the arrow A2, is performed, the packet that is destined for the No. 5400 port of the transfer apparatus 20b is transmitted (an arrow A6).

By the arrow A6, the distribution unit 22b of the transfer apparatus 20b is meant to output the reception packet to the protocol reception processing unit that processes the UNAP packet, according to the setting that is based on the relay table registration message. The data in the reception packet is output to the proxy processing unit 35b, along with header information and a type of protocol.

In a relay table 37b, it is stated, for recording, that a packet that is transmitted from the No. 3001 port of the transfer apparatus 20c and that is destined for the No. 5400 port of the transfer apparatus 20b is converted into an RPS packet that is transmitted from a No. 4005 port of the transfer apparatus 20b and that is destined for a No. 6100 port of the transfer apparatus 20a. Accordingly, a proxy processing unit 35b requests a distribution unit 26b to set data to be the RPS packet that is destined for the No. 4005 port of the transfer apparatus 20a. In the distribution unit 26b and a transfer destination setting unit 38b, because the processing that is the same as the processing by the transfer apparatus 20a, which is described referring to the arrow A2, is performed, the RPS packet that is destined for the No. 4005 port of the transfer apparatus 20a is transmitted (an arrow A7).

By the arrow A7, the distribution unit 22a of the transfer apparatus 20a is meant to output the reception packet to the protocol reception processing unit that processes the RPS packet, according to the setting that is based on the relay table registration message. The data in the reception packet is output to the proxy processing unit 35a, along with header information or a type of protocol.

In a relay table 37a-d, it is stated, for recording, that a packet that is transmitted from the No. 4005 port of the transfer apparatus 20b and that is destined for the No. 6100 port of the transfer apparatus 20a is converted into a TCP packet that is transmitted from the No. 2003 port of the communication apparatus 10b that is destined for the No. 4008 port of the communication apparatus 10a. Accordingly, the proxy processing unit 35a requests the distribution unit 26a to include data in the TCP packet that is destined for the No. 4008 port of the communication apparatus 10a. In the distribution unit 26a and the transfer destination setting unit 38a, the processing that is the same as the processing by the transfer apparatus 20a, which is described referring to the arrow A2, is performed. Accordingly, the data in the SYN/ACK packet transmitted by the communication apparatus 10b to the communication apparatus 10a is transmitted as a TCP packet that is destined for the No. 4008 port of the communication apparatus 10a (an arrow A8).

In the communication apparatus 10a, the SYN/ACK packet that is transmitted by the communication apparatus 10b to the communication apparatus 10a is processed. Additionally, the communication apparatus 10a transmits an ACK packet to the communication apparatus 10b, and thus the three-way handshake is performed. Moreover, the ACK packet transmitted from the communication apparatus 10a to the communication apparatus 10b is processed in the same manner as the SYN packet transmitted from the communication apparatus 10a to the communication apparatus 10b. Additionally, when it comes to a packet that is used for the data transfer, a packet from the communication apparatus 10a to the communication apparatus 10b is also processed in the same manner as the SYN packet transmitted from the communication apparatus 10a to the communication apparatus 10b. On the other hand, a packet from the communication apparatus 10b to the communication apparatus 10a is processed in the same manner as the SYN/ACK packet from the communication apparatus 10b to the communication apparatus 10a. Accordingly, with a combination of protocols in accordance with a burst size of data that is transferred, the transfer processing is performed between the communication apparatus 10a and the communication apparatus 10b.

FIG. 23 is a flowchart for describing an example of processing by the management server 50. Moreover, FIG. 23 is one example of processing. According to packaging, for example, a procedure for processing may be changed such as when setting of the path in the downlink direction is performed before a path in the uplink direction. Furthermore, Steps S54 and S55 may be reversed in order, and Steps S60 and S61 may be reversed in order as well. Moreover, in a case where Steps S55 and 54 are reversed in order, Step S57 and later return to Step S55. In the same manner, in a case where Steps S60 and S61 are reversed in order, Step S63 and later return to Step S61.

The selection unit 62 waits until it receives the allocation request message (No in Step S51). When receiving the allocation request message, the selection unit 62 determines whether a burst size (a UL burst size) of data that is transmitted in the uplink direction is notified (Yes in Step S51, and Step S52). When a UL burst size is notified, the selection unit 62 specifies a combination of protocols with which data with the UL burst size is transferred in the shortest time, using the performance estimation table 75 (Yes in Step S52, and Step S53). In a case where the specified combination of protocols is used, the notification processing unit 54 transmits the relay table registration message to each of the transfer apparatuses 20 that terminate the protocol (Step S54). Additionally, the notification processing unit 54 notifies the communication apparatus 10, which is a transmission source in the communication in the uplink direction, of a transfer destination of data packet, by transmitting a control message that is used for setting of the distribution table 17 (Step S55). The notification processing unit 54 determines whether or not the setting of the path in the uplink direction is successful, using the response message received from the transfer apparatus 20 or the communication apparatus 10 (Step S56). In a case where the setting of the path in the uplink direction is not successful, the selection unit 62 changes the transfer apparatus 20 that is used for the transfer processing, and a combination of protocols that is used between the transfer apparatuses 20 (No in Step S56, and Step S57). Thereafter, processing operations in Step S54 and later are performed.

When the setting of the path in the uplink direction is successful, the selection unit 62 determines whether or not the burst size (DL burst size) of data that is transmitted in the downlink direction is notified (Yes in Step S56, and Step S58). When the DL burst size is notified, the setting of a transfer path for data that is transmitted in the downlink direction is also performed by the same processing as a transfer path for data in the uplink direction (Yes in Step S58, and Steps S59 to S63).

When the transfer path is set for the direction in which the burst size is notified, the management server 50 transmits the allocation response message to a transmission source of the allocation request message (Step S64). Moreover, in a case where the UL burst size is not notified by the allocation request message, processing operations in Steps S53 to S57 are not performed (No in Step S52). In the same manner, in a case where the DL burst size is not notified by the allocation request message, processing operations in Steps S59 to S63 are not performed (No in Step S58).

FIG. 24 is a diagram for describing an example of an effect that is obtained according to the first embodiment. Cases C31 and C32 are examples of the transfer processing in a case where the first embodiment is applied, and a case C33 is an example of the transfer processing in a case where the first embodiment is not used. The case C31 is for transfer processing in a case where a burst size of data that is transferred from the communication apparatus 10b to the communication apparatus 10a is comparatively large. On the other hand, the cases C32 and C33 illustrate transfer processing in a case where the burst size of the data that is transferred from the communication apparatus 10b to the communication apparatus 10a is comparatively small. In any of the cases C31 to C33, a network N1 is set to have good throughput when using a protocol B, a network N2 is set to have good throughput when using a protocol A, and a network N3 is set to have good throughput when using a protocol C.

As illustrated in the case C31, in a case where the burst size of the data that is transmitted is large, the selection unit 62 terminates all protocols of the transfer apparatuses 20a to 20d and determines that a good protocol having good throughput in each network is used. In this case, the transfer time on a path from the communication apparatus 10b to the transfer apparatus 20d is set to be t21. Furthermore, a transfer time t22 for transfer from the transfer apparatus 20d to the transfer apparatus 20c is greater than a time delay #4 that is taken for processing relating to protocol termination in the transfer apparatus 20d, and a delay due to the protocol conversion may be ignored when compared with the time that is taken for the transfer processing. An influence of a processing time delay #3 in the transfer apparatus 20c when compared with a transfer time t23 for transfer from the transfer apparatus 20c to the transfer apparatus 20b, and an influence of a processing time delay #2 in the transfer apparatus 20b when compared with a transfer time t24 for transfer from the transfer apparatus 20b to the transfer apparatus 20a may also be ignored. In the same manner, an influence of a processing time delay #1 when compared with a transfer time t25 for transfer from the transfer apparatus 20a to the communication apparatus 10a may also be ignored. That is, the transfer time for transfer from the communication apparatus 10b to the communication apparatus 10a is $\Delta T1$, and an influence of a total value of the processing time of a protocol in each transfer apparatus 20 is comparatively small.

On the other hand, in the case C32, the selection unit 62 determines that protocol termination is not performed in the transfer apparatus 20b and the transfer apparatus 20c as one section from the transfer apparatus 20a to the transfer apparatus 20d. In this case, the transfer time on the path from the communication apparatus 10b to the transfer apparatus 20d is set to be t11. A transfer time t12 for transfer from the transfer apparatus 20d to the transfer apparatus 20a is not sufficiently great when compared with the time delay #4 that is taken for the processing relating to the protocol termination in the transfer apparatus 20d, and it is not possible to ignore the delay due to the protocol conversion when compared with the time that is taken for the transfer processing. In the same manner, it is also not possible to ignore the influence of the processing time delay #1 when compared with transfer time t13 for transfer from the transfer apparatus 20a to the communication apparatus 10a. In this manner, because it is not possible to ignore an influence of a total value of the processing time of a protocol, for a transfer time $\Delta T2$ for transfer from the communication apparatus 10b to the communication apparatus 10a, a combination with which there is as little as possible the protocol conversion processing is selected by the selection unit 62.

The case C33 illustrates an example of the time that is taken in a case where the same data as with the case C32 is transferred, the same combination of protocols as in the case C31 is used, as a target for comparison with the case C32. In the case C33, the transfer time on the path from the communication apparatus 10b to the transfer apparatus 20d is set to be t1. Furthermore, an influence of a time delay #4 that is taken for processing relating to protocol termination in the transfer apparatus 20d is greater than that of a transfer time t2 for transfer from the transfer apparatus 20d to the transfer apparatus 20c, and a delay due to the protocol conversion makes up most of the time that is taken for the transfer processing. In the same manner, it is not possible to ignore the influence of the processing time delay #3 in the transfer apparatus 20c when compared with a transfer time t3 for the transfer from the transfer apparatus 20c to the transfer apparatus 20b, and the influence of the processing time delay #2 in the transfer apparatus 20b when compared with a transfer time t4 for the transfer from the transfer apparatus 20b to the transfer apparatus 20a. Additionally, it is also not possible to ignore the influence of the processing time delay #1 in the transfer apparatus 20a when compared with a transfer time t5 for the transfer from the transfer apparatus 20a to the communication apparatus 10a.

In the case C32 that uses the first embodiment, the data transfer is performed for ΔT2. In contrast, when the first embodiment is not used as in the case C33, a time, which is expressed by ΔT3, is taken for transferring data.

FIG. 25 is a diagram for describing an example of an effect that is obtained according to the first embodiment. The effect that is obtained according to the first embodiment is described referring to FIG. 25, using a specific example of the throughput or of the processing time in the transfer apparatus 20. A case C41 illustrates a case where a protocol is determined in such a manner that the throughput is maximized for every network that is positioned between the transfer apparatuses 20. In the case C41, all RTTs between the transfer apparatuses 20 are set to 70 ms, and a delay that results from the protocol processing that is performed in each of the transfer apparatuses 20a to 20d is set to 3 ms. When the throughput in the bottleneck link in the case C41 is set to 900 Mbps, the time that is takes for the data transfer of 64 Kbytes in the case C41 is obtained according to Equation (2) as follows.

$$\Delta T = D/B + PT = 64000 \times 8/(900 \text{ x}10\text{\^{}}6\text{x}8) + 3 \times 4 \cong 12 \text{ ms}$$

On the other hand, the case C42 illustrates an example of a case where a combination of protocols that is selected in the management server 50 according to the first embodiment is used for the transfer processing. In the case C42, the transfer apparatus 20a and the transfer apparatus 20d perform protocol termination processing, but the transfer apparatuses 20b and 20c are set not to perform the protocol termination or the protocol conversion. Furthermore, the throughput in the bottleneck link in the case C42 is set to 400 Mbps. In this case, the time that is taken for the transfer of 64 Kbytes of data is obtained according to Equation (2) as follows.

$$\Delta T = D/B + PT = 64000 \times 8/(400 \text{ x}10\text{\^{}}6\text{x}8) + 3 \times 2 \cong 6 \text{ ms}$$

In an example in FIG. 25, the throughput in the bottleneck in the case C42 is half or less of the throughput in the bottleneck in the case C41. However, in order for the management server 50 to select a suitable protocol conversion pattern, in the case C41, data transfer processing is ended in half the time in the case C42.

In this manner, according to the first embodiment, an optimal protocol conversion pattern is selected with focus on a difference between the extent of the influence of the throughput in the bottleneck link and the extent of the influence of the delay due to the protocol conversion processing, which results from the burst size of the data. Accordingly, a protocol is selected in such a manner that the transfer processing is performed, in the shortest time, on any one of the data with a large burst size and the data with a small burst size. Therefore, by applying the first embodiment, efficient transfer processing in accordance with an amount of transfer data is performed.

Second Embodiment

According to a second embodiment, an example of a system such as a transparent proxy is described in which an apparatus that determines a transfer destination using an address of a final destination of and a destination port of a packet is used.

FIG. 26 is a diagram illustrating an example of a configuration of a transfer apparatus 90 according to the second embodiment. The transfer apparatus 90 includes a filter unit 91, a filter table 92, a relay processing unit 93, interface units 94 and 95, distribution units 22 and 26, protocol reception processing units 23 to 25, and protocol transmission processing units 27 to 29. Additionally, the transfer apparatus 90 includes the test packet output unit 31, the processing delay calculation unit 32, the measurement packet processing unit 33, the measurement packet generation unit 34, the proxy processing unit 35, the relay table 37, and the transfer destination setting unit 38 as well. Furthermore, the proxy processing unit 35 has a burst size measurement unit 36. Processing operations by the distribution units 22 and 26, the protocol reception processing units 23 to 25, the protocol transmission processing units 27 to 29, the test packet output unit 31, the processing delay calculation unit 32, the measurement packet processing unit 33, and the measurement packet generation unit 34 are the same as those according to the first embodiment. Furthermore, an information element in the relay table 37 or processing that is performed in the transfer destination setting unit 38 is the same as the information element in the relay table 37 or the processing that is performed in the transfer destination setting unit 38 according to the first embodiment. Moreover, a hardware configuration of the transfer apparatus 90 is also as illustrated in FIG. 6. The burst size measurement unit 36, the filter unit 91, and the relay processing unit 93 are realized by the processor 81, and the interface units 94 and 95 are realized by the NIC 87. Furthermore, the filter table 92 is stored in the memory 82.

The filter unit 91 determines whether or not the reception packet is a target for the processing in the proxy processing unit 35, using the filter table 92 and the relay table 37. Moreover, information for specifying a packet that includes data, a transfer path for which is determined by the management server 50, is stored in the filter table 92. The packet that is output from the filter unit 91 to the distribution unit 22 is processed in the same manner as is the case according to the first embodiment. The filter unit 91 outputs a packet that is not a target for the processing in the proxy processing unit 35, to the relay processing unit 93. The relay processing unit 93 outputs the packet, which is input from the filter unit 91, to the transfer destination setting unit 38. The burst size measurement unit 36 obtains a burst size of the data that is transmitted and received between a communication apparatus that is a transmission source and a communication apparatus 10b that is a destination. Here, the burst size is set to indicate a total amount of data that is transmitted at intervals of less than RTO. The burst size measurement unit 36 stores the burst size in a state where the burst size is associated with information that may be used for specifying a connection through which data is transmitted and received.

FIGs. 27A to 27C are sequence diagrams for describing an example of the data transfer. As an example, a case where the transfer apparatuses 90a to 90d relay communication between the communication apparatus 10a and the communication apparatus 10b is described referring to FIGs. 27A to 27C. Moreover, in the following description, either one of the communication apparatuses 10a and 10b may not include the distribution control unit 15, the transfer destination setting unit 16, and the distribution table 17.

In Step S71, the notification processing unit 54 in the management server 50 performs filter registration processing between each of the transfer apparatuses 90a to 90d. In the filter registration processing, first, the notification processing unit 54 transmits a filter registration message in order to notify the transfer apparatuses 90a to 90d of a combination of a destination and a transmission source that is put in the path management table 71.

M31 in FIG. 28 is an example of an information element that is included in the filter registration message (may be abbreviated as "filter registration msg" in figures), and M32 is an example of an information element that is included in a filter registration response message (may be abbreviated as "filter registration res msg" in figures). A message type, a size, and information identifying a packet that is a target for the transfer processing in the transfer apparatus 90 are included in the filter registration message. The pieces of information identifying the packet that is a target for the transfer processing in the transfer apparatus 90 are addresses of a transmission source and a destination and a port number. The filter registration response message (M32) also includes the same information as the filter registration message, but is different in a message type value from the filter registration message. Here, the management server 50 is set to transmit the filter registration message that includes the following information, to the transfer apparatuses 90a to 90d.

Transmission source address 1: any

Transmission source port number 1: any

Destination address 1: 150.20.19.0

Destination port number 1: any

Transmission source address 2: any

Transmission source port number 2: any

Destination address 2: 133.150.114.0

Destination port number 2: any

Moreover, port number = any indicates that a port number is arbitrary. In the same manner, address = any indicates that an address is arbitrary.

When acquiring the filter registration message through an interface unit 94a, a filter unit 91a of a transfer apparatus 90a puts information that is included in the filter registration message, in a filter table 92a. When registration processing is ended, the filter unit 91a transmits the filter registration response message to the management server 50.

FIG. 29 is an example of the filter table 92a that results when the filter unit 91a puts the information, which is included in the filter registration message, in the filter table 92a. Because when receiving the filter registration message, transfer apparatuses 90b to 90d perform the same processing as the transfer apparatus 90a, filter tables 92b to 92d are also set as illustrated in FIG. 29.

In Step S72, the transport protocol processing unit 13a of the communication apparatus 10a generates a SYN packet that is destined for the No. 2003 port of the communication apparatus 10b, in order to generate a TCP session. The IP processing unit 12 adds an IP header that is set to destination address = 150.20.19.29 (the communication apparatus 10b), to the SYN packet. Additionally, the IP processing unit 12 specifies that a subsequent hop router for a destination address is the transfer apparatus 90a, using the routing table. The IP processing unit 12a transmits a MAC address of a transfer apparatus 90a as a MAC address of a destination of the SYN packet.

When receiving the SYN packet through an interface unit 94a, a filter unit 91a of the transfer apparatus 90a determines that the reception packet satisfies a condition of a filter table 92a. The filter unit 91a determines whether or not an entry for a received communication session is included in the relay table 37a. Here, an entry relating to the communication between the communication apparatus 10a and the communication apparatus 10b is set not to be included in the relay table 37a. When this is done, the filter unit 91a puts the transfer of the reception data on hold and requests the control unit 40a to transmit an allocation request message (MlI in FIG. 19) to the management server 50.

When requested to transmit the allocation request message, the control unit 40a makes a request to a burst size measurement unit 36a for an average value of the burst size of the data that is transmitted and received through a connection that is a processing target (Step S73). At this stage, the connection is not established, and the burst size is not measured. The burst size measurement unit 36a pre-sets in advance an average burst size of an application that may be specified from a port number, and notifies the control unit 40a of a value that is stored, in response to the request for the average value. Moreover, the burst size measurement unit 36a may cache the average burst size in the communication that was performed with the same communication bus in the past, and may notify the control unit 40a of a cached value.

The control unit 40a generates the allocation request message including a destination address of and a destination port number of the SYN packet, and a burst size notified from the burst size measurement unit 36a. Moreover, here, the burst size in the uplink direction is set to be included in the allocation request message, but the burst size in the downlink direction is set not to be included. The control unit 40a transmits the allocation request message to the management server 50 through an interface unit 95a (Step S74).

The management server 50 receives the allocation request message. When receiving the allocation request message, the selection unit 62 determines optimal protocol allocation sections and a protocol that is allocated to each of the sections, using the burst size designated in a message and the performance estimation table 75 (Step S75). Moreover, processing that is performed in Step S75 is the same as the processing that is described referring to FIGs. 18A to 18B and 20 according to the first embodiment.

In Step S76, when determining a combination of protocols that is determined for the uplink direction, the management server 50 performs the setting processing on the transfer apparatuses 90a to 90d, using the relay table registration message. The notification to the transfer apparatus 90 that terminates the protocol and the setting processing of the relay table 37 in the transfer apparatus 90 are the same as the notification and the setting processing in Step S33 to S36, which are described referring to FIG. 18A. Also in an example in FIG. 27A, for the uplink direction, the transfer apparatus 90a and the transfer apparatus 90d performs the protocol termination, but because the protocol is not terminated in the transfer apparatus 90b and the transfer apparatus 90c, the transfer processing in one section is performed.

According to a second embodiment, the management server 50 transmits the relay table registration message also to the transfer apparatus 90 that does not perform the protocol termination processing. The notification processing unit 54 sets reception message information and transmission message information as the same information in the transfer apparatus 90 that does not perform the protocol termination processing. For example, the following pieces of information are included in the relay table registration message that is transmitted to the transfer apparatus 90b.

Information in the inbound direction

Transmission source address: 150.80.65.98 (transfer apparatus 20a)

Transmission source port: 5004

Destination address: 150.20.19.29 (the communication apparatus 10b)

Destination port: 2003

Protocol: STCP

Information in the outbound direction

Transmission source address: 150.80.65.98 (the transfer apparatus 20a)

Transmission source port: 5004

Destination address: 150.20.19.29 (the communication apparatus 10b)

Destination port: 2003

Protocol: STCP

Accordingly, in the relay table 37 that is retained by the transfer apparatus 90b and the transfer apparatus 90c, the reception message information and the transmission message information in the uplink direction are set to the same value.

FIG. 30 illustrates an example of the relay table 37 that is retained by the transfer apparatuses 90a to 90d. In processing in Step S76, information in the uplink direction, in the relay table 37, which is retained by the transfer apparatus 90a, is set as illustrated in a relay table 37a-1. On the other hand, the transfer apparatus 90b, the transfer apparatus 90c, and the transfer apparatus 90d retain a relay table 37b-1, a relay table 37c-1, and a relay table 37d-1, respectively, as pieces of information in the uplink direction.

When the setting of a path that is used in the uplink direction is ended, the notification processing unit 54 transmits the allocation response message toward the transfer apparatus 90a (Step S77 in FIG. 27B).

In Step S78 in FIG. 27B, the filter unit 91a of the transfer apparatus 90a outputs the SYN packet that is put on hold, to the distribution unit 22a, along with information indicating the presence of the control packet being used in the three-way handshake. Because the control packet that is used in the three-way handshake is input, the distribution unit 22a outputs a payload in the packet that is input, to the proxy processing unit 35a. At this time, the distribution unit 22a is set to notify the proxy processing unit 35a of information in an IP header of the control packet.

The proxy processing unit 35a searches the relay table 37a-1, using address information notified from the distribution unit 22a and port information in the payload. As a result, the proxy processing unit 35a specifies that a protocol that is used for transmission of the data that is input is an STCP. The proxy processing unit 35a outputs the data that is input, to the distribution unit 26a, along with the specified information. The distribution unit 26a generates a transmission packet by outputting data to the protocol transmission processing unit that processes the protocol that is designated by the proxy processing unit 35a. Moreover, the destination address of and the destination port of the transmission packet are set to be the No. 2003 port of the communication apparatus 10b in the same manner as with the SYN packet received by the transfer apparatus 90a, but the transmission source is changed to the No. 5004 port of the transfer apparatus 90a. Thereafter, through the transfer destination setting unit 38a, the packet that goes through the protocol conversion is transmitted toward the communication apparatus 10b.

In Step S79, the transfer apparatus 90b receives the packet that is transferred by the transfer apparatus 90a toward the communication apparatus 10b. Because the destination of the received packet is the No. 2003 port of the communication apparatus 10b, the filter unit 91b of the transfer apparatus 90b determines that a condition for the second entry in the filter table 92b (FIG. 29) is satisfied. Additionally, the filter unit 91b determines whether or not the condition that is applied to the reception packet is included in the relay table 37b. A condition that is applied to a packet with the STCP, which is destined for the No. 2003 port of the communication apparatus 10b from the No. 5004 port of the transfer apparatus 90a, is present, but the filter unit 91b specifies that the reception session and the transmission session are consistent with each other, using the relay table 37b-1 (FIG. 30). The filter unit 91b determines that in the relay table 37b, the packet that has reception session information and transmission session information that are consistent with each other is not a target for the processing by the proxy processing unit 35b. Accordingly, the filter unit 91b outputs the reception packet to the relay processing unit 93b. The packet that is input into the relay processing unit 93b is transferred toward the communication apparatus 10b through the transfer destination setting unit 38b and an interface unit 95b. The protocol or address information of, and the port number of the packet that is transferred to the communication apparatus 10b, and the like are not changed after Step S78.

In Step S80, the transfer apparatus 90c performs the same processing as the transfer apparatus 90b in Step S79. The packet with the STCP, which is destined for the No. 2003 port of the communication apparatus 10b from the No. 5004 port of the transfer apparatus 90a is transferred from the transfer apparatus 90c toward the communication apparatus 10b.

In Step S81, the filter unit 91d of the transfer apparatus 90d receives the packet that is destined for the No. 2003 port of the communication apparatus 10b from the No. 5004 port of the communication apparatus 10a. When determining that the reception packet satisfies a condition of the filter unit 91d, the filter unit 91d refers to the relay table 37d-1. Because the entry that is applicable to the reception packet is present in the relay table 37d-1, and the reception session information and the transmission session information are different from each other in the applicable entry, the filter unit 91d determines that the reception packet is a target for the processing in the proxy processing unit 35d. The filter unit 91d outputs the reception packet to the distribution unit 22d. Because the STCP is used in the reception packet, the distribution unit 22d outputs the reception packet to the protocol transmission processing unit that corresponds to the STCP. Thereafter, the distribution unit 22d outputs a payload of the reception packet and address information in the header to the proxy processing unit 35d. The proxy processing unit 35d requests the distribution unit 26d to include the data that is input, in the header including pieces of information, based on the relay table 37d-1.

Destination address: 150.20.19.29 (the communication apparatus 10b)

Destination port number: 2003

Transmission source address: 133.150.114.56 (the communication apparatus 10a)

Transmission source port number: 4008

The SYN packet that is transmitted from the communication apparatus 10a and that is destined for the communication apparatus 10b is transmitted to the communication apparatus 10b in the processing operations in the distribution unit 26d, the transfer destination setting unit 38d, and the like.

In Step S82, when receiving the SYN packet, the communication apparatus 10b transmits a SYN/ACK packet. Address information and port number information that are included in the SYN/ACK packet are as follows.

Destination address: 133.150.114.56 (the communication apparatus 10a)

Destination port number: 4008

Transmission source address: 150.20.19.29 (the communication apparatus 10b)

Transmission source port number: 2003

An IP processing unit 12b of the communication apparatus 10b sets a destination MAC address in such a manner that an SYN/ACK packet is transferred to the transfer apparatus 90d.

When receiving the SYN/ACK packet, the filter unit 91d of the transfer apparatus 90d recognizes there is a likelihood that the received packet will be a target for the processing in the proxy processing unit 35d, based on the filter table 92d. Next, the filter unit 91 refers to a relay table 37d-2. Then, because an entry corresponding to the received communication session is not yet in the relay table, the filter unit 91 puts the packet transfer on hold, and requests the control unit 40d to transmit the allocation request message. Processing that is performed when the allocation request message is transmitted is the same as the processing described in Steps S73 and S74. However, the burst size in the downlink direction is included in the allocation request message that is generated, but the burst size in the uplink direction is not included (Steps S83 and S84).

In Step S85, a protocol that is used is allocated to each transfer apparatus 90 by the same processing as the processing in Step S75. Here, a path between the transfer apparatus 90a and the transfer apparatus 90d is set to be divided into three sections, and a protocol conversion pattern is set to be selected for each of the transfer apparatuses 90a to 90d in such a manner that the protocol termination processing is performed. The notification processing unit 54 asks the transfer apparatuses 90a to 90d for update of the relay table 37 using the relay table registration message.

By processing in Step S86, information in the downlink direction, in the relay table 37a that is retained by the transfer apparatus 90a is set as illustrated in a relay table 37a-2 in FIG. 30. In the same manner, the transfer apparatus 90b sets a relay table 37b-2 as information in the downlink direction, and the transfer apparatus 90c sets a relay table 37c-2 as the information in the downlink direction. Additionally, the information in the downlink information in the relay table 37 that is retained by the transfer apparatus 90d is set to be as illustrated in the relay table 37d-2. When the setting processing is ended, the transfer apparatuses 90a to 90d transmit the relay table registration response message to the management server 50.

When the setting of a path that is used in the downlink direction is ended, the notification processing unit 54 of the management server 50 transmits the allocation response message toward the transfer apparatus 90d (Step S87 in FIG. 27C).

When receiving the allocation response message, the transfer apparatus 90d performs processing in the same manner as the transfer apparatus 90a in Step S78. With the relay table 37d-2, it is specified that a protocol which is used for the transmission of the data that is input is a UNAP. Additionally, the packet that goes through the protocol conversion is set to be destined for the No. 4008 port of the communication apparatus 10a from the No. 2300 port of the transfer apparatus 90d, and then is transmitted (Step S88).

A filter unit 91c of the transfer apparatus 90c receives the packet that is destined for the No. 4008 port of the communication apparatus 10a from the No. 2300 port of the transfer apparatus 90d. Because a condition that is satisfied by the reception packet is included in the filter table 92c and the reception session information and the transmission session information in the relay table 37c-2 are different from each other, the filter unit 91c determines that the reception packet is a target for the processing in the proxy processing unit 35c. In the transfer apparatus 90c, the same processing as the processing by the transfer apparatus 90d in Step S79 is performed, and the reception packet is converted according to the relay table 37c-2. That is, the packet which is destined for the No. 4008 port of the communication apparatus 10a from the No. 3001 port of the transfer apparatus 90c and of which the transport protocol is a UNAP is transmitted from the transfer apparatus 90c (Step S89).

The filter unit 91b of the transfer apparatus 90b receives the UNAP packet that is destined for the No. 4008 port of the communication apparatus 10a from the No. 3001 port of the transfer apparatus 90c. Because a condition that is satisfied by the reception packet is included in the filter table 92b, and the reception session information and the transmission session information in the relay table 37b-2 are different from each other, the filter unit 91b determines that the reception packet is a target for the processing in the proxy processing unit 35b. Because in the transfer apparatus 90b, the same processing as the processing by the transfer apparatus 90d in Step S79 is performed, the reception packet is converted according to the relay table 37b-2. That is, the packet which is destined for the No. 4008 port of the communication apparatus 10a from the No. 4005 port of the transfer apparatus 90b and of which the transport protocol is an RPS is transmitted from the transfer apparatus 90b (Step S90).

The filter unit 91a of the transfer apparatus 90a receives the RPS packet that is destined for the No. 4008 port of the communication apparatus 10a from the No. 4005 port of the transfer apparatus 90b. Because a condition that is satisfied by the reception packet is included in the filter table 92a and the reception session information and the transmission session information in the relay table 37a-2 are different from each other, the filter unit 91a determines that the reception packet is a target for the processing in the proxy processing unit 35a. Because in the transfer apparatus 90a, the same processing as the processing by the transfer apparatus 90d in Step S79 is performed, the reception packet is converted according to the relay table 37a-2. The packet which is destined for the No. 4008 port of the communication apparatus 10a from the No. 2003 port of the communication apparatus 10b and of which the transport protocol is a TCP is transmitted from the transfer apparatus 90a to the communication apparatus 10a (Step S91).

Thereafter, also, processing that uses the relay table 37 is performed in each transfer apparatus 90. The ACK packet or the data packet that is destined for the communication apparatus 10b from the communication apparatus 10a is transmitted to the communication apparatus 10b along a path indicating by arrows A11 to A13 in FIG. 30 (Steps S92 and S93) according to the procedure described in Steps S72 and S78 to S81. On the other hand, the packet that is transmitted by the communication apparatus 10b to the communication apparatus 10a is transmitted along a path indicated by arrows A14 to A18 in FIG. 30 according to the procedure described in Steps S82 and S88 to S91 (Step S94).

FIG. 31 is a flowchart for describing an example of operation of the transfer apparatus 90. When receiving the packet, the filter unit 91 determines whether or not an entry that may be applied to the reception packet is included in the filter table 92 (Step S101). In a case where the entry that may be applied to the reception packet is included in the filter table 92, the filter unit 91 determines whether or not the entry that may be applied to the reception packet is included in the relay table 37 (Yes in Step S101 and Step S102). In a case where the applicable entry is not present in the relay table 37, the control unit 40 transmits the allocation request message to the management server 50 (No in Step S102 and Step S103). Thereafter, the transfer apparatus 90 waits until it receives the allocation response message (No in Step S104). When the allocation response message is received, the transfer processing in which the proxy processing unit 35 is involved is performed on the reception packet (Yes in Step S104 and Step S107).

On the other hand, in a case where the entry that is applicable to the reception packet is included in the relay table 37, the filter unit 91 determines whether the reception session information and the transmission session information are consistent with each other in the applicable entry (Yes in Step S102 and Step S105). In a case where the reception session information and the transmission session information are not consistent with each other, the filter unit 91 determines that the reception packet is a target for the processing in the proxy processing unit 35 (No in Step S105 and Step S106). Accordingly, the transfer processing in which the proxy processing unit 35 is involved is performed on the reception packet (Step S107).

In a case where the entry that is applicable to the reception packet is included in the relay table 37, but the reception session information and the transmission session information are consistent with each other, the filter unit 91 outputs the reception packet to the relay processing unit 93 (Yes in Step S105, and Step S108). In this case, the transfer apparatus 90 transfers the reception packet toward the destination, without performing transport protocol processing on the reception packet (Step S109). Even in a case where the entry that is applicable to the reception packet is not included in the filter table 92 (No in Step S101), processing operations in Steps S108 and S109 are performed.

Moreover, FIG. 31 illustrates one example of operation of the transfer apparatus 90, and the operation may be changed according to packaging. For example, processing operations in Step S105 and later may be performed after it is determined in Step S104 that the allocation response message is received. For example, as described according to a third embodiment, in a system in which the setting is possible in such a manner that the number of sections = 0, when a result of the determination in Step S104 is Yes, the transfer apparatus 90 performs the processing operations in Step S105 and later.

In this manner, also according to the second embodiment, because a conversion pattern of a protocol that is applied to the transfer processing is determined based on the burst size of the data, the protocol is selected in such a manner that the transfer processing is performed, in a shortened time, in accordance with an amount of data that is transferred. Furthermore, according to the second embodiment, an address of and a port number of a destination are set to be in a final destination. Accordingly, even in a system, such as a transparent proxy, in which an apparatus on the receiving side determines a destination, the transfer processing is efficiently performed according to an amount of transfer data.

Third Embodiment

According to the third embodiment, because any network that is included in a wide area network has good communication performance and the burst size of data that is transmitted is small as well, a case where it is determined in the management server 50 that the protocol is not terminated in any transfer apparatus is described as an example. A condition that is applied in a case where the protocol is not terminated in any transfer apparatus is described as a condition that is applied when the number of sections = 0. An example in which a condition that is applied when the number of sections = 0 is set, and a modification example relating to setting of a condition that is applied when the number of sections = 0 will be described below.

1. Setting of the Example in which the Condition that is Applied When the Number of Sections = 0

FIG. 32 is a diagram for describing an example of a system to which the third embodiment is applied. According to the third embodiment, a case where the transfer apparatus 90 is installed at both ends of a wide area network is described as an example, but the number of transfer apparatuses 90 that are included in the wide area network is arbitrary. In an example in FIG. 32, a communication apparatus 10c and a communication apparatus 10d are set to communicate with each other through a network N4, and a communication apparatus 10e and a communication apparatus 10d are set to communicate with each other through a network N5 and a network N6. Furthermore, the network N4 is set to be an international network in which RTT is comparatively long. On the other hand, any of a wireless network that is the network N5 and an intercity network that is the network N6 is set to be a network that has good communication quality.

A transfer apparatus 90e relays communication between a network that includes the communication apparatus 10c and the network N4. A transfer apparatus 90f relays communication between a network that includes the communication apparatus 10d and the network N4, and communication between a network that includes the communication apparatus 10d and the network N6. A transfer apparatus 90g relays communication between a network that includes the communication apparatus 10e and the network N5. In the following description, an identifier of the transfer apparatus 90e is set to be "WO #1," an identifier of the transfer apparatus 90f is set to be "WO #4," and an identifier of the transfer apparatus 90g is set to be "WO #2."

FIG. 33 is a diagram illustrating an example of the performance estimation table 75. FIG. 33 illustrates an estimated value of communication performance, for every number of sections and for every combination of protocols, between the transfer apparatus 90e and the transfer apparatus 90f in a system which is illustrated in FIG. 32. A method of generating the performance estimation table 75 is the same as the methods according to the first and second embodiments. Moreover, because either of a distance between the communication apparatus 10c and the transfer apparatus 90e and a distance between the communication apparatus 10d and the transfer apparatus 90f is short, RTT is set to be short to the degree of being able to be negligible compared with the RTT on the network N4. Additionally, either of communication quality between the communication apparatus 10c and the transfer apparatus 90e and communication quality between the communication apparatus 10d and the transfer apparatus 90f is set to be good. Communication quality in a case where the communication apparatus 10c and the communication apparatus 10d communicate with each other using a TCP that does not pass through the transfer apparatus 90 is similar to communication quality that results when a TCP is used between the transfer apparatus 90e and the transfer apparatus 90f.

FIG. 34 is a diagram for describing an example of the data transfer that is performed according to the third embodiment. The example of the data transfer will be described below using as an example a case where the communication apparatus 10c is a terminal and the communication apparatus 10d is a server, and a virtual desktop is executed in the communication apparatus 10c. That is, the communication apparatus 10d is set to transfer screen information of a desktop to the communication apparatus 10c. Furthermore, in execution of the virtual desktop, either of a burst size of data that results when the communication apparatus 10c transmits a command and the like to the communication apparatus 10d and a burst size of data that results when the communication apparatus 10d transmits screen data to the communication apparatus 10c is set to be comparatively small.

The communication apparatus 10c transmits a SYN packet in order to establish a TCP session between the communication apparatus 10c and a standby port (port number = 3389) of the communication apparatus 10d. When the transfer apparatus 90e receives the SYN packet from the communication apparatus 10c, a filter unit 91e of the transfer apparatus 90e determines that a condition that is applied to the SYN packet is included in the filter table 92e. Here, an entry indicating a packet that is destined for the communication apparatus 10d is included in the filter table 92e, but an entry that is applied to the SYN packet is set not to be present in the relay table 37e. A control unit 40e transmits the allocation request message to the management server 50. Moreover, a burst size measurement unit 36e notifies the control unit 40e of a value in accordance with a size of data that is transmitted from the communication apparatus 10c to the communication apparatus 10d, as a burst size. Here, the following pieces of information are set to be included in the allocation request message that is transmitted by the control unit 40e.

Transmission source address: 150.80.65.191 (the communication apparatus 10c)

Transmission source port: 2010

Destination address: 160.10.1.10 (the communication apparatus 10d)

Destination port: 3389

Burst size: 10 Kbytes

When the management server 50 receives the allocation request message, the selection unit 62 determines a protocol that is used for section setting and for transfer in each transfer apparatus 90, using the performance estimation table 75. As illustrated in the first entry in FIG. 33, throughput in a bottleneck link, which results when the transfer from the communication apparatus 10c to the communication apparatus 10d is performed with a TCP, is 10 Mbps without setting a section in which the protocol conversion is performed. Accordingly, the time that is taken for the transfer processing of data with the notified burst size is $\Delta T = D/B + PT = 10 \times 1000 \times 8/(10 \times 10^6 \times 8) + 0 = 0.001$ seconds (1 ms) according to Equation (2).

As illustrated in the second entry in FIG. 33, if a UNAP is used when the processing for the transfer from the transfer apparatus 90e to the transfer apparatus 90f is performed, the throughput in the bottleneck link is 80 Mbps. However, the processing delay that results from the protocol termination, the protocol change, or the like is 4 ms. Accordingly, when a condition of the second entry in FIG. 32 is used, the time $\Delta T$ that is taken for the transfer processing is $\Delta T = D/B + PT = 10 \times 1000 \times 8/(80 \times 10^6 \times 8) + 0.004 = 0.004125$ seconds (4.125 ms). In the same manner, the time that is taken for the transfer in a case where an RPS is used between the transfer apparatus 90e and the transfer apparatus 90f is 6.14 ms, and the time that is taken for the transfer in a case where a STCP is used between the transfer apparatus 90e and the transfer apparatus 90f is 2.2 ms.

Accordingly, the selection unit 62 of the management server 50 determines that when the transfer processing is performed using the TCP as is, without the protocol being changed in any one of the transfer apparatus 90e and the transfer apparatus 90f, this is most efficient. Accordingly, in order to perform the transfer processing without setting up a section in which a protocol is changed, the management server 50 transmits the relay table registration message including the following pieces of information, also to any of the transfer apparatuses 90.

Information in the inbound direction

Transmission source address: 150.80.65.191 (the communication apparatus 10c)

Transmission source port: 2010

Destination address: 160.10.1.10 (the communication apparatus 10d)

Destination port: 3389

Protocol: TCP

Information in the outbound direction

Transmission source address: 150.80.65.191 (the communication apparatus 10c)

Transmission source port: 2010

Destination address: 160.10.1.10 (the communication apparatus 10d)

Destination port: 3389

Protocol: TCP

Thereafter, the notification processing unit 54 transmits the allocation response message to the transfer apparatus 90e. Moreover, result code = 1 (success in setting) is set in the allocation response message that is transmitted. Accordingly, information that is indicated in the second entry in the relay table 37e in FIG. 34 is recorded in the transfer apparatus 90e. In the same manner, information that is indicated in the second entry in a relay table 37f in FIG. 34 is recorded also in the transfer apparatus 90f.

Because an entry including a condition that may be applied to the reception packet is present in the relay table 37e, but the reception session information and the transmission session information are equivalent to each other, the filter unit 91e of the transfer apparatus 90e transmits a packet without a proxy processing unit 35e being involved. Accordingly, the TCP packet (the SYN packet) that is transmitted from a No. 2010 port of the communication apparatus 10c to a No. 3389 port of the communication apparatus 10d is transmitted from the transfer apparatus 90e toward the communication apparatus 10d. Because the same processing is performed also in the transfer apparatus 90f, the TCP packet (the SYN packet) that is transmitted from the No. 2010 port of the communication apparatus 10c to the No. 3389 port of the communication apparatus 10d is transferred from the transfer apparatus 90f to the communication apparatus 10d.

Next, in response to the SYN packet received from the communication apparatus 10c, the communication apparatus 10d transmits the SYN/ACK packet to the communication apparatus 10c. The SYN/ACK packet is set to be the TCP packet that is transmitted from the No. 3389 port of the communication apparatus 10d to the No. 2010 port of the communication apparatus 10c. The SYN/ACK packet is received in the transfer apparatus 90f. Here, in the transfer apparatus 90f, an entry that is applicable to the SYN/ACK packet is included in a filter table 92f, but is set not to be included in the relay table 37f. When this is done, the transfer apparatus 90f transmits the allocation request message to the management server 50 in the same manner as the transfer apparatus 90e. In a case where the burst size in the allocation request message is also small, the selection unit 62 determines that the transfer is performed without setting up a section in which the protocol conversion is performed, in the same manner as when the allocation request message is transmitted from the transfer apparatus 90e to the management server 50. The notification processing unit 54 requests the transfer apparatus 90e and the transfer apparatus 90f to perform the setting processing of the relay table 37, and each transfer apparatus 90 sets the relay table 37. Here, information that is indicated in the third entry in the relay table 37f in FIG. 34 is set to be recorded in the relay table 37f, and information that is indicated in the third entry in the relay table 37e in FIG. 34 is set to be recorded in the relay table 37e. Although the SYN/ACK packet is transferred through the transfer apparatus 90f and the transfer apparatus 90e, the transfer processing is performed on the SYN/ACK packet as well, as a packet that is destined for the No. 2010 port of the communication apparatus 10c from the No. 3389 port of the communication apparatus 10d, using a TCP.

Any packet that is transmitted after the SYN packet or the SYN/ACK packet is transmitted using the relay table 37 that is set to be in the transfer apparatus 90e and the transfer apparatus 90f. Accordingly, the packet is transferred up to the destination without going through the protocol conversion.

2. Modification Example in a System in which the Transfer Apparatus 20 is Used

Moreover, according to the third embodiment, the case where the transfer apparatus 90 is included is described as an example, but even if the transfer apparatus 20 is included in a network, the management server 50 may use the condition that the number of sections is 0. However, in a case where in the system in which the transfer apparatus 20 is included, the condition that the number of sections is 0 is set, the management server 50 transmits the allocation response message to the transmission source of the allocation request message without transmitting the relay table registration message. Furthermore, the management server 50 does not request the communication apparatus 10 to set the distribution table 17. Accordingly, the packet is transferred to the destination without passing though the transfer apparatus 20.

3. Relationship between a Session Using a Path in which the Number of Sections = 0 and a Different Session

The case where the number of sections used in both of the uplink direction and the downlink direction = 0 is described above as an example, but a condition in the uplink direction and a condition in the downlink direction may be set independently of each other. Accordingly, the condition that the number of sections = 0 in one communication direction may be set for example such as when the condition that the number of sections = 0 is used in the uplink direction and the condition that the number of sections is 1 or greater is set in the downlink direction.

Additionally, because the packet transfer path is determined independently of every session, even if the packet transfer path is a path that passes through the same apparatus, a condition that is used differs with the burst size. For example, in a case where the communication apparatus 10c acquires data from the communication apparatus 10d using a transfer application such as a wget, the burst size of the data that is transmitted from the communication apparatus 10d toward the communication apparatus 10c is, for example, a large size of 10 Mbytes. When this is done, the selection unit 62 of the management server 50 selects the transfer processing that uses a UNAP on the condition that the number of sections = 1, using the performance estimation table 75 (FIG. 33) and burst size information. A method of setting the selected condition is as described above.

Furthermore, because the packet transfer path is determined independently of the session, in a case where the communication with the same application is performed on different paths, a section and a protocol that are used for the transfer are determined according to the communication quality of the path. For example, in FIG. 34, a case where the communication apparatus 10e acquires data from the communication apparatus 10d using a wget is set to be an example. Because either of a wireless network and an intercity network that are positioned between the communication apparatus 10e and the communication apparatus 10d has good communication quality, even if a great amount of data is transmitted from the communication apparatus 10d to the communication apparatus 10e, with the non-conversion of the protocol, the transfer is set to be able to be performed in a short time. In this case, the management server 50 sets the condition that the number of sections = 0 to be for the transfer path from the communication apparatus 10d toward the communication apparatus 10e. That is, even if the communication apparatus 10d transfers data to the communication apparatus 10c, with the condition that the number of sections = 1, the UNAP is set to be used for the communication between the communication apparatus 10d and the transfer apparatus 90, but in a case where the data is transferred from the communication apparatus 10d to the communication apparatus 10e, the condition that the number of sections = 0 is set.

In this manner, in a case where the non-conversion of the protocol of the packet that is transmitted from the communication apparatus 10 which is a transmission source shortens the time that is taken for the transfer, the management server 50 determines that the protocol of the packet is not converted. Accordingly, the setting processing of the transfer apparatus 90 is performed using the condition that the number of sections = 0, and the data is transferred from the communication apparatus 10 that is the transmission source, all the way to the destination. Therefore, also by applying the third embodiment, efficient transfer processing in accordance with an amount of transfer data is performed.

## Fourth Embodiment

Next, when the communication quality of the network fluctuates over time, the number of sections in which the transfer with the protocol different from the protocol in the communication apparatus 10 is performed and the protocol that is used for the transfer processing are determined in accordance with the communication quality.

As described referring to FIG. 34, when the data is transferred from the communication apparatus 10d to the communication apparatus 10e, the setting is provided below in such a manner that the conversion is not performed in the communication apparatus 10d and the communication apparatuses up to and including the communication apparatus 10e (the number of sections = 0). When the transfer of the data in the session (a first session) that is set with the condition that the number of sections = 0 is ended, the first session is ended.

Thereafter, for a reason, such as an increase in the number of terminals that access a wireless network, the communication quality is caused to deteriorate in the wireless network. Because using the quality measurement request message, the management server 50 requests the transfer apparatus 90 in a communication system to perform measurement, the deterioration in the communication quality of the wireless network is periodically set to be recognized. Furthermore, according to the deterioration in the quality of the wireless network, the calculation unit 61 updates the performance estimation table 75 as well.

Next, processing in which the communication apparatus 10e acquires data from communication apparatus 10d using a wget is set to be performed again. According to the performance estimation table 75 that is used at this time, with the burst size of the data that is transferred from the communication apparatus 10d to the communication apparatus 10e, the time that is taken for the transfer is set to be shortest in a case where the communication is performed using the RPS with the condition that the number of sections = 1.

FIG. 35 is a diagram for describing an example of a change in an application pattern over time. For the purpose of making a description easy to understand, the relay table 37 that is illustrated in FIG. 35 illustrates one portion of the information in each relay table 37. With the burst size of the data that is transferred from the communication apparatus 10d to the communication apparatus 10e, information that is indicated in the relay table 37g is registered with the transfer apparatus 90g in the case where the communication is performed using the RPS with the condition that the number of sections = 1. On the other hand, information that is indicated in the second entry in the relay table 37f in FIG. 35 is registered with the transfer apparatus 90f. Moreover, pieces of information that are indicated in the first entry in the relay table 37f in FIG. 35 and the relay table 37e are conditions that are used for the communication between the communication apparatus 10d and the communication apparatus 10c.

The TCP packet that includes the data which is transmitted from the No. 2003 port of the communication apparatus 10d to a No. 99 port of the communication apparatus 10e is converted into a packet that uses the RPS in the transfer apparatus 90f, and is transferred toward the communication apparatus 10e. At this time, the transfer apparatus 90f rewrites the address of and the port of the packet in such a manner that the packet is destined for the No. 99 port of the communication apparatus 10e from a No. 2071 port of the transfer apparatus 90f. Next, when receiving the RPS packet that is transmitted from the No. 2071 port of the transfer apparatus 90f and is destined for the No. 99 port of the communication apparatus 10e, the transfer apparatus 90g converts the protocol of the packet from the RPS to the TCP using the relay table 37g. Because the transfer apparatus 90g further changes the address and the port number according to the relay table 37g, the TCP packet that is destined for the No. 99 port of the communication apparatus 10e from the No. 2003 port of the communication apparatus 10d is transmitted to the communication apparatus 10e.

In this manner, the management server 50 periodically acquires communication quality information on the path between the transfer apparatuses, and thus updates the performance estimation table 75 and uses the latest performance estimation table 75 that is available when the communication starts. Thus, a section at the time of the transfer and a protocol that is used for the transfer processing in each apparatus are determined. Accordingly, a suitable transfer condition is set according to a change in the communication quality of a network. Therefore, even in a case where the quality of the network fluctuates, efficient transfer processing in accordance with an amount of transfer data is performed.

Other Modifications

Moreover, embodiments are not limited to the embodiments described above, and various modifications to the embodiments described above are possible. Examples of the modifications will be described below.

According to the first and second embodiments, the case where four transfer apparatuses are included on the path is described using the third and fourth embodiments as examples, but these are only examples. Any of the embodiments may be applied to a system in which the number of transfer apparatuses on the path is an arbitrary number equal to or greater than 2.

The description is provided above using the case where the management server 50 is a different apparatus different from the transfer apparatus, as an example, but the management server 50 may be mounted in an apparatus that is the same as the transfer apparatus 20 or the transfer apparatus 90. Furthermore, the transfer apparatus 20 may be installed in an apparatus that is the same as the communication apparatus 10.

FIG. 36 is a diagram illustrating an example in a case where the communication apparatus 10 and the transfer apparatus 20 are mounted in the same apparatus. The communication apparatus 100 includes a loopback interface 101, the IP processing unit 12, the transport protocol processing unit 13, the application processing unit 14, the distribution control unit 15, the transfer destination setting unit 16, and the distribution table 17. The IP processing unit 12, the transport protocol processing unit 13, the application processing unit 14, the distribution control unit 15, the transfer destination setting unit 16, and the distribution table 17 operate in the same manner as the communication apparatus 10. Additionally, a communication apparatus 100 includes an interface unit 102 and a transfer processing unit 103. The transfer processing unit 103 performs the same processing as the transfer apparatus 20. In a case where the transmission processing is performed by the communication apparatus 100, the transmission packet from the transfer destination setting unit 16 is input by the loopback interface 101 into the distribution unit 22 in the transfer processing unit 103, and is processed according to the setting of the relay table 37.

The information element in the table or the message, which is described above is one example, and the information element may be changed according to packaging.

According to any of the embodiments, a situation may also be considered where when the allocation request message is transmitted, without the burst size being specifically determined, it may be specified whether an application is an application that roughly performs interactive communication or an application that performs bulk transfer. A data size that is transmitted and received when the interactive communication is performed may be smaller than a data size that is transmitted and received when the bulk transfer is performed. Accordingly, a value indicating whether the communication is the interactive communication or the bulk transfer may be set without a specific value being set to be in the allocation request message. For example, in a case of the interactive communication, the burst size may be set to 0x00000001, and in a case of the bulk transfer, the burst size may be set to OxFFFFFFFF. The management server determines a protocol that is used for the transfer or a section, using a value that is stored in a state of being associated with a value that is assigned to the burst size, as the burst size. For example, the management server 50 may regard the burst size as 64 KB in a case where the burst size = 0x00000001 and may regard the burst size as 1 GB in a case where the burst size = OxFFFFFFFF, thereby determining the protocol and the section.

REFERENCE SIGNS LIST

5 WAN acceleration apparatus
10, 100 Communication apparatus
11, 21, 51, 94, 95, 102 Interface unit
12 IP processing unit
13 Transport protocol processing unit
14 Application processing unit
15 Distribution control unit
16 Transfer destination setting unit
17 Distribution table
20, 90 Transfer apparatus
22, 26 Distribution unit
23-25 Protocol reception processing unit
27-29 Protocol transmission processing unit
31 Test packet output unit
32 Processing delay calculation unit
33 Measurement packet processing unit
34 Measurement packet generation unit
35 Proxy processing unit
36 Burst size measurement unit
37 Relay table
38 Transfer destination setting unit
40 Control unit
50 Management server
52 Communication processing unit
53 Communication quality acquisition unit
54 Notification processing unit
60 Protocol allocation unit
61 Calculation unit
62 Selection unit
71 Path management table
72 Characteristics table
73 Processing delay table
74 Communication quality table
75 Performance estimation table
81 Processor
82 Memory
83 Storage
84 Bus
85 Output device
86 Input device
87 NIC
88 Antenna
91 Filter unit
92 Filter table
93 Relay processing unit
101 Loopback interface
103 Transfer processing unit

## Claims

**1.** A communication system comprising:

a plurality of communication apparatus including a source communication apparatus, a destination communication apparatus, and at least one relay communication apparatus, the source communication apparatus being configured to transmit data to the destination communication apparatus via the at least one relay communication apparatus, each adjacent pair of the plurality of communication apparatus being coupled by each of a plurality of communication networks, each of the plurality of communication networks in which each communication protocol selected from each protocol set is used for transmitting data, each protocol set including at least one communication protocol, each of the at least one relay communication apparatus being configured to perform each relay processing, each relay processing including each conversion of communication protocol applied to the data when a prior communication protocol applied to the data in an upstream communication network coupled to a corresponding relay communication apparatus is different from a posterior communication protocol applied to the data in a downstream communication network coupled to the corresponding relay communication apparatus; and
a control apparatus configured to:

for each relay communication apparatus and for each combination of the prior communication protocol and the posterior communication protocol, store each relay processing time length that is a time length taken for each relay processing performed by each relay communication apparatus,
when transmitting a specified data, for each combination of communication protocols that are used in the plurality of communication networks respectively, estimate each transferring time length based on a size of the specified data and each overall throughput of the plurality of communication networks to which each combination of communication protocols is applied, each transferring time length being a time length taken for transferring the specified data in the plurality of communication networks except for time length taken for relay processing performed by the at least one of relay communication apparatus,
for each combination of communication protocols that are used in the plurality of communication networks respectively, estimate each total transmission time length taken for transmission of the specified data from the source communication apparatus to the destination communication apparatus based on each stored relay processing time length and each estimated transferring time length, and
select a combination of communication protocols that are to be used in the plurality of communication networks respectively, based on each estimated total transmission time length.

**2.** The communication system according to claim 1, wherein
the control apparatus is configured to transmit a notification of the selected combination of communication protocols to the plurality of communication apparatus.

**3.** The communication system according to claim 1 or 2, wherein
each overall throughput of the plurality of communication networks is the worst throughput among a plurality of throughputs of the plurality of communication networks respectively to which each combination of communication protocols is applied.

**4.** The communication system according to claim 3, wherein
the control apparatus is configured to obtain each of the plurality of throughputs based on each round trip time in each of the plurality of communication networks and each packet loss rate in each of the plurality of communication networks.

**5.** The communication system according to any preceding claim, wherein the control apparatus is configured to select a combination of communication protocols whose estimated total transmission time length is the shortest, to be the combination of communication protocols that are to be used in the plurality of communication networks respectively.

**6.** The communication system according to any preceding claim, wherein the control apparatus is configured to transmit a notification of at least one transfer destination of the specified packet to the plurality of communication apparatus.

**7.** The communication system according to any preceding claim, wherein when receiving a request from the source communication apparatus, the control apparatus is configured to select the combination of communication protocols that are to be used in the plurality of communication networks respectively.

**8.** The communication system according to any one of claims 1 to 6,
wherein
when receiving a request from one of the at least one relay communication apparatus, the control apparatus is configured to select the combination of communication protocols that are to be used in the plurality of communication networks respectively.

**9.** The communication system according to claim 8, wherein
when receiving the specified data that meets a specified condition, the at least one relay apparatus determine whether to have received a communication protocol applied to the specified data, and
when having not received the communication protocol applied to the specified data, the at least one relay apparatus transmit the request to the control apparatus.

**10.** The communication system according to any preceding claim,
wherein
when judging that the total transmission time length in which the plurality of communication networks use a same communication protocol used by the source communication apparatus is the shortest, the control apparatus is configured to transmit a notification of the selected combination of communication protocols indicating that the same communication protocol is used in the plurality of communication networks, to the plurality of communication apparatus.

**11.** The communication system according to claim 10, wherein
when receiving the notification, each of the at least one relay communication apparatus does not perform conversion of communication protocol for the specified data.

**12.** The communication system according to claim 10 or 11, wherein when the at least one relay communication apparatus receives the notification, the specified data is transmitted from the source communication apparatus to the destination communication apparatus in the single session.

**13.** The communication system according to claim 10, 11 or 12,
the same communication protocol is transmission control protocol (TCP).

**14.** A control apparatus comprising:

a communication interface configured to couple to a plurality of communication apparatus including a source communication apparatus, a destination communication apparatus, and at least one relay communication apparatus, the source communication apparatus being configured to transmit data to the destination communication apparatus via the at least one relay communication apparatus, each adjacent pair of the plurality of communication apparatus being coupled by each of a plurality of communication networks, each of the plurality of communication networks in which each communication protocol selected from each protocol set is used for transmitting data, each protocol set including at least one communication protocol, each of the at least one relay communication apparatus being configured to perform each relay processing, each relay processing including each conversion of communication protocol applied to the data when a prior communication protocol applied to the data in an upstream communication network coupled to a corresponding relay communication apparatus is different from a posterior communication protocol applied to the data in a downstream communication network coupled to the corresponding relay communication apparatus;
a memory configured to, for each relay communication apparatus and for each combination of the prior communication protocol and the posterior communication protocol, store each relay processing time length that is a time length taken for each relay processing performed by each relay communication apparatus; and
a control unit configured to:

when transmitting a specified data, for each combination of communication protocols that are used in the plurality of communication networks respectively, estimate each transferring time length based on a size of the specified data and each overall throughput of the plurality of communication networks to which each combination of communication protocols is applied, each transferring time length being a time length taken for transferring the specified data in the plurality of communication networks except for time length taken for relay processing performed by the at least one of relay communication apparatus,
for each combination of communication protocols that are used in the plurality of communication networks respectively, estimate each total transmission time length taken for transmission of the specified data from the source communication apparatus to the destination communication apparatus based on each stored relay processing time length and each estimated transferring time length, and
select a combination of communication protocols that are to be used in the plurality of communication networks respectively, based on each estimated total transmission time length.

**15.** A communication method performed by a computer including a communication interface and a memory, the communication interface being configured to couple to a plurality of communication apparatus including a source communication apparatus, a destination communication apparatus, and at least one relay communication apparatus, the source communication apparatus being configured to transmit data to the destination communication apparatus via the at least one relay communication apparatus, each adjacent pair of the plurality of communication apparatus being coupled by each of a plurality of communication networks, each of the plurality of communication networks in which each communication protocol selected from each protocol set is used for transmitting data, each protocol set including at least one communication protocol, each of the at least one relay communication apparatus being configured to perform each relay processing, each relay processing including each conversion of communication protocol applied to the data when a prior communication protocol applied to the data in an upstream communication network coupled to a corresponding relay communication apparatus is different from a posterior communication protocol applied to the data in a downstream communication network coupled to the corresponding relay communication apparatus, the memory being configured to, for each relay communication apparatus and for each combination of the prior communication protocol and the posterior communication protocol, store each relay processing time length that is a time length taken for each relay processing performed by each relay communication apparatus, the communication method comprising:

when transmitting a specified data, for each combination of communication protocols that are used in the plurality of communication networks respectively, estimating each transferring time length based on a size of the specified data and each overall throughput of the plurality of communication networks to which each combination of communication protocols is applied, each transferring time length being a time length taken for transferring the specified data in the plurality of communication networks except for time length taken for relay processing performed by the at least one of relay communication apparatus,
for each combination of communication protocols that are used in the plurality of communication networks respectively, estimating each total transmission time length taken for transmission of the specified data from the source communication apparatus to the destination communication apparatus based on each stored relay processing time length and each estimated transferring time length, and
selecting a combination of communication protocols that are to be used in the plurality of communication networks respectively, based on each estimated total transmission time length.

FIG. 1

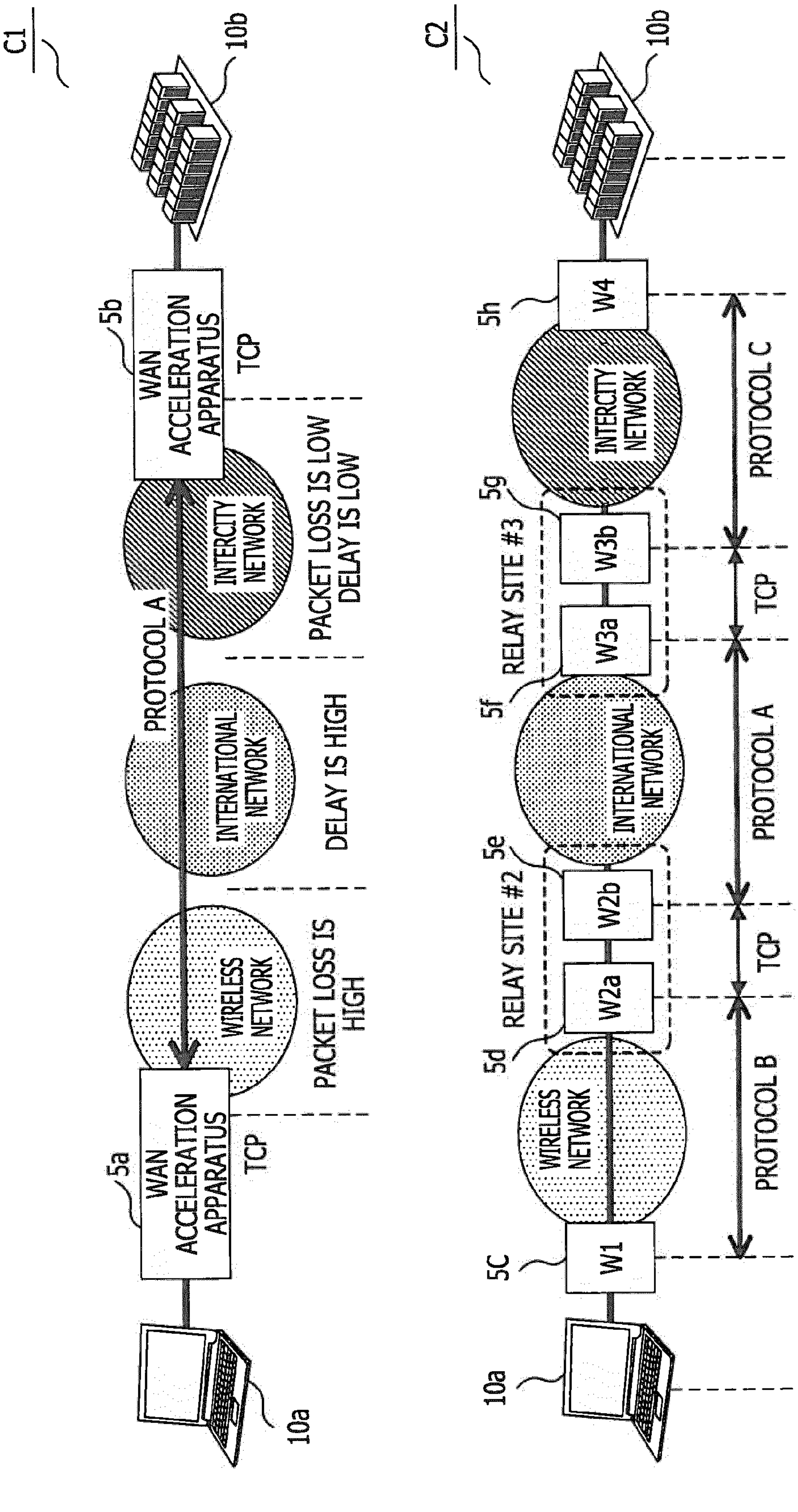
C1
10a
5a
WAN ACCELERATION APPARATUS
TCP
WIRELESS NETWORK
PACKET LOSS IS HIGH
INTERNATIONAL NETWORK
DELAY IS HIGH
PROTOCOL A
INTERCITY NETWORK
PACKET LOSS IS LOW
DELAY IS LOW
5b
WAN ACCELERATION APPARATUS
TCP
10b
C2
10a
5C
W1
WIRELESS NETWORK
PROTOCOL B
5d
RELAY SITE #2
W2a
TCP
W2b
5e
5f
INTERNATIONAL NETWORK
PROTOCOL A
RELAY SITE #3
W3a
TCP
W3b
5g
INTERCITY NETWORK
PROTOCOL C
5h
W4
10b

FIG. 2

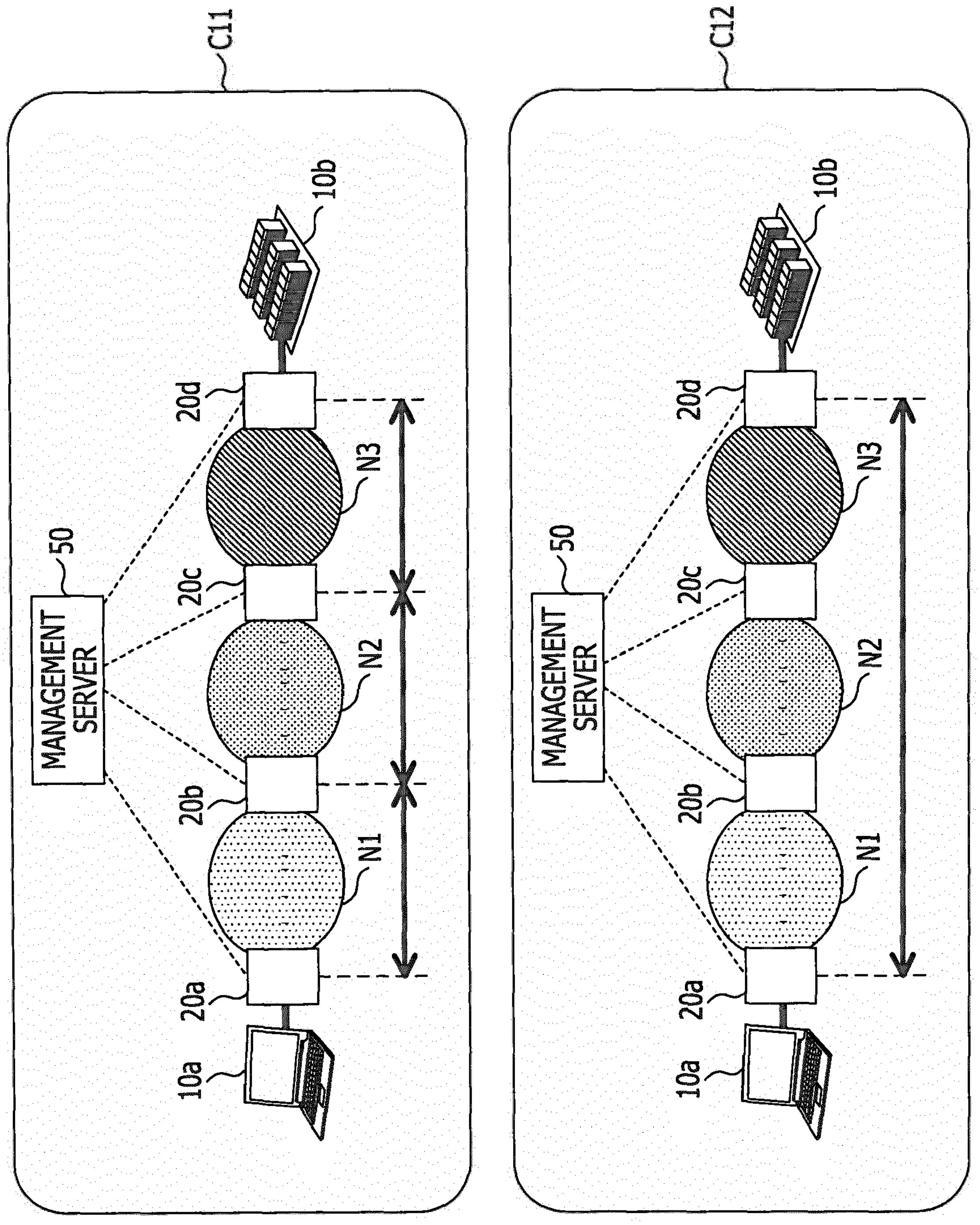
C11
MANAGEMENT SERVER
50
10a
20a
N1
20b
N2
20c
N3
20d
10b
C12
MANAGEMENT SERVER
50
10a
20a
N1
20b
N2
20c
N3
20d
10b

FIG. 3

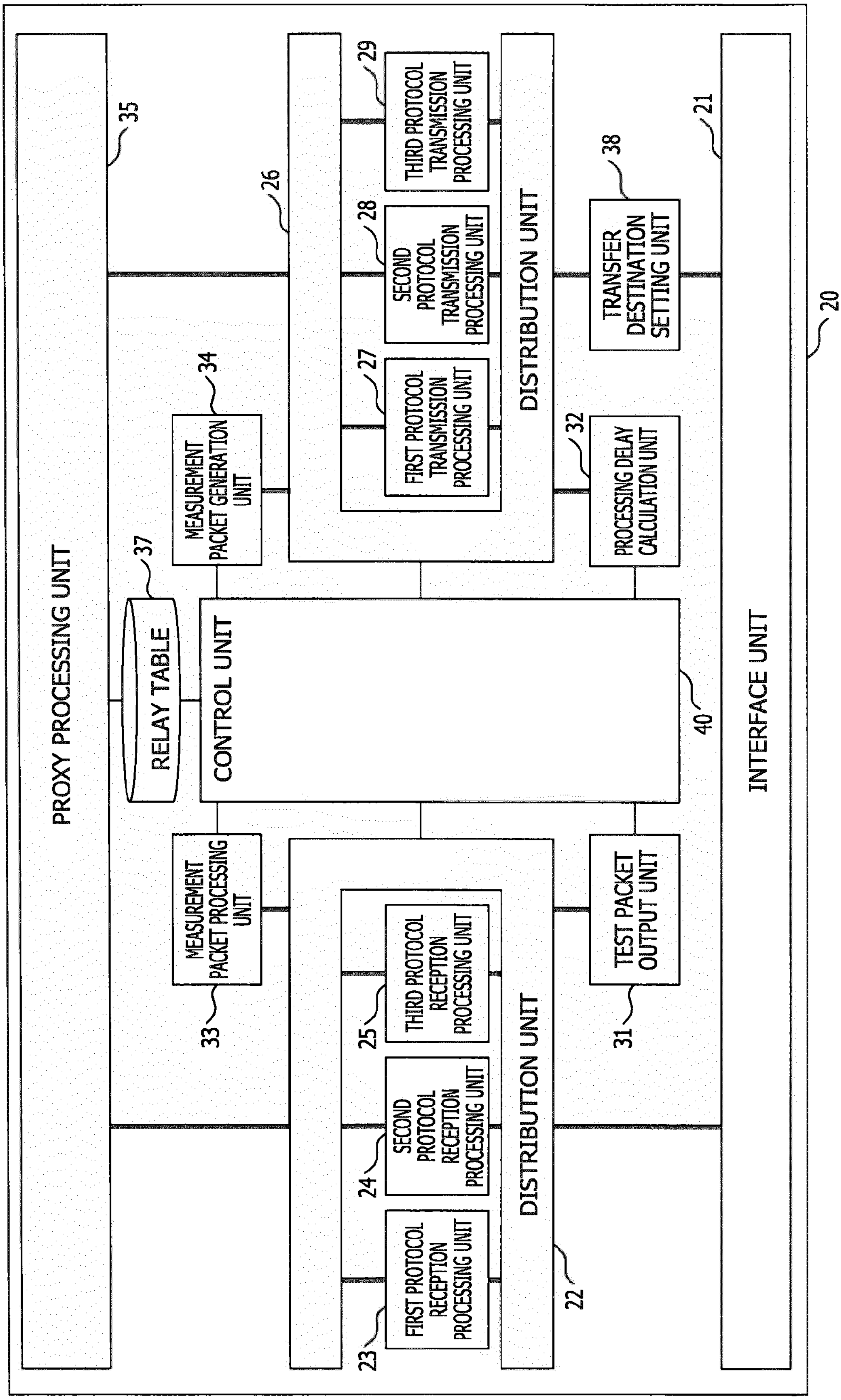
PROXY PROCESSING UNIT
35
RELAY TABLE
37
CONTROL UNIT
40
MEASUREMENT PACKET GENERATION UNIT
34
MEASUREMENT PACKET PROCESSING UNIT
33
26
DISTRIBUTION UNIT
FIRST PROTOCOL TRANSMISSION PROCESSING UNIT
27
SECOND PROTOCOL TRANSMISSION PROCESSING UNIT
28
THIRD PROTOCOL TRANSMISSION PROCESSING UNIT
29
DISTRIBUTION UNIT
22
FIRST PROTOCOL RECEPTION PROCESSING UNIT
23
SECOND PROTOCOL RECEPTION PROCESSING UNIT
24
THIRD PROTOCOL RECEPTION PROCESSING UNIT
25
TRANSFER DESTINATION SETTING UNIT
38
PROCESSING DELAY CALCULATION UNIT
32
TEST PACKET OUTPUT UNIT
31
INTERFACE UNIT
21
20

FIG. 4

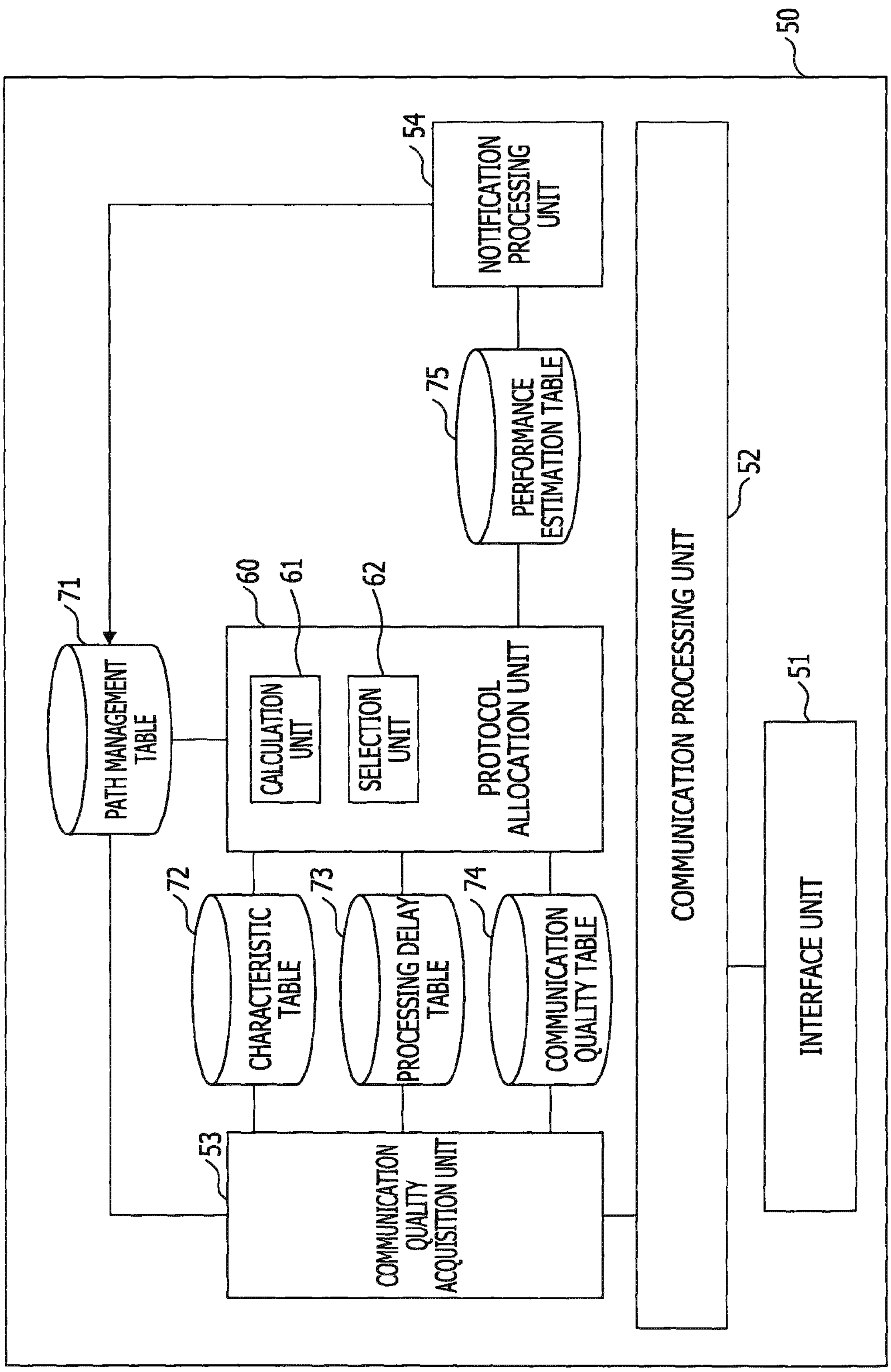
50
54
NOTIFICATION PROCESSING UNIT
75
PERFORMANCE ESTIMATION TABLE
52
71
PATH MANAGEMENT TABLE
60
61
62
CALCULATION UNIT
SELECTION UNIT
PROTOCOL ALLOCATION UNIT
COMMUNICATION PROCESSING UNIT
51
72
CHARACTERISTIC TABLE
73
PROCESSING DELAY TABLE
74
COMMUNICATION QUALITY TABLE
INTERFACE UNIT
53
COMMUNICATION QUALITY ACQUISITION UNIT

FIG. 5

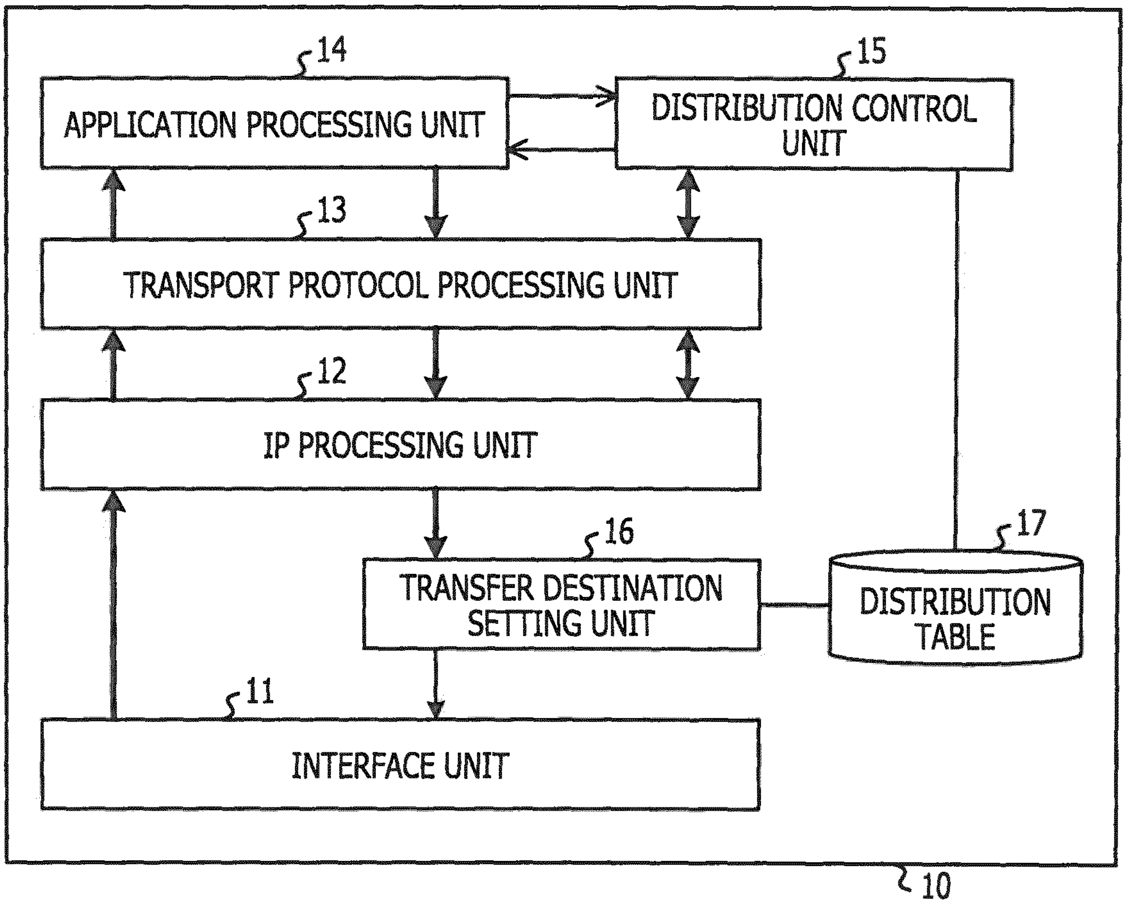
14
APPLICATION PROCESSING UNIT
15
DISTRIBUTION CONTROL UNIT
13
TRANSPORT PROTOCOL PROCESSING UNIT
12
IP PROCESSING UNIT
16
TRANSFER DESTINATION SETTING UNIT
17
DISTRIBUTION TABLE
11
INTERFACE UNIT
10

FIG. 6

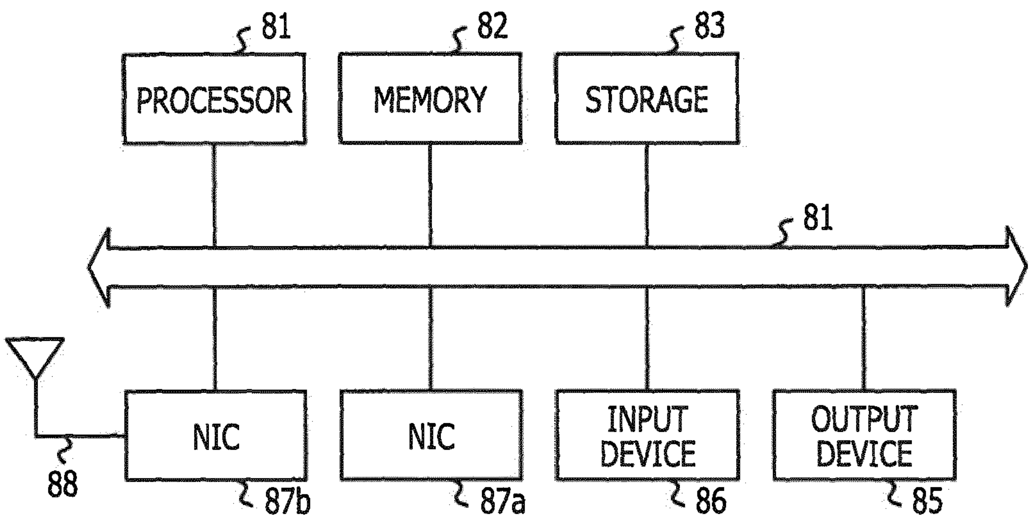
81
PROCESSOR
82
MEMORY
83
STORAGE
81
NIC
NIC
INPUT DEVICE
OUTPUT DEVICE
88
87b
87a
86
85

FIG. 7

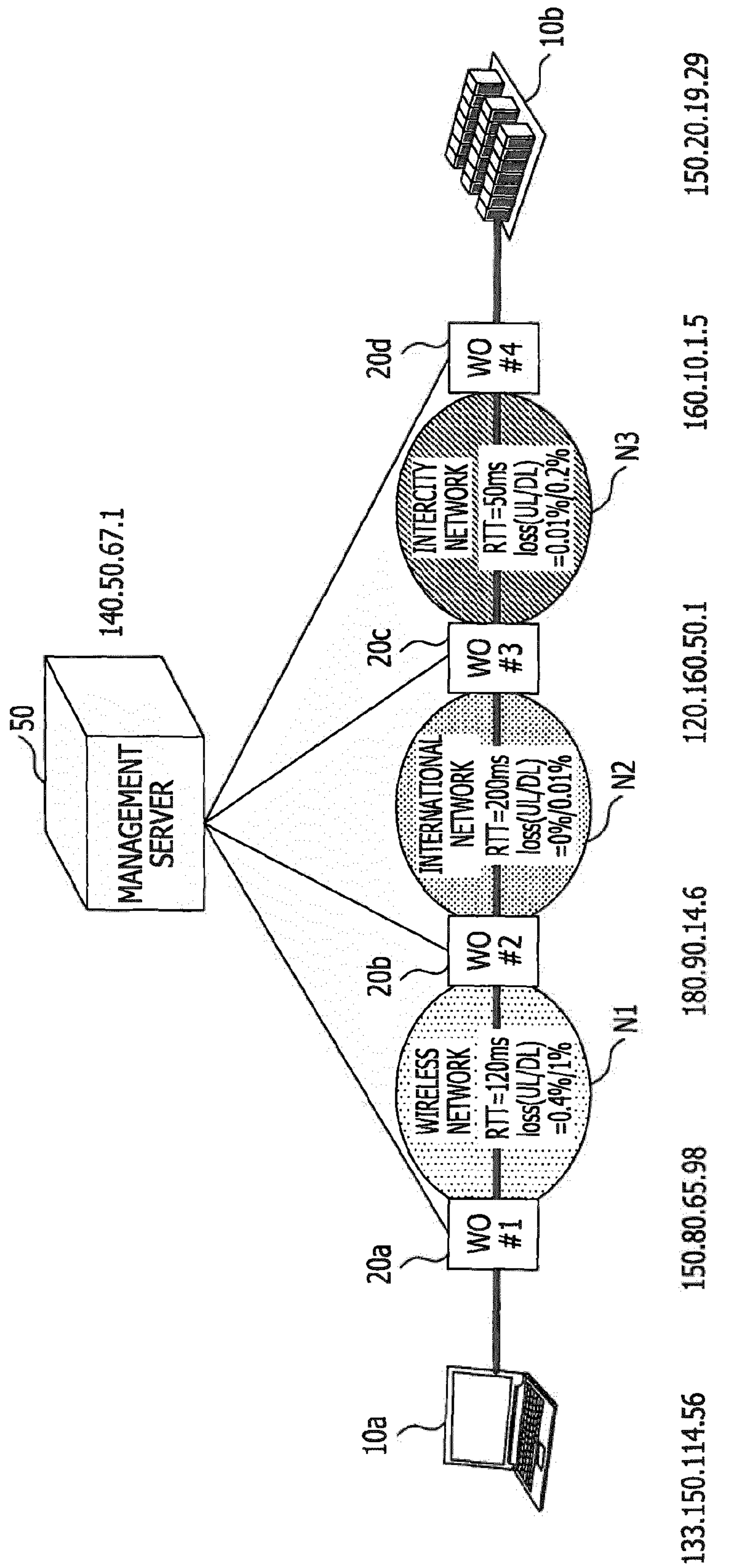
50
MANAGEMENT SERVER
140.50.67.1
10a
20a
WO #1
WIRELESS NETWORK
RTT=120ms
loss(UL/DL)
=0.4%/1%
N1
20b
WO #2
INTERNATIONAL NETWORK
RTT=200ms
loss(UL/DL)
=0%/0.01%
N2
20c
WO #3
INTERCITY NETWORK
RTT=50ms
loss(UL/DL)
=0.01%/0.2%
N3
20d
WO #4
10b
133.150.114.56
150.80.65.98
180.90.14.6
120.160.50.1
160.10.1.5
150.20.19.29

FIG. 8

| TRANSMISSION DESTINATION | TRANSMISSION SOURCE | TRANSFER APPARATUS TO PASS THROUGH |
|---|---|---|
| 133.150.114.0 | 150.20.19.0 | 160.10.1.5<br>120.160.50.1<br>180.90.14.6<br>150.80.65.98 |
| 150.20.19.0 | 133.150.114.0 | 150.80.65.98<br>180.90.14.6<br>120.160.50.1<br>160.10.1.5 |

FIG. 9A

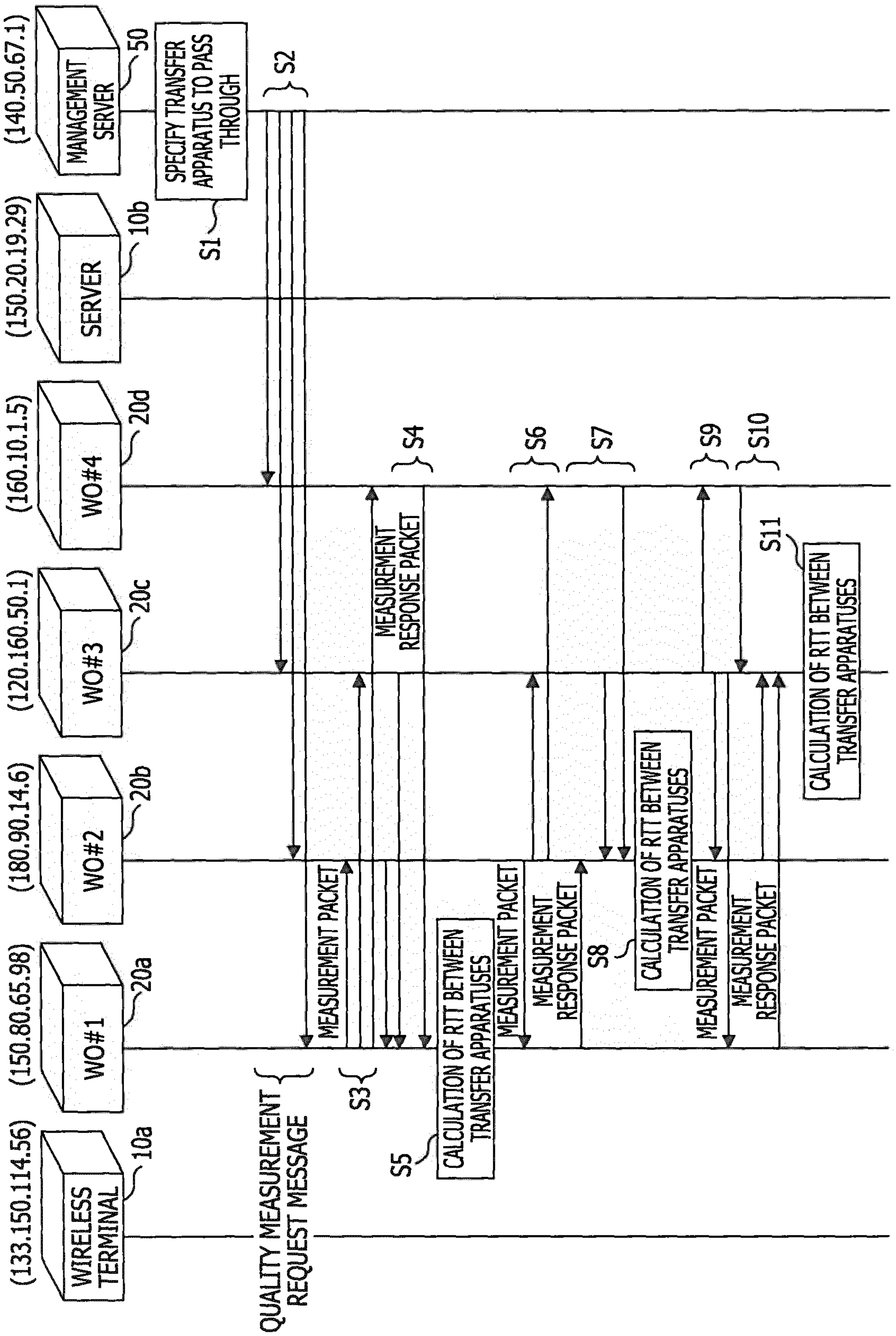
(133.150.114.56)
WIRELESS TERMINAL
10a
(150.80.65.98)
WO#1
20a
(180.90.14.6)
WO#2
20b
(120.160.50.1)
WO#3
20c
(160.10.1.5)
WO#4
20d
(150.20.19.29)
SERVER
10b
(140.50.67.1)
MANAGEMENT SERVER
50
SPECIFY TRANSFER APPARATUS TO PASS THROUGH
S1
S2
QUALITY MEASUREMENT REQUEST MESSAGE
S3
MEASUREMENT PACKET
S4
MEASUREMENT RESPONSE PACKET
S5
CALCULATION OF RTT BETWEEN TRANSFER APPARATUSES
S6
MEASUREMENT PACKET
S7
MEASUREMENT RESPONSE PACKET
S8
CALCULATION OF RTT BETWEEN TRANSFER APPARATUSES
S9
MEASUREMENT PACKET
S10
MEASUREMENT RESPONSE PACKET
S11
CALCULATION OF RTT BETWEEN TRANSFER APPARATUSES

FIG. 9B

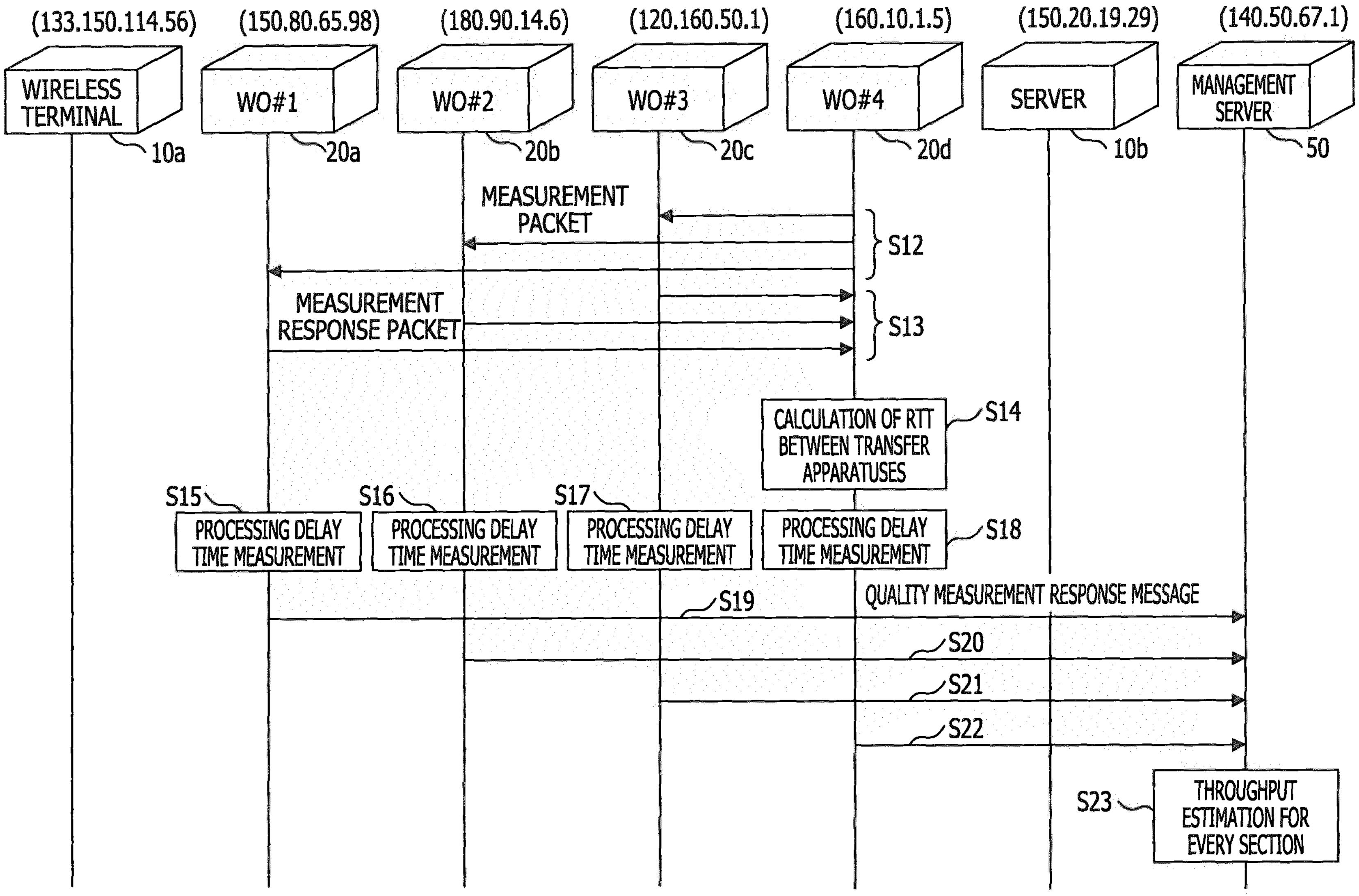
(133.150.114.56)
WIRELESS TERMINAL
10a
(150.80.65.98)
WO#1
20a
(180.90.14.6)
WO#2
20b
(120.160.50.1)
WO#3
20c
(160.10.1.5)
WO#4
20d
(150.20.19.29)
SERVER
10b
(140.50.67.1)
MANAGEMENT SERVER
50
MEASUREMENT PACKET
S12
MEASUREMENT RESPONSE PACKET
S13
CALCULATION OF RTT BETWEEN TRANSFER APPARATUSES
S14
S15
PROCESSING DELAY TIME MEASUREMENT
S16
PROCESSING DELAY TIME MEASUREMENT
S17
PROCESSING DELAY TIME MEASUREMENT
PROCESSING DELAY TIME MEASUREMENT
S18
S19
QUALITY MEASUREMENT RESPONSE MESSAGE
S20
S21
S22
S23
THROUGHPUT ESTIMATION FOR EVERY SECTION

FIG. 10

| | |
|---|---|
| MESSAGE TYPE | = 0 X 1 QUALITY MEASUREMENT REQUEST MESSAGE |
| SIZE | = VARIABLE |
| ADDRESS (4 BYTES) OF MEASUREMENT REQUEST | 150.80.65.98 (TRANSFER APPARATUS 20a) |
| MEASUREMENT FLAG (4 BYTES) | 0x0001 (PROCESSING DELAY MEASUREMENT) |
| NEIGHBOR IP (1) (4 BYTES) | 180.90.14.6 (TRANSFER APPARATUS 20b) |
| MEASUREMENT FLAG (4 BYTES) | 0x0006 (DISCARDING RATE, MEASUREMENT OF RTT) |
| NEIGHBOR IP (2) (4 BYTES) | 120.160.50.1 (TRANSFER APPARATUS 20c) |
| MEASUREMENT FLAG (4 BYTES) | 0x0006 (DISCARDING RATE, MEASUREMENT OF RTT) |
| NEIGHBOR IP (3) (4 BYTES) | 160.10.1.5 (TRANSFER APPARATUS 20d) |
| MEASUREMENT FLAG (4 BYTES) | 0x0006 (DISCARDING RATE, MEASUREMENT OF RTT) |

# FIG. 11

M1

| | |
|---|---|
| MESSAGE TYPE | = 0X6 MEASUREMENT PACKET |
| SIZE | 32 |
| TRANSMISSION SOURCE ADDRESS (4 BYTES) | IP ADDRESS OF MEASUREMENT PACKET TRANSMISSION SOURCE |
| DESTINATION ADDRESS (4 BYTES) | IP ADDRESS OF DESTINATION OF MEASUREMENT PACKET |
| TIME STAMP (8 BYTES) | |

M2

| | |
|---|---|
| MESSAGE TYPE | = 0X7 MEASUREMENT RESPONSE PACKET |
| SIZE | 32 |
| TRANSMISSION SOURCE ADDRESS (4 BYTES) | IP ADDRESS OF MEASUREMENT RESPONSE PACKET TRANSMISSION SOURCE WO |
| DESTINATION ADDRESS (4 BYTES) | IP ADDRESS OF DESTINATION OF MEASUREMENT RESPONSE PACKET |
| TIME STAMP (8 BYTES) | TIME STAMP THAT IS INCLUDED IN MEASUREMENT PACKET |

FIG. 12

| | | |
|---|---|---|
| MESSAGE TYPE | | 0X2 (QUALITY MEASUREMENT RESPONSE MESSAGE) |
| SIZE | | |
| TRANSMISSION SOURCE IP ADDRESS OF QUALITY MEASUREMENT RESPONSE | | 150.80.65.98 (TRANSFER APPARATUS 20a) |
| MEASUREMENT FLAG (4 BYTES) | | 0x0001 (PROCESSING DELAY MEASUREMENT) |
| PROCESSING DELAY 1 | PRE-CONVERSION PROTOCOL TYPE (4 BITS) | 0 (0 = STANDARD TCP) |
| | POST-CONVERSION PROTOCOL TYPE (4 BITS) | 1 (1 = UNAP) |
| | RELAY PROCESSING DELAY (ms) (3 BYTES) | 2 |
| ⋮ | ... | ... |
| COMMUNICATION QUALITY 1 | ADDRESS OF MEASUREMENT PACKET TRANSMISSION DESTINATION | 180.90.14.6 (TRANSFER APPARATUS 20b) |
| | MEASUREMENT FLAG (4 BYTES) | 0x0006 (DISCARDING RATE, MEASUREMENT OF RTT) |
| | DISCARDING RATE (%) (4 BYTES) | 0.4 |
| | RTT (ms) (4 BYTES) | 120 |
| COMMUNICATION QUALITY 2 | ADDRESS OF MEASUREMENT PACKET TRANSMISSION DESTINATION | 180.90.14.6 (TRANSFER APPARATUS 20c) |
| | MEASUREMENT FLAG (4 BYTES) | 0x0006 (DISCARDING RATE, MEASUREMENT OF RTT) |
| | DISCARDING RATE (%) (4 BYTES) | 0.4 |
| | RTT (ms) (4 BYTES) | 320 |
| COMMUNICATION QUALITY 3 | ADDRESS OF MEASUREMENT PACKET TRANSMISSION DESTINATION | 180.90.14.6 (TRANSFER APPARATUS 20d) |
| | MEASUREMENT FLAG (4 BYTES) | 0x0006 (DISCARDING RATE, MEASUREMENT OF RTT) |
| | DISCARDING RATE (%) (4 BYTES) | 0.41 |
| | RTT (ms) (4 BYTES) | 370 |

FIG. 13

| TRANSFER APPARATUS | PRE-CONVERSION PROTOCOL | POST-CONVERSION PROTOCOL | PROCESSING DELAY (ms) |
|---|---|---|---|
| TRANSFER APPARATUS 20d (WO #4) | TCP | UNAP | 2 |
| | | RPS | 3 |
| | | STCP | 1 |
| | UNAP | TCP | 2 |
| | RPS | TCP | 3 |
| | STCP | TCP | 1 |
| TRANSFER APPARATUS 20c (WO #3) | UNAP | UNAP | 3 |
| | | RPS | 5 |
| | | STCP | 2 |
| | RPS | UNAP | 5 |
| | | RPS | 6 |
| | | STCP | 4 |
| | STCP | UNAP | 2 |
| | | RPS | 3 |
| | | STCP | 2 |
| TRANSFER APPARATUS 20b (WO #2) | UNAP | UNAP | 3 |
| | | RPS | 5 |
| | | STCP | 2 |
| | RPS | UNAP | 5 |
| | | RPS | 6 |
| | | STCP | 4 |
| | STCP | UNAP | 2 |
| | | RPS | 4 |
| | | STCP | 1 |
| TRANSFER APPARATUS 20a (WO #1) | UNAP | TCP | 2 |
| | RPS | TCP | 3 |
| | STCP | TCP | 1 |
| | TCP | UNAP | 2 |
| | | RPS | 3 |
| | | STCP | 1 |

FIG. 14

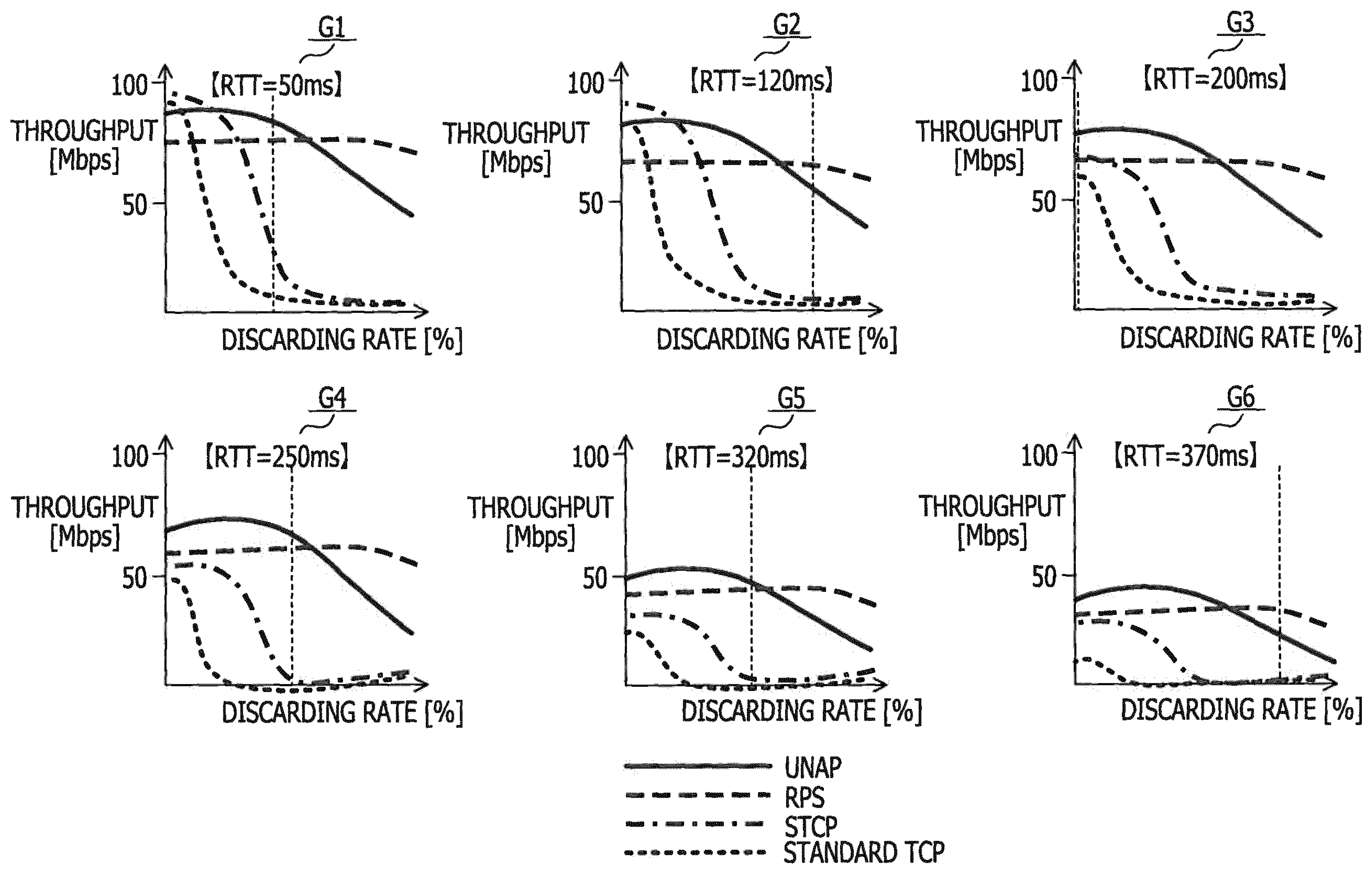
G1
[RTT=50ms]
G2
[RTT=120ms]
G3
[RTT=200ms]
G4
[RTT=250ms]
G5
[RTT=320ms]
G6
[RTT=370ms]
THROUGHPUT [Mbps]
100
50
DISCARDING RATE [%]
UNAP
RPS
STCP
STANDARD TCP

# FIG. 15

| | | TO | | | |
|---|---|---|---|---|---|
| | | TRANSFER APPARATUS 20a | TRANSFER APPARATUS 20b | TRANSFER APPARATUS 20c | TRANSFER APPARATUS 20d |
| FROM | TRANSFER APPARATUS 20a | | DISCARDING RATE: 0.4%<br>RTT:120ms<br>RPS:70Mbps<br>UNAP:75Mbps<br>STCP:15Mbps | DISCARDING RATE: 0.4%<br>RTT:320ms<br>RPS:48Mbps<br>UNAP:53Mbps<br>STCP:12Mbps | DISCARDING RATE: 0.41%<br>RTT:370ms<br>RPS:40Mbps<br>UNAP:45Mbps<br>STCP:8Mbps |
| | TRANSFER APPARATUS 20b | DISCARDING RATE: 1%<br>RTT:120ms<br>RPS:75Mbps<br>UNAP:50Mbps<br>STCP:10Mbps | | DISCARDING RATE: 0%<br>RTT:200ms<br>RPS:70Mbps<br>UNAP:83Mbps<br>STCP:71Mbps | DISCARDING RATE: 0.01%<br>RTT:250ms<br>RPS:60Mbps<br>UNAP:70Mbps<br>STCP:55Mbps |
| | TRANSFER APPARATUS 20c | DISCARDING RATE: 1.01%<br>RTT:320ms<br>RPS:45Mbps<br>UNAP:40Mbps<br>STCP:10Mbps | DISCARDING RATE: 0.01%<br>RTT:200ms<br>RPS:70Mbps<br>UNAP:83Mbps<br>STCP:71Mbps | | DISCARDING RATE: 0.01%<br>RTT:50ms<br>RPS:75Mbps<br>UNAP:85Mbps<br>STCP:90Mbps |
| | TRANSFER APPARATUS 20d | DISCARDING RATE: 1.21%<br>RTT:370ms<br>RPS:43Mbps<br>UNAP:30Mbps<br>STCP:5Mbps | DISCARDING RATE: 0.21%<br>RTT:250ms<br>RPS:60Mbps<br>UNAP:63Mbps<br>STCP:8Mbps | DISCARDING RATE: 0.2%<br>RTT:50ms<br>RPS:70Mbps<br>UNAP:80Mbps<br>STCP:30Mbps | |

# FIG. 16A

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | Σ PROCESSING DELAY (ms) | ID |
|---|---|---|---|---|---|---|
| 0 | SERVER ⇒ TERMINAL | TCP | SERVER ⇒ TERMINAL 0.05Mbps | NONE | 0 | 0 |
| 1 | WO#4 ⇒ WO#1 | UNAP | WO#4 ⇒ WO#1 30Mbps | WO#4 (TCP/UNAP), WO#1 (UNAP/TCP) | 2+2=4 | 1.1 |
| | | RPS | WO#4 ⇒ WO#1 43Mbps | WO#4 (TCP/RPS), WO#1 (RPS/TCP) | 3+3=6 | 1.2 |
| | | STCP | WO#4 ⇒ WO#1 5Mbps | WO#4 (TCP/STCP), WO#1 (STCP/TCP) | 1+1=2 | 1.3 |

FIG. 16B

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | ΣPROCESSING DELAY (ms) | ID |
|---|---|---|---|---|---|---|
| 2 | WO#4 ⇒ WO#2 ⇒ WO#1 | UNAP /UNAP | WO#2 ⇒ WO#1 50Mbps | WO#4 (TCP/UNAP)<br>WO#2 (UNAP/UNAP)<br>WO#1 (UNAP/TCP) | 2+3+2=7 | 2.1 |
| | | UNAP /RPS | WO#4 ⇒ WO#2 63Mbps | WO#4 (TCP/UNAP)<br>WO#2 (UNAP/RPS)<br>WO#1 (RPS/TCP) | 2+5+3=10 | 2.2 |
| | | UNAP /STCP | WO#2 ⇒ WO#1 10Mbps | WO#4 (TCP/UNAP)<br>WO#2 (UNAP/STCP)<br>WO#1 (STCP/TCP) | 2+2+1=5 | 2.3 |
| | | RPS /UNAP | WO#2 ⇒ WO#1 50Mbps | WO#4 (TCP/RPS)<br>WO#2 (RPS/UNAP)<br>WO#1 (UNAP/TCP) | 3+5+2=10 | 2.4 |
| | | RPS /RPS | WO#4 ⇒ WO#2 60Mbps | WO#4 (TCP/RPS)<br>WO#2 (RPS/RPS)<br>WO#1 (RPS/TCP) | 3+6+3=12 | 2.5 |
| | | RPS /STCP | WO#2 ⇒ WO#1 10Mbps | WO#4 (TCP/RPS)<br>WO#2 (RPS/STCP)<br>WO#1 (STCP/TCP) | 3+4+1=8 | 2.6 |
| | | STCP /UNAP | WO#4 ⇒ WO#2 8Mbps | WO#4 (TCP/STCP)<br>WO#2 (STCP/UNAP)<br>WO#1 (UNAP/TCP) | 1+2+2=5 | 2.7 |
| | | STCP /RPS | WO#4 ⇒ WO#2 8Mbps | WO#4 (TCP/STCP)<br>WO#2 (STCP/RPS)<br>WO#1 (RPS/TCP) | 1+4+3=8 | 2.8 |
| | | STCP /STCP | WO#4 ⇒ WO#2 8Mbps | WO#4 (TCP/STCP)<br>WO#2 (STCP/STCP)<br>WO#1 (STCP/TCP) | 1+1+1=3 | 2.9 |

FIG. 16C

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | ΣPROCESSING DELAY (ms) | ID |
|---|---|---|---|---|---|---|
| 2 | WO#4 ⇒ WO#3 ⇒ WO#1 | UNAP /UNAP | WO#3 ⇒ WO#1 40Mbps | WO#4 (TCP/UNAP)<br>WO#3 (UNAP/UNAP)<br>WO#1 (UNAP/TCP) | 2+3+2=7 | 2.10 |
| | | UNAP /RPS | WO#3 ⇒ WO#1 45Mbps | WO#4 (TCP/UNAP)<br>WO#3 (UNAP/RPS)<br>WO#1 (RPS/TCP) | 2+5+3=10 | 2.11 |
| | | UNAP /STCP | WO#3 ⇒ WO#1 10Mbps | WO#4 (TCP/UNAP)<br>WO#3 (UNAP/STCP)<br>WO#1 (STCP/TCP) | 2+2+1=5 | 2.12 |
| | | RPS /UNAP | WO#3 ⇒ WO#1 40Mbps | WO#4 (TCP/RPS)<br>WO#3 (RPS/UNAP)<br>WO#1 (UNAP/TCP) | 3+5+2=10 | 2.13 |
| | | RPS /RPS | WO#3 ⇒ WO#1 45Mbps | WO#4 (TCP/RPS)<br>WO#3 (RPS/RPS)<br>WO#1 (RPS/TCP) | 3+6+3=12 | 2.14 |
| | | RPS /STCP | WO#3 ⇒ WO#1 10Mbps | WO#4 (TCP/RPS)<br>WO#3 (RPS/STCP)<br>WO#1 (STCP/TCP) | 3+4+1=8 | 2.15 |
| | | STCP /UNAP | WO#4 ⇒ WO#3 30Mbps | WO#4 (TCP/STCP)<br>WO#3 (STCP/UNAP)<br>WO#1 (UNAP/TCP) | 1+2+2=5 | 2.16 |
| | | STCP /RPS | WO#4 ⇒ WO#3 30Mbps | WO#4 (TCP/STCP)<br>WO#3 (STCP/RPS)<br>WO#1 (RPS/TCP) | 1+3+3=7 | 2.17 |
| | | STCP /STCP | WO#3 ⇒ WO#1 10Mbps | WO#4 (TCP/STCP)<br>WO#3 (STCP/STCP)<br>WO#1 (STCP/TCP) | 1+2+1=4 | 2.18 |

# FIG. 16D

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | ΣPROCESSING DELAY (ms) | ID |
|---|---|---|---|---|---|---|
| 3 | WO#4 ⇒ WO#3 ⇒ WO#2 ⇒ WO#1 | UNAP /UNAP /UNAP | WO#2 ⇒ WO#1 50Mbps | WO#4 (TCP/UNAP)<br>WO#3 (UNAP/UNAP)<br>WO#2 (UNAP/UNAP)<br>WO#1 (UNAP/TCP) | 2+3+3+2=10 | 3.1 |
| | | UNAP /UNAP /RPS | WO#2 ⇒ WO#1 75Mbps | WO#4 (TCP/UNAP)<br>WO#3 (UNAP/UNAP)<br>WO#2 (UNAP/RPS)<br>WO#1 (RPS/TCP) | 2+3+5+3=13 | 3.2 |
| | | UNAP /UNAP /STCP | WO#2 ⇒ WO#1 10Mbps | WO#4 (TCP/UNAP)<br>WO#3 (UNAP/UNAP)<br>WO#2 (UNAP/STCP)<br>WO#1 (STCP/TCP) | 2+3+2+1=8 | 3.3 |
| | | UNAP /RPS /UNAP | WO#2 ⇒ WO#1 50Mbps | WO#4 (TCP/UNAP)<br>WO#3 (UNAP/RPS)<br>WO#2 (RPS/UNAP)<br>WO#1 (UNAP/TCP) | 2+5+5+2=14 | 3.4 |
| | | UNAP /RPS /RPS | WO#3 ⇒ WO#2 70Mbps | WO#4 (TCP/UNAP)<br>WO#3 (UNAP/RPS)<br>WO#2 (RPS/RPS)<br>WO#1 (RPS/TCP) | 2+5+6+3=16 | 3.5 |
| | | UNAP /RPS /STCP | WO#2 ⇒ WO#1 10Mbps | WO#4 (TCP/UNAP)<br>WO#3 (UNAP/RPS)<br>WO#2 (RPS/STCP)<br>WO#1 (STCP/TCP) | 2+5+4+1=12 | 3.6 |
| | | UNAP /STCP /UNAP | WO#2 ⇒ WO#1 50Mbps | WO#4 (TCP/UNAP)<br>WO#3 (UNAP/STCP)<br>WO#2 (STCP/UNAP)<br>WO#1 (UNAP/TCP) | 2+2+2+9=9 | 3.7 |

# FIG. 16E

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | ΣPROCESSING DELAY (ms) | ID |
|---|---|---|---|---|---|---|
| 3 | WO#4 ⇒ WO#3 ⇒ WO#2 ⇒ WO#1 | UNAP /STCP /RPS | WO#3 ⇒ WO#2 70Mbps | WO#4 (TCP/UNAP)<br>WO#3 (UNAP/STCP)<br>WO#2 (STCP/RPS)<br>WO#1 (RPS/TCP) | 2+2+4+3=11 | 3.8 |
| | | UNAP /STCP /STCP | WO#2 ⇒ WO#1 10Mbps | WO#4 (TCP/UNAP)<br>WO#3 (UNAP/STCP)<br>WO#2 (STCP/STCP)<br>WO#1 (STCP/TCP) | 2+2+1+1=6 | 3.9 |
| | | RPS /UNAP /UNAP | WO#2 ⇒ WO#1 50Mbps | WO#4 (TCP/RPS)<br>WO#3 (RPS/UNAP)<br>WO#2 (UNAP/UNAP)<br>WO#1 (UNAP/TCP) | 3+5+3+2=13 | 3.10 |
| | | RPS /UNAP /RPS | WO#4 ⇒ WO#3 70Mbps | WO#4 (TCP/RPS)<br>WO#3 (RPS/UNAP)<br>WO#2 (UNAP/RPS)<br>WO#1 (RPS/TCP) | 3+5+5+3=16 | 3.11 |
| | | RPS /UNAP /STCP | WO#2 ⇒ WO#1 10Mbps | WO#4 (TCP/RPS)<br>WO#3 (RPS/UNAP)<br>WO#2 (UNAP/STCP)<br>WO#1 (STCP/TCP) | 3+5+2+1=11 | 3.12 |
| | | RPS /RPS /UNAP | WO#2 ⇒ WO#1 50Mbps | WO#4 (TCP/RPS)<br>WO#3 (RPS/RPS)<br>WO#2 (RPS/UNAP)<br>WO#1 (UNAP/TCP) | 3+6+5+2=16 | 3.13 |
| | | RPS /RPS /RPS | WO#4 ⇒ WO#3 70Mbps | WO#4 (TCP/RPS)<br>WO#3 (RPS/RPS)<br>WO#2 (RPS/RPS)<br>WO#1 (RPS/TCP) | 3+6+6+3=18 | 3.14 |

# FIG. 16F

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | ΣPROCESSING DELAY (ms) | ID |
|---|---|---|---|---|---|---|
| 3 | WO#4 ⇒ WO#3 ⇒ WO#2 ⇒ WO#1 | RPS /RPS /STCP | WO#2 ⇒ WO#1 10Mbps | WO#4 (TCP/RPS)<br>WO#3 (RPS/RPS)<br>WO#2 (RPS/STCP)<br>WO#1 (STCP/TCP) | 3+6+4+1=14 | 3.15 |
| | | RPS /STCP /UNAP | WO#2 ⇒ WO#1 50Mbps | WO#4 (TCP/RPS)<br>WO#3 (RCP/STCP)<br>WO#2 (STCP/UNAP)<br>WO#1 (UNAP/TCP) | 3+4+2+2=11 | 3.16 |
| | | RPS /STCP /RPS | WO#4 ⇒ WO#3 70Mbps | WO#4 (TCP/RPS)<br>WO#3 (RPS/STCP)<br>WO#2 (STCP/RPS)<br>WO#1 (RPS/TCP) | 3+4+4+3=14 | 3.17 |
| | | RPS /STCP /STCP | WO#2 ⇒ WO#1 10Mbps | WO#4 (TCP/RPS)<br>WO#3 (RPS/STCP)<br>WO#2 (STCP/STCP)<br>WO#1 (STCP/TCP) | 3+4+1+1=9 | 3.18 |
| | | STCP /UNAP /UNAP | WO#4 ⇒ WO#3 30Mbps | WO#4 (TCP/STCP)<br>WO#3 (STCP/UNAP)<br>WO#2 (UNAP/UNAP)<br>WO#1 (UNAP/TCP) | 1+2+3+2=8 | 3.19 |
| | | STCP /UNAP /RPS | WO#4 ⇒ WO#3 30Mbps | WO#4 (TCP/STCP)<br>WO#3 (STCP/UNAP)<br>WO#2 (UNAP/RPS)<br>WO#1 (RPS/TCP) | 1+2+5+3=11 | 3.20 |
| | | STCP /UNAP /STCP | WO#2 ⇒ WO#1 10Mbps | WO#4 (TCP/STCP)<br>WO#3 (STCP/UNAP)<br>WO#2 (UNAP/STCP)<br>WO#1 (STCP/TCP) | 1+2+2+1=6 | 3.21 |

# FIG. 16G

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | ΣPROCESSING DELAY (ms) | ID |
|---|---|---|---|---|---|---|
| 3 | WO#4 ⇒ WO#3 ⇒ WO#2 ⇒ WO#1 | STCP /RPS /UNAP | WO#4 ⇒ WO#3 30Mbps | WO#4 (TCP/STCP)<br>WO#3 (STCP/RPS)<br>WO#2 (RPS/UNAP)<br>WO#1 (UNAP/TCP) | 1+3+5+2=11 | 3.22 |
| | | STCP /RPS /RPS | WO#4 ⇒ WO#3 30Mbps | WO#4 (TCP/STCP)<br>WO#3 (STCP/RPS)<br>WO#2 (RPS/RPS)<br>WO#1 (RPS/TCP) | 1+3+5+3=12 | 3.23 |
| | | STCP /RPS /STCP | WO#2 ⇒ WO#1 10Mbps | WO#4 (TCP/STCP)<br>WO#3 (STCP/RPS)<br>WO#2 (RPS/STCP)<br>WO#1 (STCP/TCP) | 1+3+4+1=9 | 3.24 |
| | | STCP /STCP /UNAP | WO#4 ⇒ WO#3 30Mbps | WO#4 (TCP/STCP)<br>WO#3 (STCP/STCP)<br>WO#2 (STCP/UNAP)<br>WO#1 (UNAP/TCP) | 1+2+2+2=7 | 3.25 |
| | | STCP /STCP /RPS | WO#4 ⇒ WO#3 30Mbps | WO#4 (TCP/STCP)<br>WO#3 (STCP/STCP)<br>WO#2 (STCP/RPS)<br>WO#1 (RPS/TCP) | 1+2+4+3=10 | 3.26 |
| | | STCP /STCP /STCP | WO#2 ⇒ WO#1 10Mbps | WO#4 (TCP/STCP)<br>WO#3 (STCP/STCP)<br>WO#2 (STCP/STCP)<br>WO#1 (STCP/TCP) | 1+2+1+1=5 | 3.27 |

FIG. 17

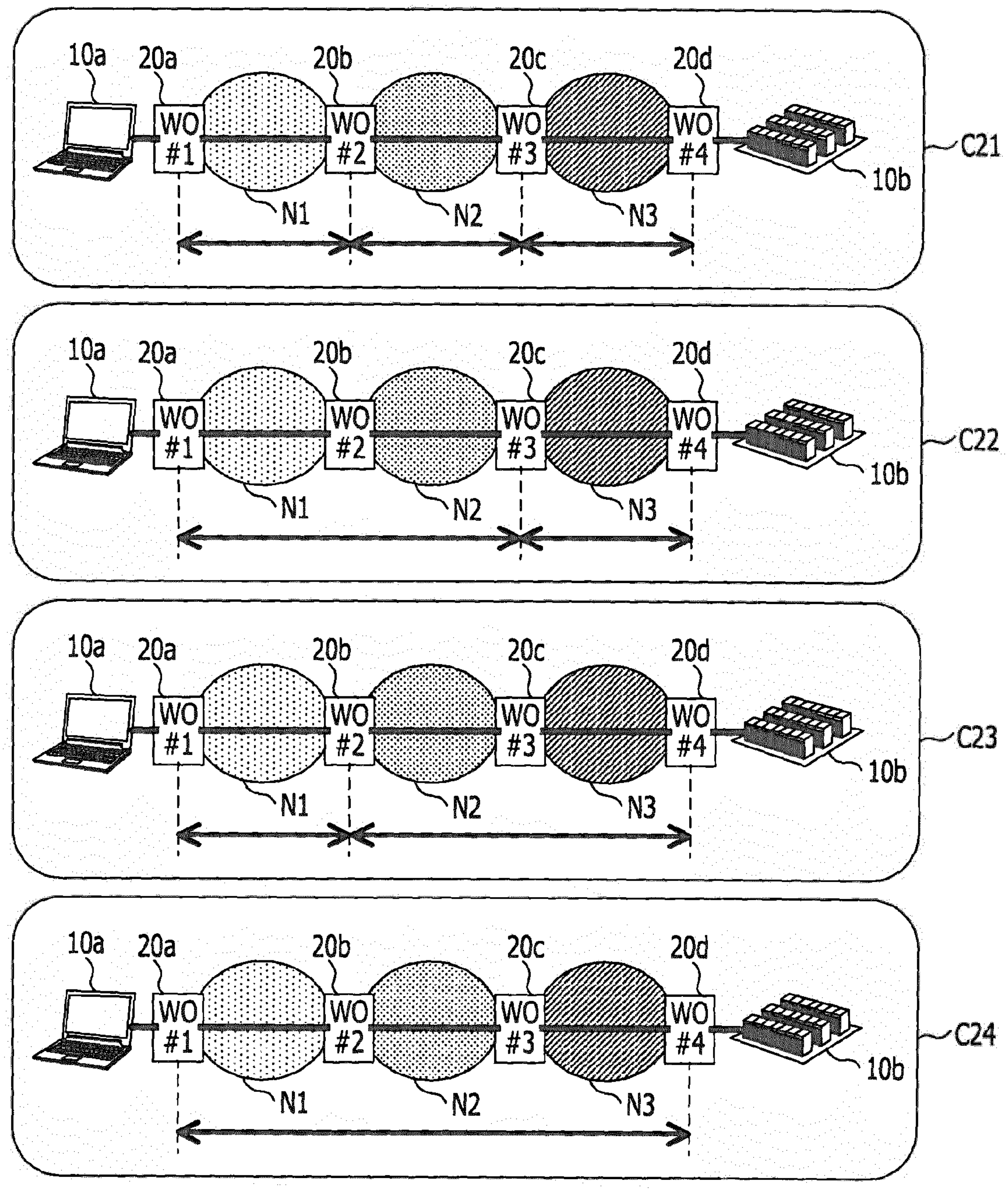

FIG. 18A

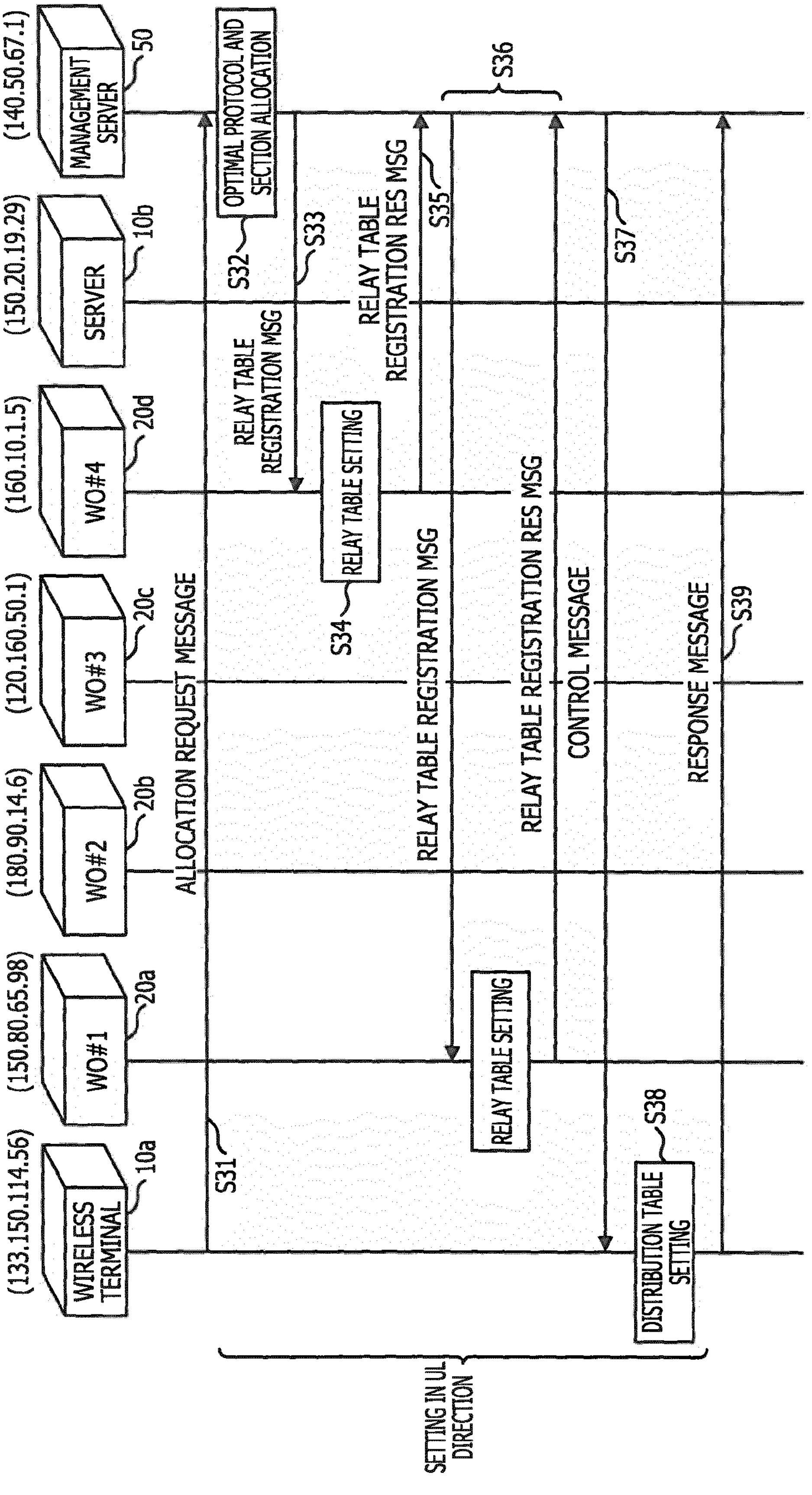
(133.150.114.56)
WIRELESS TERMINAL
10a
(150.80.65.98)
WO#1
20a
(180.90.14.6)
WO#2
20b
(120.160.50.1)
WO#3
20c
(160.10.1.5)
WO#4
20d
(150.20.19.29)
SERVER
10b
(140.50.67.1)
MANAGEMENT SERVER
50
ALLOCATION REQUEST MESSAGE
S31
OPTIMAL PROTOCOL AND SECTION ALLOCATION
S32
S33
RELAY TABLE REGISTRATION MSG
RELAY TABLE SETTING
S34
RELAY TABLE REGISTRATION RES MSG
S35
S36
RELAY TABLE REGISTRATION MSG
RELAY TABLE SETTING
RELAY TABLE REGISTRATION RES MSG
CONTROL MESSAGE
S37
DISTRIBUTION TABLE SETTING
S38
RESPONSE MESSAGE
S39
SETTING IN UL DIRECTION

FIG. 18B

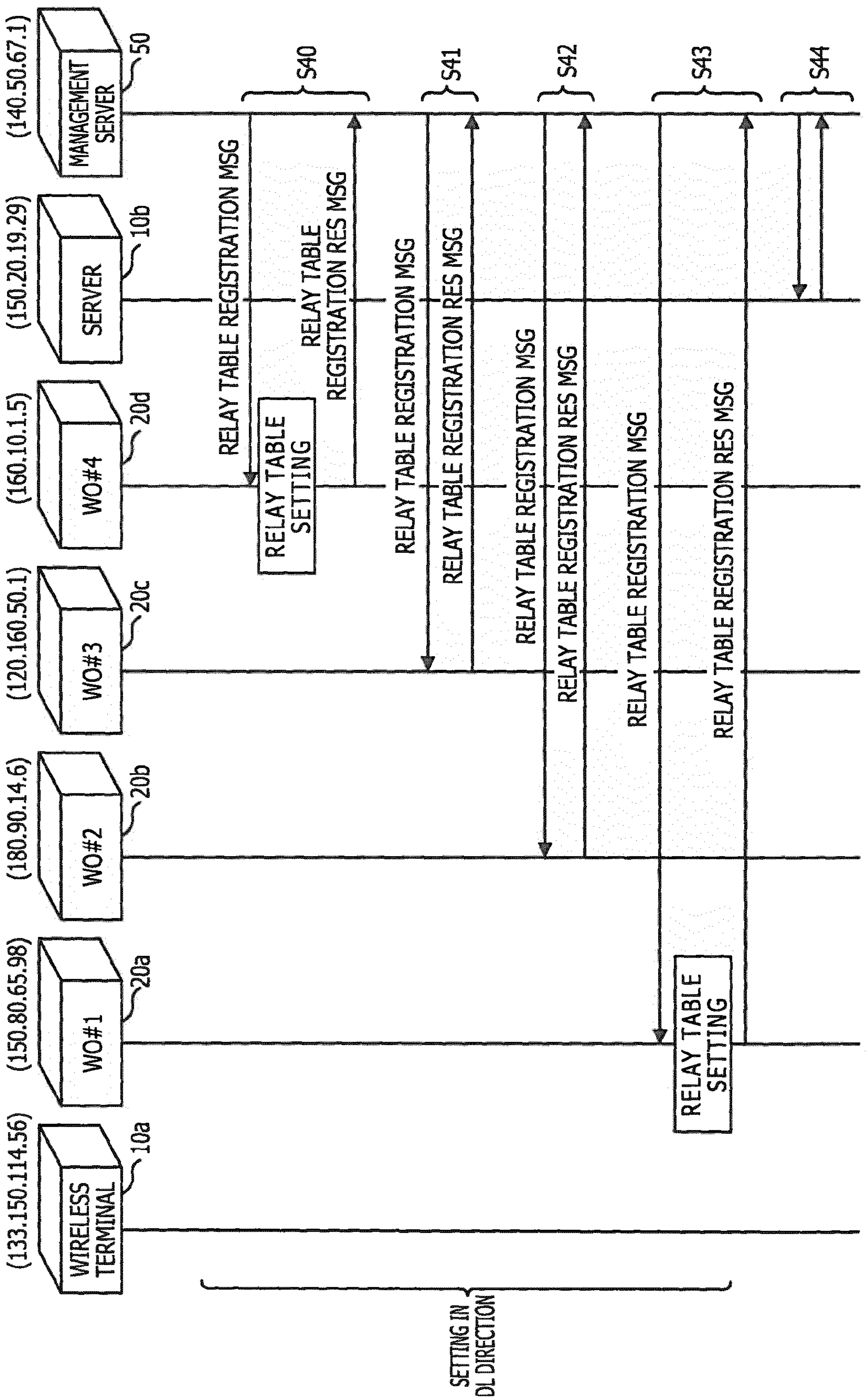
(133.150.114.56)
WIRELESS TERMINAL
10a
(150.80.65.98)
WO#1
20a
(180.90.14.6)
WO#2
20b
(120.160.50.1)
WO#3
20c
(160.10.1.5)
WO#4
20d
(150.20.19.29)
SERVER
10b
(140.50.67.1)
MANAGEMENT SERVER
50
S40
S41
S42
S43
S44
RELAY TABLE REGISTRATION MSG
RELAY TABLE SETTING
RELAY TABLE REGISTRATION RES MSG
RELAY TABLE REGISTRATION MSG
RELAY TABLE REGISTRATION RES MSG
RELAY TABLE REGISTRATION MSG
RELAY TABLE REGISTRATION RES MSG
RELAY TABLE REGISTRATION MSG
RELAY TABLE SETTING
RELAY TABLE REGISTRATION RES MSG
SETTING IN DL DIRECTION

FIG. 18C

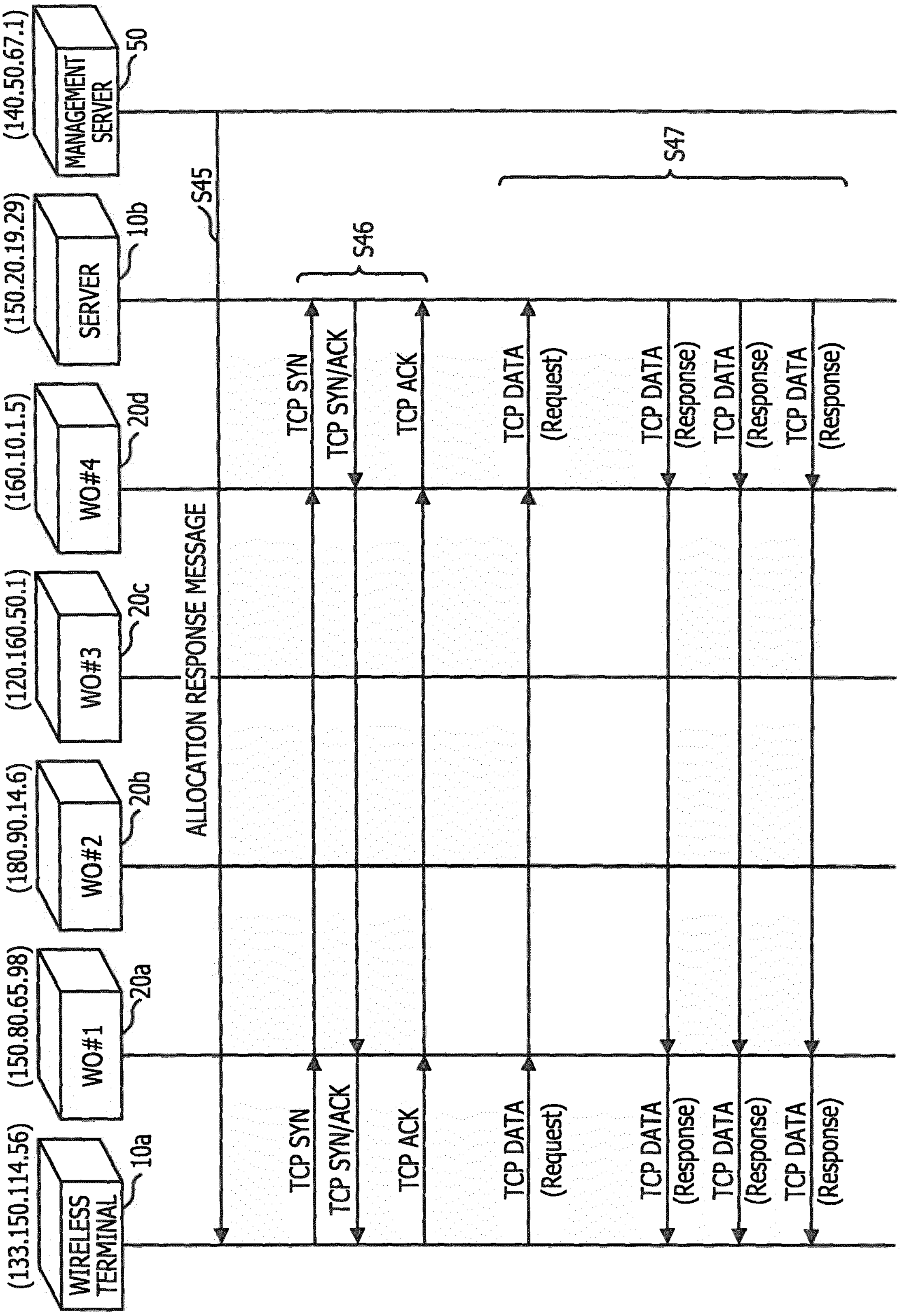
(133.150.114.56)
WIRELESS TERMINAL
10a
(150.80.65.98)
WO#1
20a
(180.90.14.6)
WO#2
20b
(120.160.50.1)
WO#3
20c
(160.10.1.5)
WO#4
20d
(150.20.19.29)
SERVER
10b
(140.50.67.1)
MANAGEMENT SERVER
50
S45
ALLOCATION RESPONSE MESSAGE
S46
TCP SYN
TCP SYN/ACK
TCP ACK
S47
TCP DATA
(Request)
TCP DATA
(Response)
TCP DATA
(Response)
TCP DATA
(Response)

FIG. 19

M11

| | |
|---|---|
| MESSAGE TYPE | 0x3 (ALLOCATION REQUEST MESSAGE) |
| SIZE | 32 |
| TRANSMISSION SOURCE ADDRESS OF DATA COMMUNICATION (UL DIRECTION) | 133.150.114.56 |
| TRANSMISSION SOURCE PORT NUMBER OF DATA COMMUNICATION (UL DIRECTION) | 4008 |
| TRANSMISSION DESTINATION ADDRESS OF DATA COMMUNICATION (UL DIRECTION) | 150.20.19.29 |
| TRANSMISSION DESTINATION PORT NUMBER OF DATA COMMUNICATION (UL DIRECTION) | 2003 |
| UL BURST SIZE (8 BYTES) | 500Bytes |
| DL BURST SIZE (8 BYTES) | 10Mbytes |

M12

| | |
|---|---|
| MESSAGE TYPE | 0x4 (ALLOCATION RESPONSE MESSAGE) |
| SIZE | 32 |
| TRANSMISSION SOURCE ADDRESS OF DATA COMMUNICATION (UL DIRECTION) | 133.150.114.56 |
| TRANSMISSION SOURCE PORT NUMBER OF DATA COMMUNICATION (UL DIRECTION) | 4008 |
| TRANSMISSION DESTINATION ADDRESS OF DATA COMMUNICATION (UL DIRECTION) | 150.20.19.29 |
| TRANSMISSION DESTINATION PORT NUMBER OF DATA COMMUNICATION (UL DIRECTION) | 2003 |
| RESULT (8 BYTES) | RESULT CODE (SUCCESS: 1, FAILURE: 0) |

FIG. 20

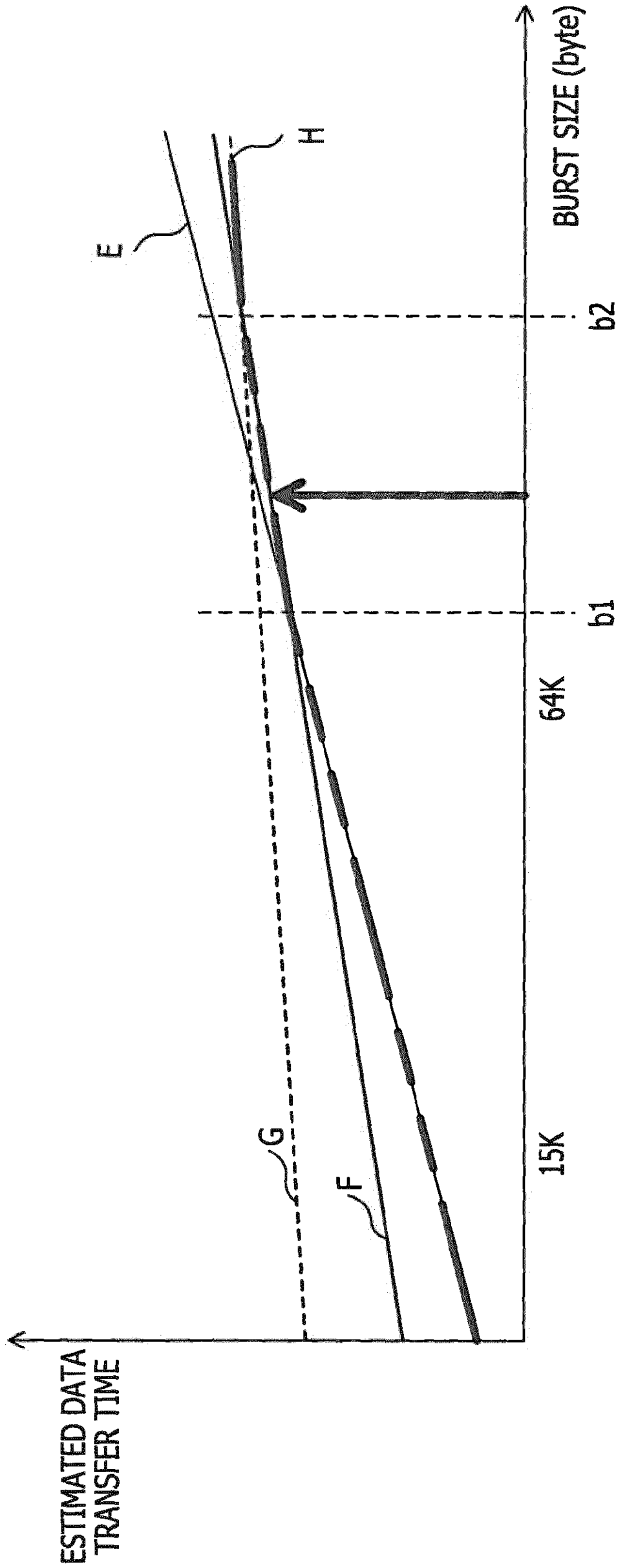
ESTIMATED DATA TRANSFER TIME
BURST SIZE (byte)
15K
64K
b1
b2
E
F
G
H

FIG. 21

M21

| |
|---|
| MESSAGE TYPE (0x5 RELAY TABLE REGISTRATION MSG) |
| SIZE |
| INBOUND SRC IP ADDRESS (4 Bytes) |
| INBOUND SRC PORT NUMBER (4 Bytes) |
| INBOUND DST IP ADDRESS (4 Bytes) |
| INBOUND DST PORT NUMBER (4 Bytes) |
| INBOUND DST PROTO (8 Bytes) |
| OUTBOUND SRC IP ADDRESS (4 Bytes) |
| OUTBOUND SRC PORT NUMBER (4 Bytes) |
| OUTBOUND DST IP ADDRESS (4 Bytes) |
| OUTBOUND DST PORT NUMBER (4 Bytes) |
| OUTBOUND PROTO (8 Bytes) |

M22

| |
|---|
| MESSAGE TYPE (0x6) RELAY TABLE REGISTRATION RES MSG) |
| SIZE |
| INBOUND SRC IP ADDRESS (4 Bytes) |
| INBOUND SRC PORT NUMBER (4 Bytes) |
| INBOUND DST IP ADDRESS (4 Bytes) |
| INBOUND DST PORT NUMBER (4 Bytes) |
| INBOUND DST PROTO (8 Bytes) |
| OUTBOUND SRC IP ADDRESS (4 Bytes) |
| OUTBOUND SRC PORT NUMBER (4 Bytes) |
| OUTBOUND DST IP ADDRESS (4 Bytes) |
| OUTBOUND DST PORT NUMBER (4 Bytes) |
| RESULT (8 Bytes) |

# FIG. 22

37a-u

| UL RECEPTION SESSION | | | UL TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 133.150.114. 56:4008 | 150.80.65.98 :5002 | TCP | 150.80.65.98 :5004 | 160.10.1.5 :6001 | STCP |

37d-u

| UL RECEPTION SESSION | | | UL TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 150.80.65.98 :5004 | 160.10.1.5 :6001 | STCP | 133.150.114. 56:4008 | 150.20.19.29 :2003 | TCP |

17a

| UL RECEPTION SESSION | | | UL TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 133.150.114. 56:4008 | 150.20.19.29 :2003 | TCP | 133.150.114. 56:4008 | 150.80.65.98 :5002 | TCP |

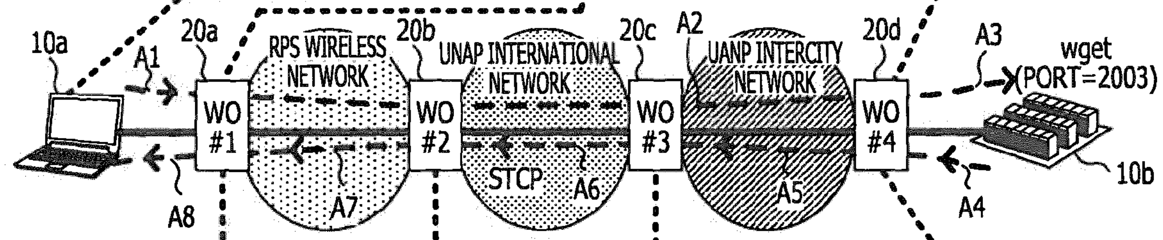


133.150.114.56
150.80.65.98
180.90.14.6
120.160.50.1
160.10.1.5
150.20.19.29

37a-d

| DL RECEPTION SESSION | | | UL TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 180.90.14.6 :4005 | 150.80.65.98 :6100 | RPS | 150.20.19.2 9:2003 | 133.150.114. 56:4008 | TCP |

37d-d

| DL RECEPTION SESSION | | | UL TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 150.20.19.29 :2003 | 160.10.1.5 :2100 | TCP | 160.10.1.5 :2300 | 120.160.50.1 :5001 | UNAP |

| DL RECEPTION SESSION | | | UL TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 120.160.50.1 :3001 | 180.90.14.6 :5400 | UNAP | 180.90.14.6 :4005 | 150.80.65.98 :6100 | RPS |

37b

| DL RECEPTION SESSION | | | UL TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 160.10.1.5 :2300 | 120.160.50.1 :5001 | UNAP | 120.160.50.1 :3001 | 180.90.14.6 :5400 | UNAP |

37c

FIG. 23

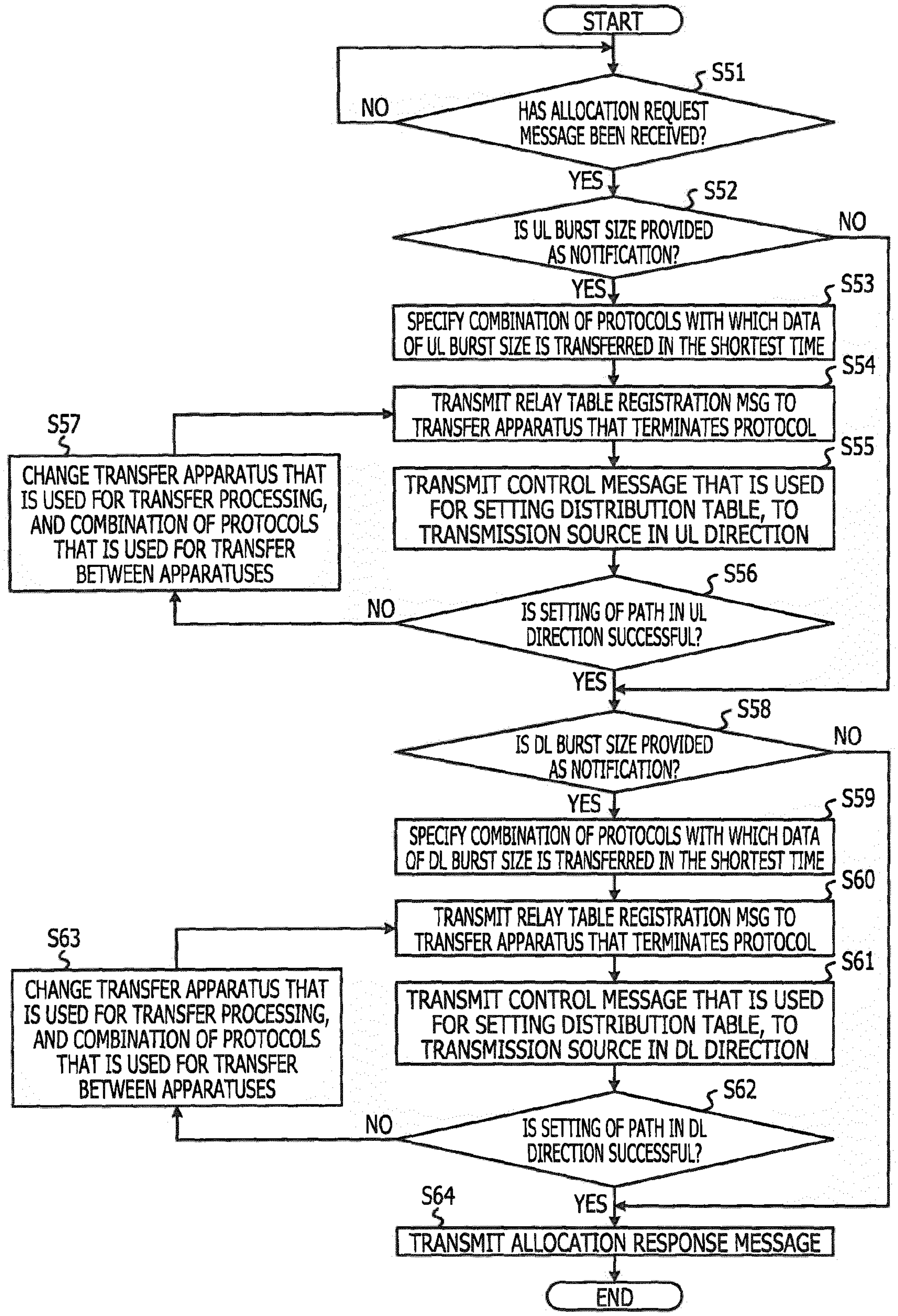
START
S51
HAS ALLOCATION REQUEST MESSAGE BEEN RECEIVED?
NO
YES
S52
IS UL BURST SIZE PROVIDED AS NOTIFICATION?
NO
YES
S53
SPECIFY COMBINATION OF PROTOCOLS WITH WHICH DATA OF UL BURST SIZE IS TRANSFERRED IN THE SHORTEST TIME
S54
TRANSMIT RELAY TABLE REGISTRATION MSG TO TRANSFER APPARATUS THAT TERMINATES PROTOCOL
S55
TRANSMIT CONTROL MESSAGE THAT IS USED FOR SETTING DISTRIBUTION TABLE, TO TRANSMISSION SOURCE IN UL DIRECTION
S56
IS SETTING OF PATH IN UL DIRECTION SUCCESSFUL?
NO
S57
CHANGE TRANSFER APPARATUS THAT IS USED FOR TRANSFER PROCESSING, AND COMBINATION OF PROTOCOLS THAT IS USED FOR TRANSFER BETWEEN APPARATUSES
YES
S58
IS DL BURST SIZE PROVIDED AS NOTIFICATION?
NO
YES
S59
SPECIFY COMBINATION OF PROTOCOLS WITH WHICH DATA OF DL BURST SIZE IS TRANSFERRED IN THE SHORTEST TIME
S60
TRANSMIT RELAY TABLE REGISTRATION MSG TO TRANSFER APPARATUS THAT TERMINATES PROTOCOL
S61
TRANSMIT CONTROL MESSAGE THAT IS USED FOR SETTING DISTRIBUTION TABLE, TO TRANSMISSION SOURCE IN DL DIRECTION
S62
IS SETTING OF PATH IN DL DIRECTION SUCCESSFUL?
NO
S63
CHANGE TRANSFER APPARATUS THAT IS USED FOR TRANSFER PROCESSING, AND COMBINATION OF PROTOCOLS THAT IS USED FOR TRANSFER BETWEEN APPARATUSES
YES
S64
TRANSMIT ALLOCATION RESPONSE MESSAGE
END

FIG. 24

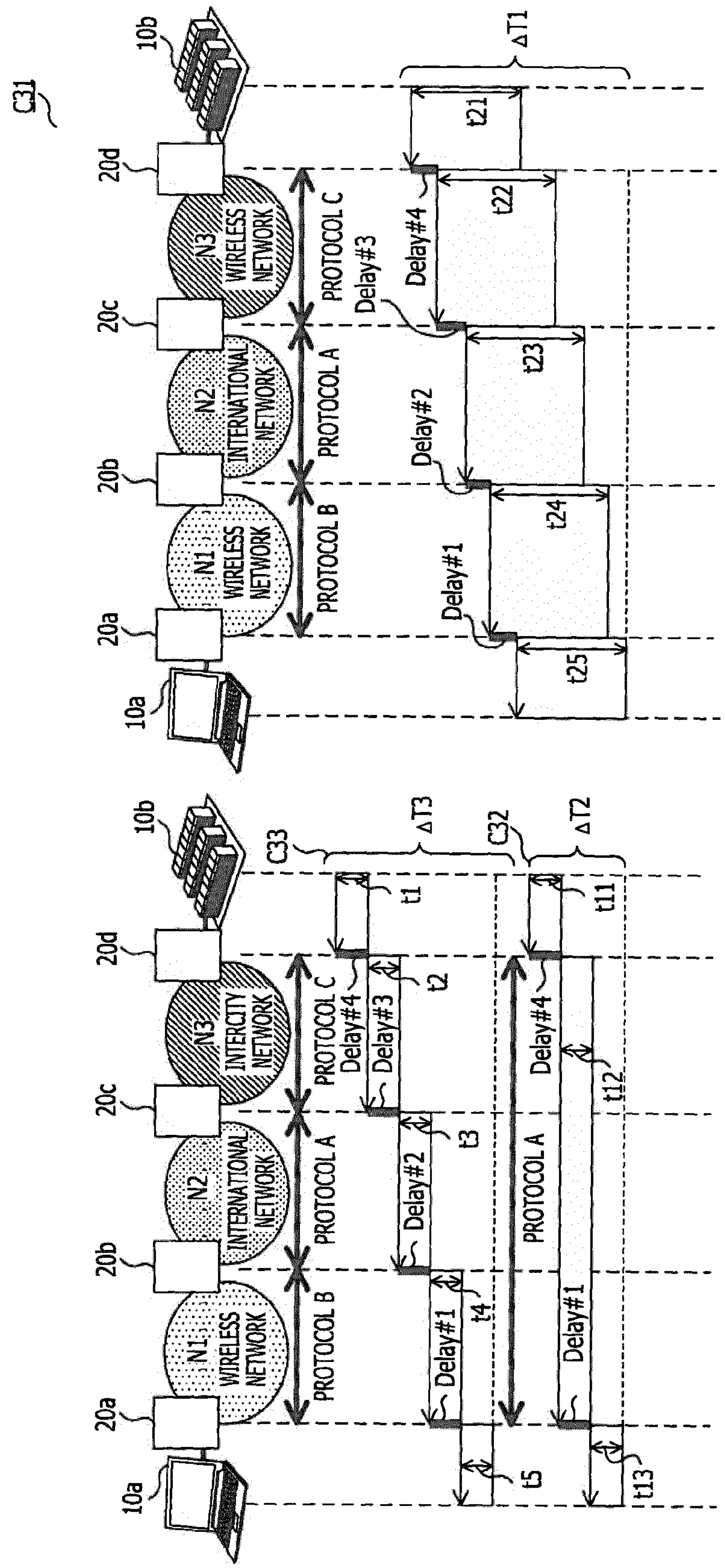
C31
10a
20a
20b
20c
20d
10b
N1 WIRELESS NETWORK
N2 INTERNATIONAL NETWORK
N3 WIRELESS NETWORK
PROTOCOL B
PROTOCOL A
PROTOCOL C
Delay#1
Delay#2
Delay#3
Delay#4
t21
t22
t23
t24
t25
ΔT1
N3 INTERCITY NETWORK
C33
C32
ΔT3
ΔT2
t1
t2
t3
t4
t5
t11
t12
t13

FIG. 25

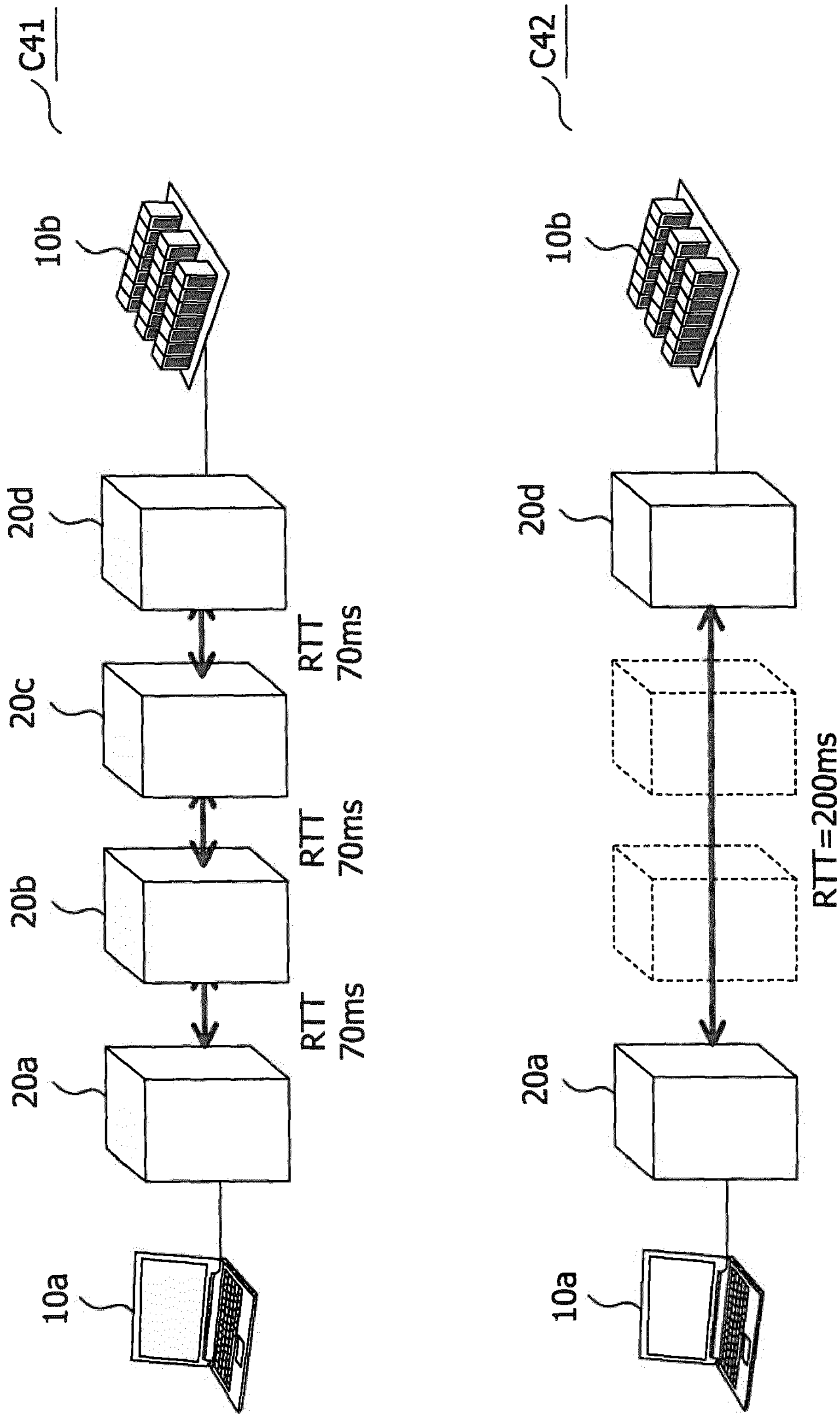
C41
10a
20a
20b
20c
20d
10b
RTT
70ms
RTT
70ms
RTT
70ms
C42
10a
20a
20d
10b
RTT=200ms

FIG. 26

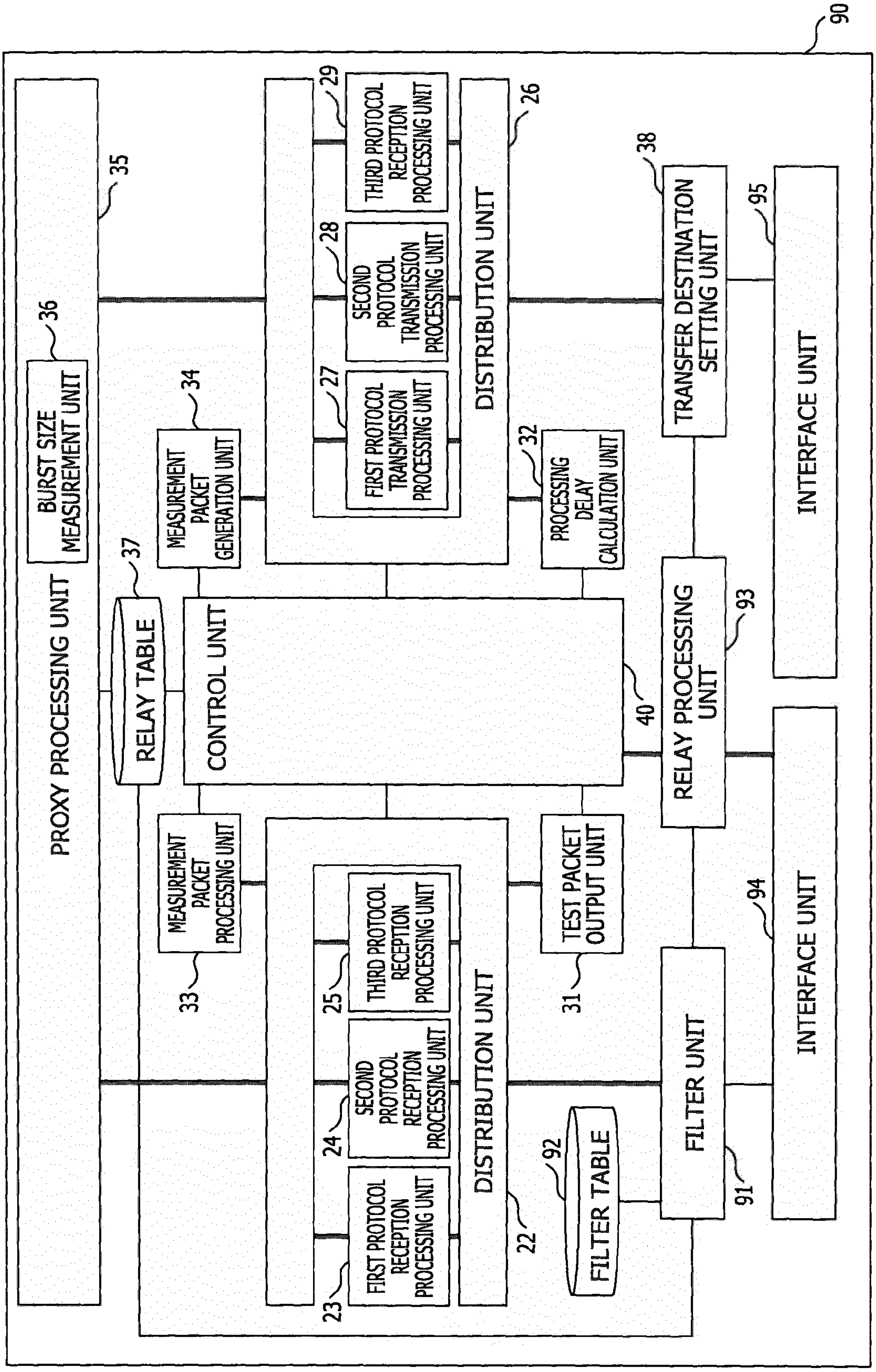
90
PROXY PROCESSING UNIT
35
BURST SIZE MEASUREMENT UNIT
36
RELAY TABLE
37
MEASUREMENT PACKET GENERATION UNIT
34
MEASUREMENT PACKET PROCESSING UNIT
33
CONTROL UNIT
40
DISTRIBUTION UNIT
26
FIRST PROTOCOL TRANSMISSION PROCESSING UNIT
27
SECOND PROTOCOL TRANSMISSION PROCESSING UNIT
28
THIRD PROTOCOL RECEPTION PROCESSING UNIT
29
PROCESSING DELAY CALCULATION UNIT
32
DISTRIBUTION UNIT
22
FIRST PROTOCOL RECEPTION PROCESSING UNIT
23
SECOND PROTOCOL RECEPTION PROCESSING UNIT
24
THIRD PROTOCOL RECEPTION PROCESSING UNIT
25
TEST PACKET OUTPUT UNIT
31
FILTER TABLE
92
TRANSFER DESTINATION SETTING UNIT
38
RELAY PROCESSING UNIT
93
FILTER UNIT
91
INTERFACE UNIT
95
INTERFACE UNIT
94

FIG. 27A

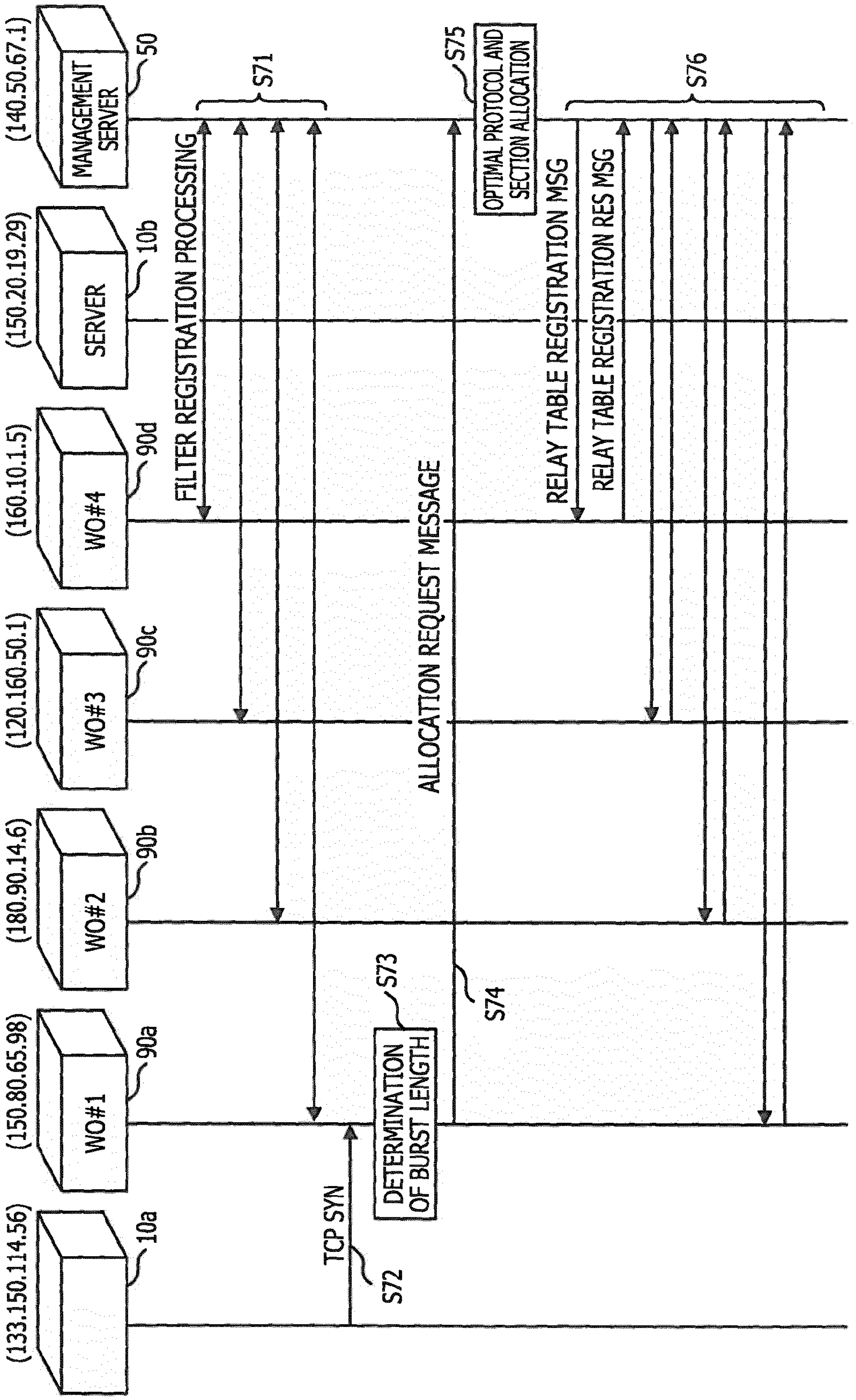
(133.150.114.56)
10a
(150.80.65.98)
WO#1
90a
(180.90.14.6)
WO#2
90b
(120.160.50.1)
WO#3
90c
(160.10.1.5)
WO#4
90d
(150.20.19.29)
SERVER
10b
(140.50.67.1)
MANAGEMENT SERVER
50
S71
FILTER REGISTRATION PROCESSING
TCP SYN
S72
DETERMINATION OF BURST LENGTH
S73
S74
ALLOCATION REQUEST MESSAGE
S75
OPTIMAL PROTOCOL AND SECTION ALLOCATION
S76
RELAY TABLE REGISTRATION MSG
RELAY TABLE REGISTRATION RES MSG

FIG. 27B

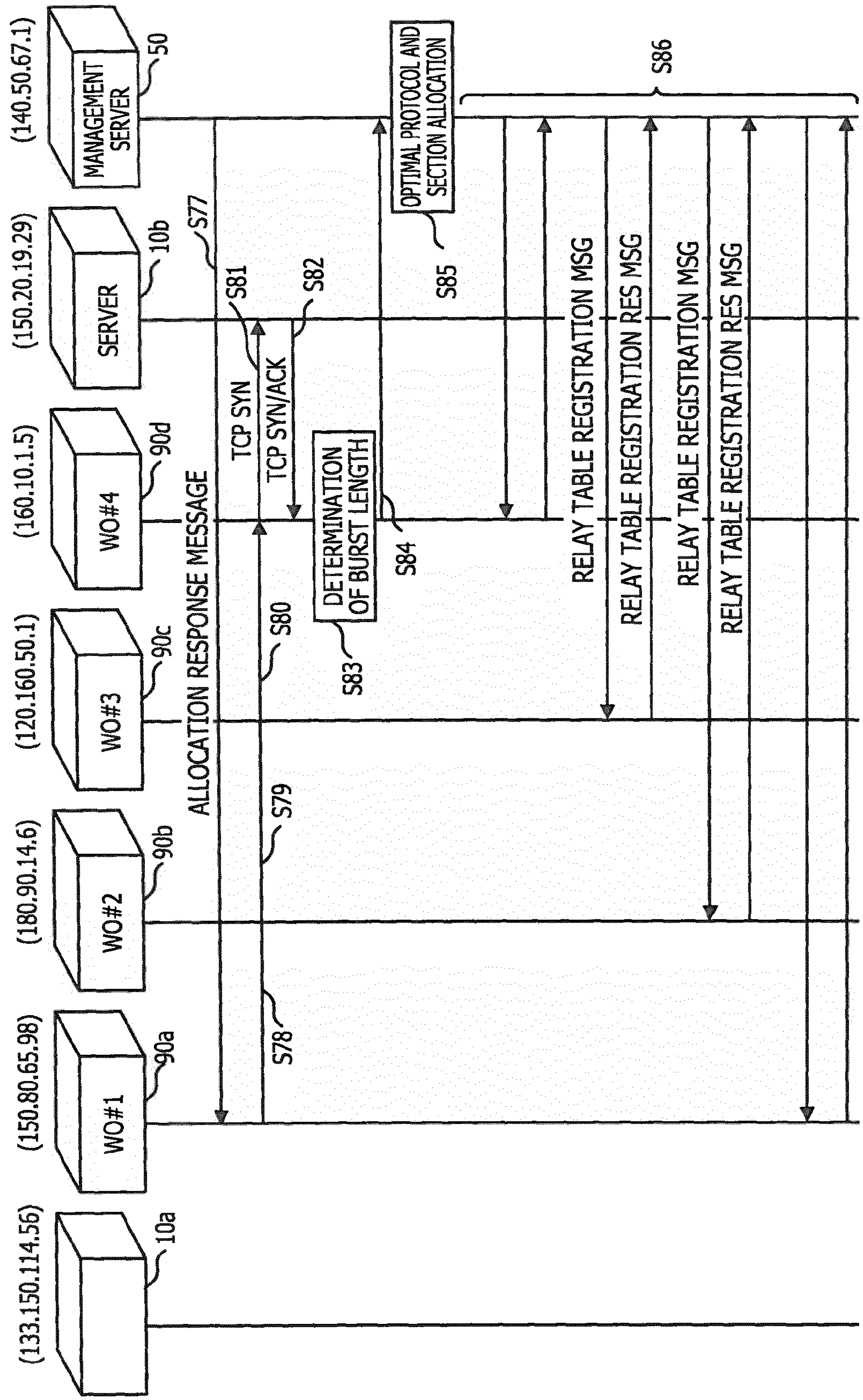
(140.50.67.1)
MANAGEMENT SERVER
50
(150.20.19.29)
SERVER
10b
(160.10.1.5)
WO#4
90d
(120.160.50.1)
WO#3
90c
(180.90.14.6)
WO#2
90b
(150.80.65.98)
WO#1
90a
(133.150.114.56)
10a
S77
ALLOCATION RESPONSE MESSAGE
S78
S79
S80
S81
TCP SYN
S82
TCP SYN/ACK
S83
DETERMINATION OF BURST LENGTH
S84
S85
OPTIMAL PROTOCOL AND SECTION ALLOCATION
S86
RELAY TABLE REGISTRATION MSG
RELAY TABLE REGISTRATION RES MSG
RELAY TABLE REGISTRATION MSG
RELAY TABLE REGISTRATION RES MSG

FIG. 27C

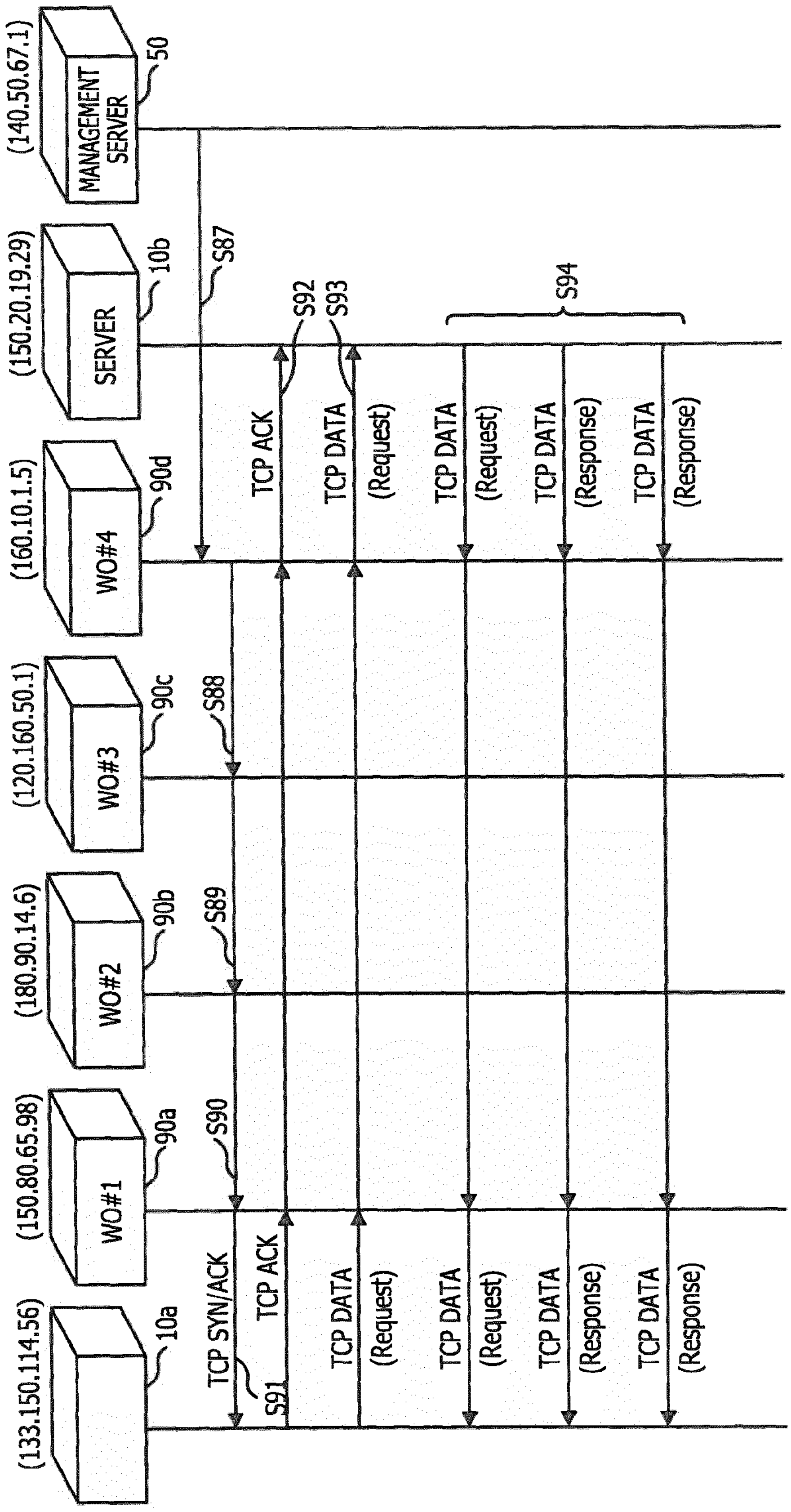
(133.150.114.56)
10a
(150.80.65.98)
WO#1
90a
(180.90.14.6)
WO#2
90b
(120.160.50.1)
WO#3
90c
(160.10.1.5)
WO#4
90d
(150.20.19.29)
SERVER
10b
(140.50.67.1)
MANAGEMENT SERVER
50
S87
S88
S89
S90
S91
TCP SYN/ACK
TCP ACK
S92
TCP DATA
(Request)
S93
TCP DATA
(Request)
TCP DATA
(Response)
TCP DATA
(Response)
S94

# FIG. 28

M31

| |
|---|
| MESSAGE TYPE (0x9 FILTER REGISTRATION MSG) |
| SIZE |
| TRANSMISSION SOURCE ADDRESS 1 (4 Bytes) |
| TRANSMISSION SOURCE PORT NUMBER 1 (4 Bytes) |
| TRANSMISSION DESTINATION ADDRESS 1 (4 Bytes) |
| TRANSMISSION DESTINATION PORT NUMBER 1 (4 Bytes) |
| TRANSMISSION SOURCE ADDRESS 2 (4 Bytes) |
| TRANSMISSION SOURCE PORT NUMBER 2 (4 Bytes) |
| TRANSMISSION DESTINATION ADDRESS 2 (4 Bytes) |
| TRANSMISSION DESTINATION PORT NUMBER 2 (4 Bytes) |
| ... |

M32

| |
|---|
| MESSAGE TYPE (0xA FILTER REGISTRATION RES MSG) |
| SIZE |
| TRANSMISSION SOURCE ADDRESS 1 (4 Bytes) |
| TRANSMISSION SOURCE PORT NUMBER 1 (4 Bytes) |
| TRANSMISSION DESTINATION ADDRESS 1 (4 Bytes) |
| TRANSMISSION DESTINATION PORT NUMBER 1 (4 Bytes) |
| TRANSMISSION SOURCE ADDRESS 2 (4 Bytes) |
| TRANSMISSION SOURCE PORT NUMBER 2 (4 Bytes) |
| TRANSMISSION DESTINATION ADDRESS 2 (4 Bytes) |
| TRANSMISSION DESTINATION PORT NUMBER 2 (4 Bytes) |
| ... |

FIG. 29

| DESTINATION IP | DESTINATION PORT | TRANSMISSION SOURCE IP | TRANSMISSION SOURCE PORT |
|---|---|---|---|
| 150.20.19.0 | * | * | * |
| 133.150.114.0 | * | * | * |

FIG. 30

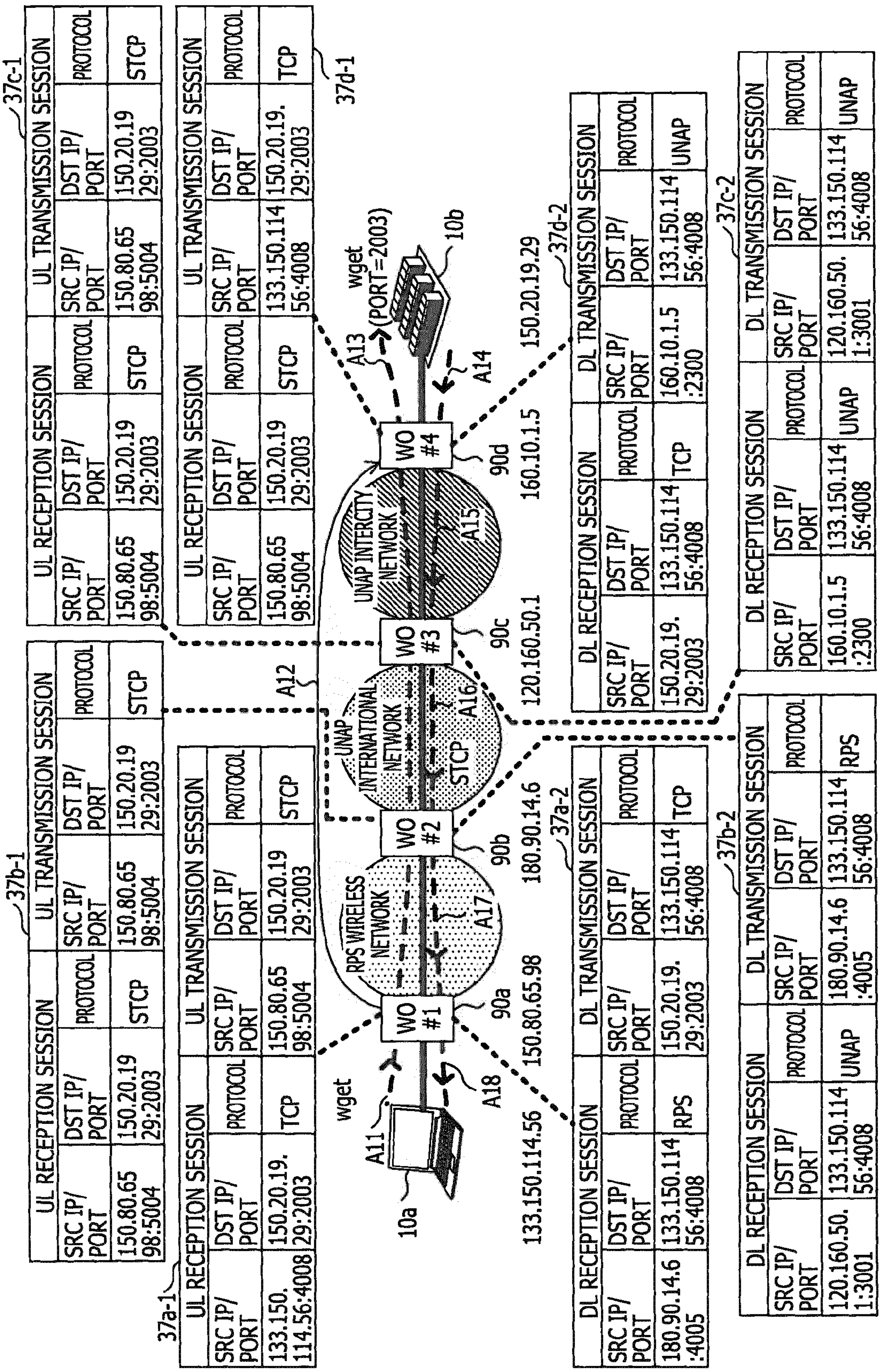
37b-1
UL RECEPTION SESSION
SRC IP/ PORT
DST IP/ PORT
PROTOCOL
150.80.65 98:5004
150.20.19 29:2003
STCP
UL TRANSMISSION SESSION
SRC IP/ PORT
DST IP/ PORT
PROTOCOL
150.80.65 98:5004
150.20.19 29:2003
STCP
37a-1
UL RECEPTION SESSION
SRC IP/ PORT
DST IP/ PORT
PROTOCOL
133.150. 114.56:4008
150.20.19. 29:2003
TCP
UL TRANSMISSION SESSION
SRC IP/ PORT
DST IP/ PORT
PROTOCOL
150.80.65 98:5004
150.20.19 29:2003
STCP
37c-1
UL RECEPTION SESSION
SRC IP/ PORT
DST IP/ PORT
PROTOCOL
150.80.65 98:5004
150.20.19 29:2003
STCP
UL TRANSMISSION SESSION
SRC IP/ PORT
DST IP/ PORT
PROTOCOL
150.80.65 98:5004
150.20.19 29:2003
STCP
37d-1
UL RECEPTION SESSION
SRC IP/ PORT
DST IP/ PORT
PROTOCOL
150.80.65 98:5004
150.20.19 29:2003
STCP
UL TRANSMISSION SESSION
SRC IP/ PORT
DST IP/ PORT
PROTOCOL
133.150.114 56:4008
150.20.19. 29:2003
TCP
wget
A11
10a
A18
WO #1
90a
RPS WIRELESS NETWORK
A17
WO #2
90b
UNAP INTERNATIONAL NETWORK
STCP
A16
A12
WO #3
90c
UNAP INTERCITY NETWORK
A15
WO #4
90d
A13
A14
wget (PORT=2003)
10b
133.150.114.56
150.80.65.98
180.90.14.6
120.160.50.1
160.10.1.5
150.20.19.29
37a-2
DL RECEPTION SESSION
SRC IP/ PORT
DST IP/ PORT
PROTOCOL
180.90.14.6 :4005
133.150.114 56:4008
RPS
DL TRANSMISSION SESSION
SRC IP/ PORT
DST IP/ PORT
PROTOCOL
150.20.19. 29:2003
133.150.114 56:4008
TCP
37b-2
DL RECEPTION SESSION
SRC IP/ PORT
DST IP/ PORT
PROTOCOL
120.160.50. 1:3001
133.150.114 56:4008
UNAP
DL TRANSMISSION SESSION
SRC IP/ PORT
DST IP/ PORT
PROTOCOL
180.90.14.6 :4005
133.150.114 56:4008
RPS
37d-2
DL RECEPTION SESSION
SRC IP/ PORT
DST IP/ PORT
PROTOCOL
150.20.19. 29:2003
133.150.114 56:4008
TCP
DL TRANSMISSION SESSION
SRC IP/ PORT
DST IP/ PORT
PROTOCOL
160.10.1.5 :2300
133.150.114 56:4008
UNAP
37c-2
DL RECEPTION SESSION
SRC IP/ PORT
DST IP/ PORT
PROTOCOL
160.10.1.5 :2300
133.150.114 56:4008
UNAP
DL TRANSMISSION SESSION
SRC IP/ PORT
DST IP/ PORT
PROTOCOL
120.160.50. 1:3001
133.150.114 56:4008
UNAP

# FIG. 31

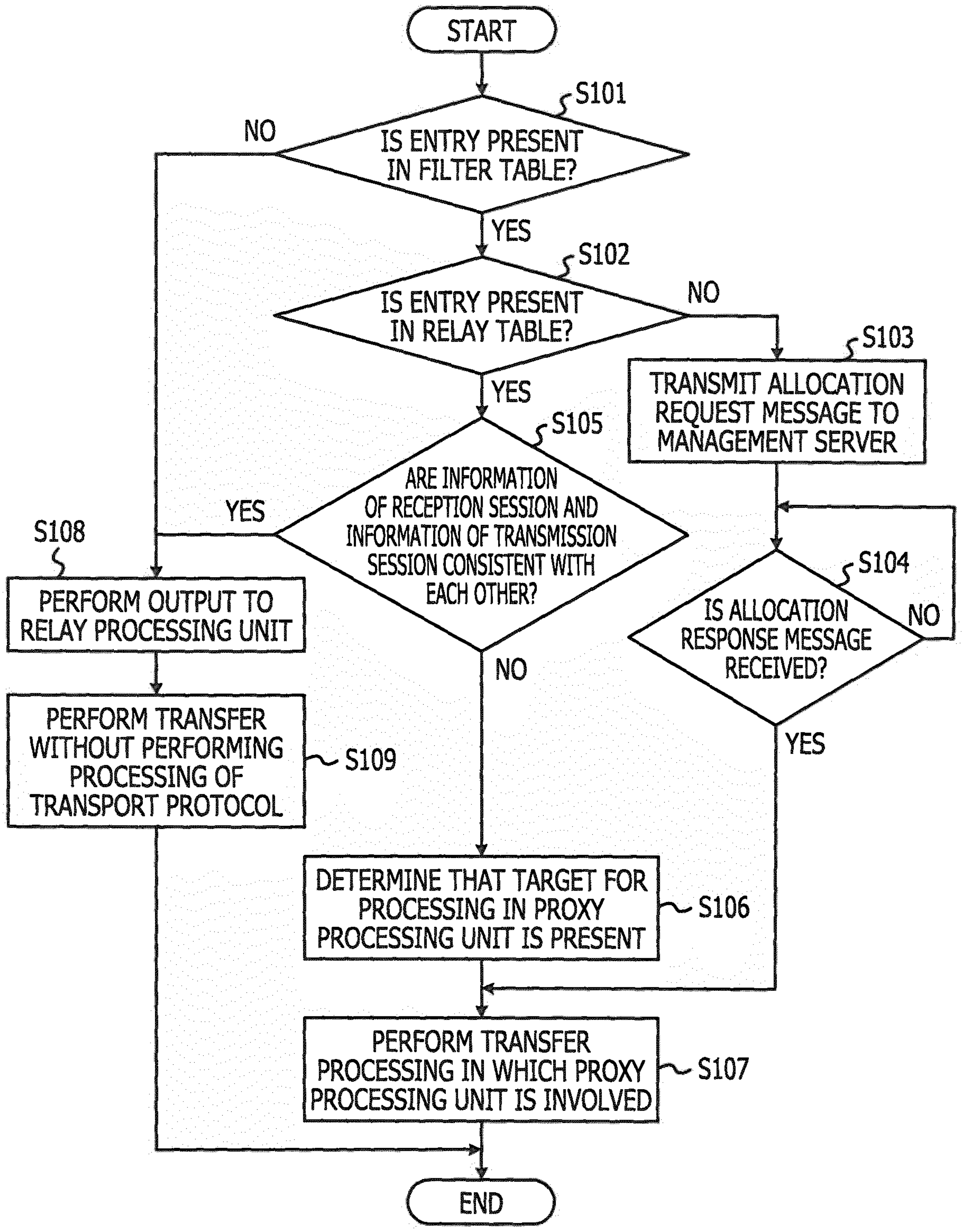
START
S101
IS ENTRY PRESENT IN FILTER TABLE?
NO
YES
S102
IS ENTRY PRESENT IN RELAY TABLE?
NO
YES
S103
TRANSMIT ALLOCATION REQUEST MESSAGE TO MANAGEMENT SERVER
S105
ARE INFORMATION OF RECEPTION SESSION AND INFORMATION OF TRANSMISSION SESSION CONSISTENT WITH EACH OTHER?
YES
NO
S104
IS ALLOCATION RESPONSE MESSAGE RECEIVED?
NO
YES
S108
PERFORM OUTPUT TO RELAY PROCESSING UNIT
PERFORM TRANSFER WITHOUT PERFORMING PROCESSING OF TRANSPORT PROTOCOL
S109
DETERMINE THAT TARGET FOR PROCESSING IN PROXY PROCESSING UNIT IS PRESENT
S106
PERFORM TRANSFER PROCESSING IN WHICH PROXY PROCESSING UNIT IS INVOLVED
S107
END

FIG. 32

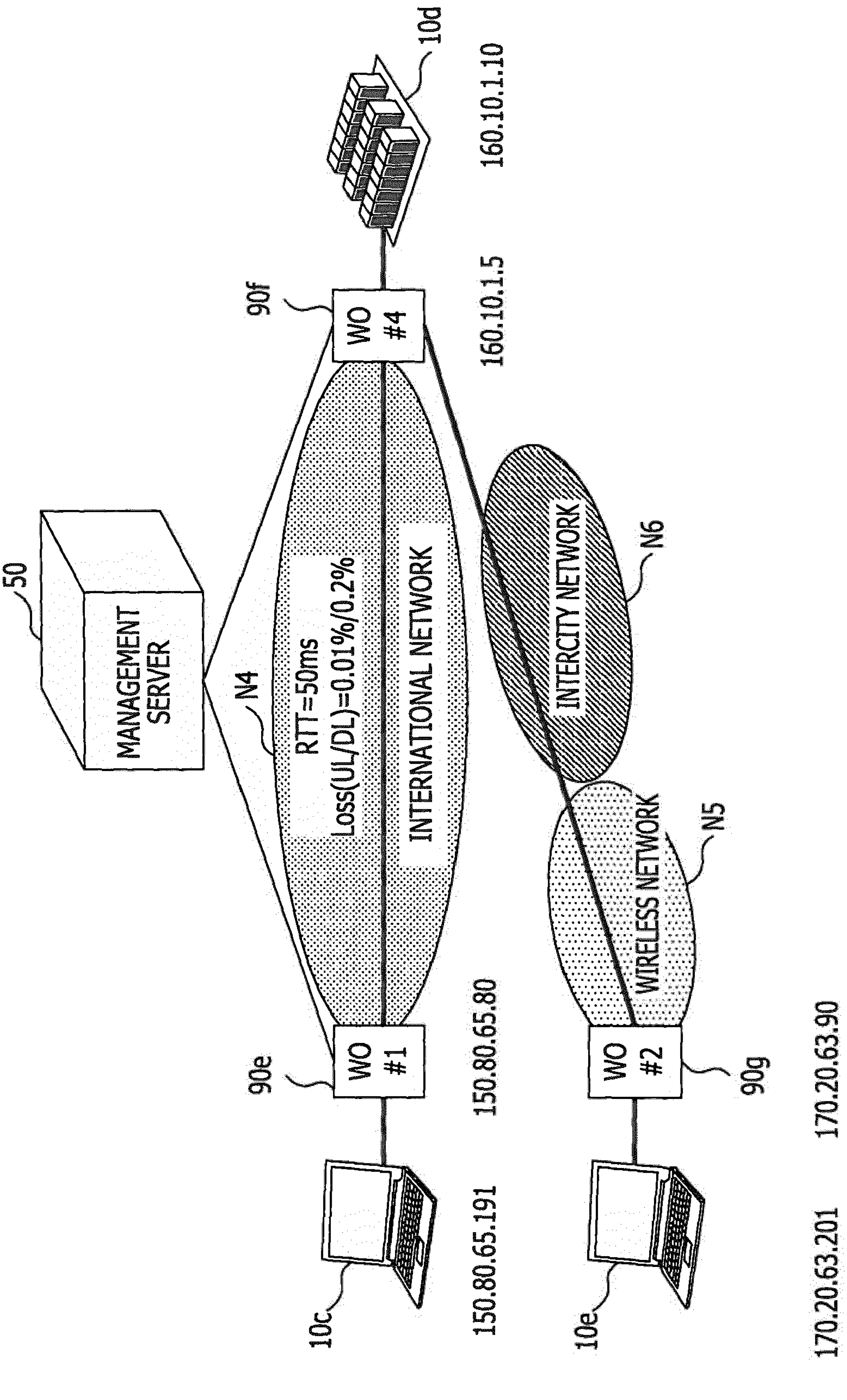
50
MANAGEMENT SERVER
N4
RTT=50ms
Loss(UL/DL)=0.01%/0.2%
INTERNATIONAL NETWORK
INTERCITY NETWORK
N6
WIRELESS NETWORK
N5
90e
WO #1
90f
WO #4
WO #2
90g
10c
10e
10d
150.80.65.191
150.80.65.80
160.10.1.5
160.10.1.10
170.20.63.201
170.20.63.90

FIG. 33

| NUMBER OF SECTIONS | APPLIED RANGES OF PROTOCOL SESSIONS | APPLICATION PROTOCOL | BOTTLENECK LINK | TRANSFER APPARATUS THAT PERFORMS TERMINATION | Σ PROCESSING DELAY (ms) | ID |
|---|---|---|---|---|---|---|
| 0 | SERVER ⇒ TERMINAL | TCP | SERVER ⇒ TERMINAL 10Mbps | NONE | 0 | 0 |
| 1 | WO#4 ⇒ WO#1 | UNAP | WO#4 ⇒ WO#1 80Mbps | WO#4 (TCP/UNAP), WO#1 (UNAP/TCP) | 2+2=4 | 1.1 |
| | | RPS | WO#4 ⇒ WO#1 70Mbps | WO#4 (TCP/RPS), WO#1 (RPS/TCP) | 3+3=6 | 1.2 |
| | | STCP | WO#4 ⇒ WO#1 50Mbps | WO#4 (TCP/STCP), WO#1 (STCP/TCP) | 1+1=2 | 1.3 |

# FIG. 34

37e

| RECEPTION SESSION | | | TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 160.10.1.5 :2070 | 150.80.65. 191:98 | UNAP | 150.80.65. 98:5002 | 150.80.65.1 91:98 | TCP |
| 150.80.65. 191:2010 | 160.10.1.10 :3389 | TCP | 150.80.65. 191:2010 | 160.10.1.10 :3389 | TCP |
| 160.10.1.10 :3389 | 150.80.65. 191:2010 | TCP | 160.10.1.10 :3389 | 150.80.65. 191:2010 | TCP |

37f

| RECEPTION SESSION | | | TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 160.10.1.10 :2003 | 150.80.65. 191:98 | TCP | 160.10.1.5 :2070 | 150.80.65. 191:98 | UNAP |
| 150.80.65. 191:2010 | 160.10.1.10 :3389 | TCP | 150.80.65. 191:2010 | 160.10.1.10 :3389 | TCP |
| 160.10.1.10 :3389 | 150.80.65. 191:2010 | TCP | 160.10.1.10 :3389 | 150.80.65. 191:2010 | TCP |

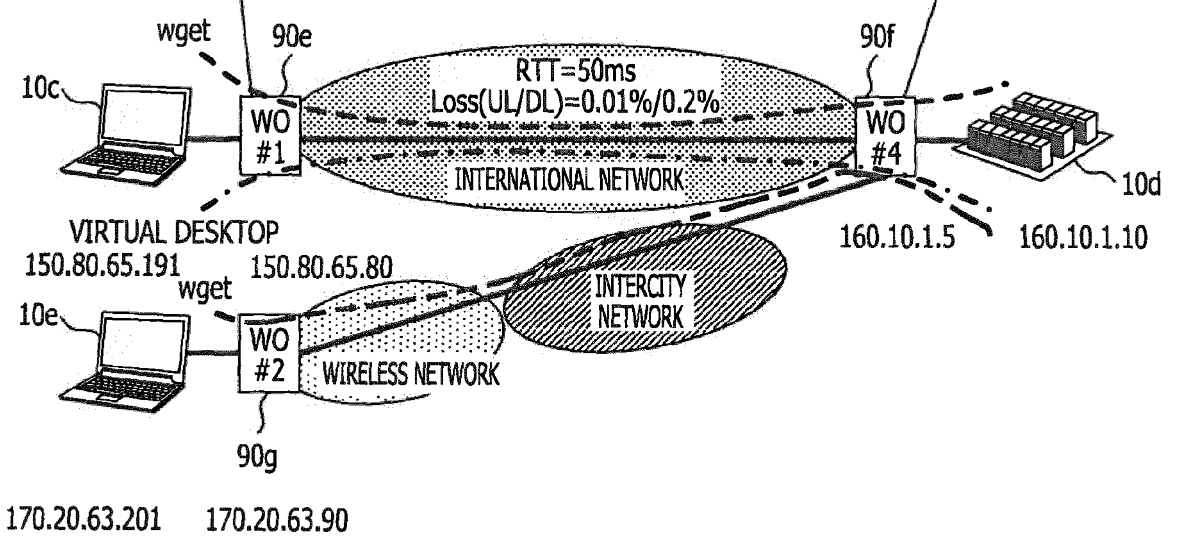

# FIG. 35

37e

| RECEPTION SESSION | | | TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 160.10.1.5 :2070 | 150.80.65. 191:98 | UNAP | 160.10.1.10 :2003 | 150.80.65. 191:98 | TCP |

37f

| RECEPTION SESSION | | | TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 160.10.1.10 :2003 | 150.80.65. 191:98 | TCP | 160.10.1.5 :2070 | 150.80.65. 191:98 | UNAP |
| 160.10.1.10 :2003 | 170.20.63. 201:99 | TCP | 160.10.1.5 :2071 | 170.20.63. 201:99 | RPS |

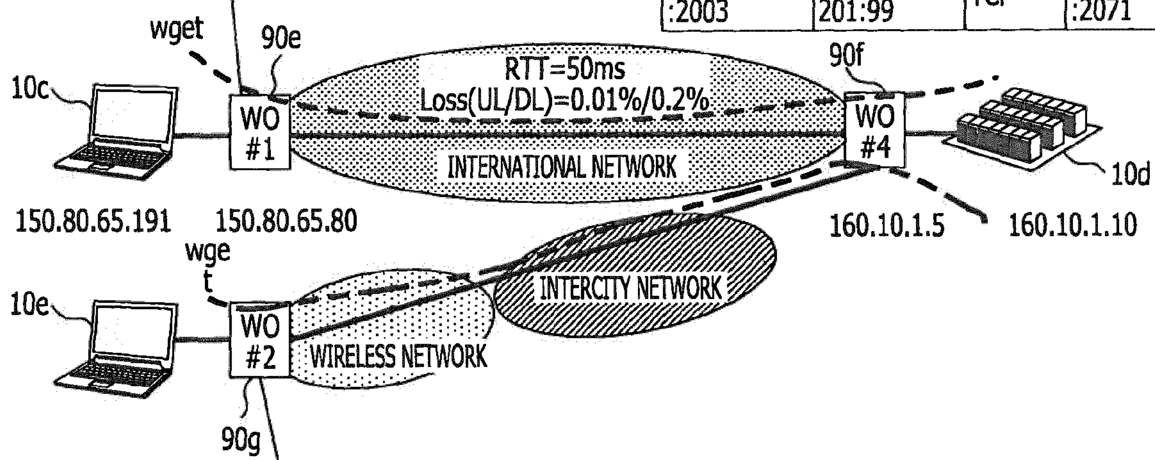


170.20.63.201 170.20.63.90

37g

| RECEPTION SESSION | | | TRANSMISSION SESSION | | |
|---|---|---|---|---|---|
| SRC IP/ PORT | DST IP/ PORT | PROTOCOL | SRC IP/ PORT | DST IP/ PORT | PROTOCOL |
| 160.10.1.5 :2071 | 170.20.63. 201:99 | RPS | 160.10.1.10 :2003 | 170.20.63. 201:99 | TCP |

FIG. 36

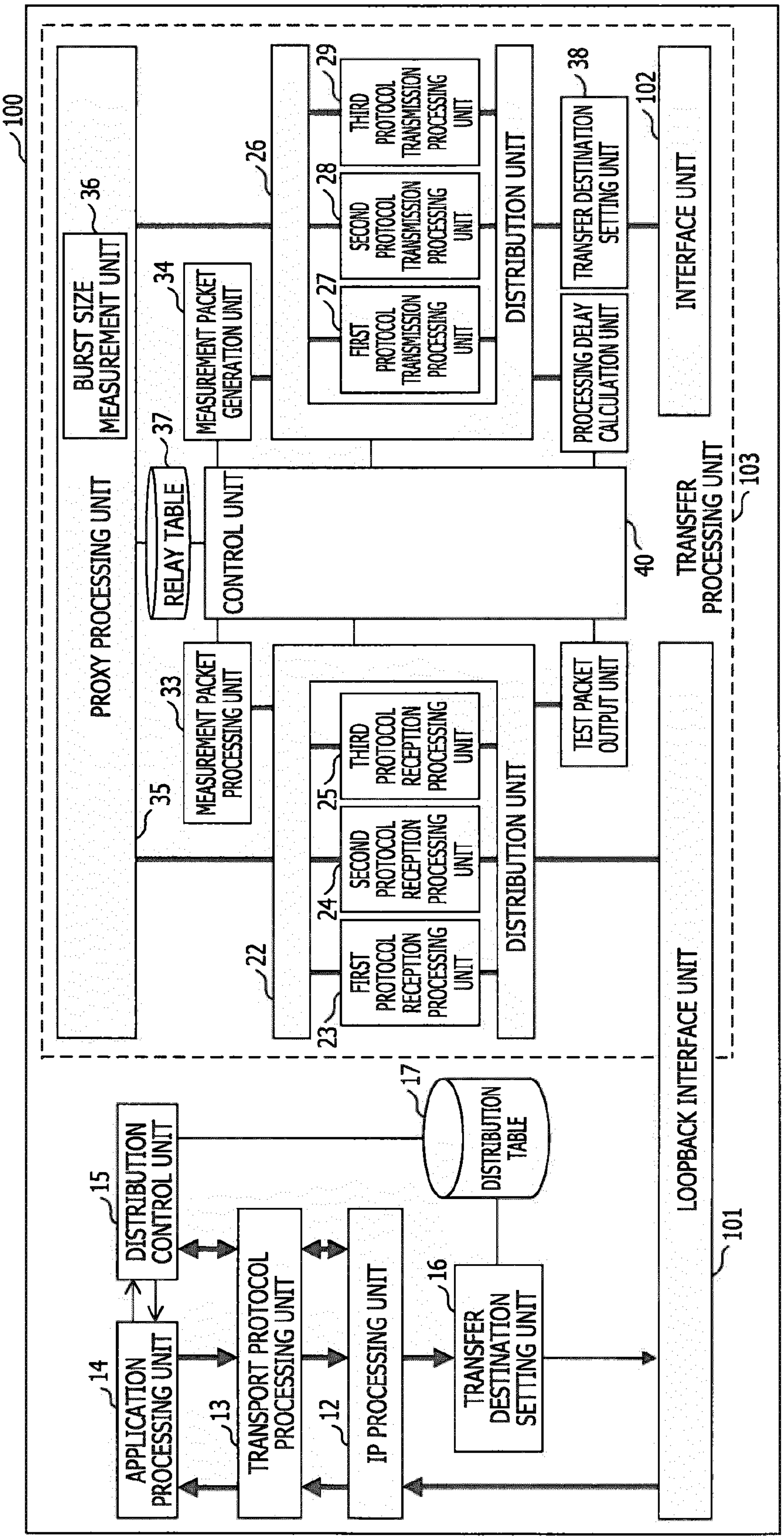
100
PROXY PROCESSING UNIT
35
BURST SIZE MEASUREMENT UNIT
36
MEASUREMENT PACKET GENERATION UNIT
34
RELAY TABLE
37
CONTROL UNIT
40
MEASUREMENT PACKET PROCESSING UNIT
33
26
FIRST PROTOCOL TRANSMISSION PROCESSING UNIT
27
SECOND PROTOCOL TRANSMISSION PROCESSING UNIT
28
THIRD PROTOCOL TRANSMISSION PROCESSING UNIT
29
DISTRIBUTION UNIT
22
FIRST PROTOCOL RECEPTION PROCESSING UNIT
23
SECOND PROTOCOL RECEPTION PROCESSING UNIT
24
THIRD PROTOCOL RECEPTION PROCESSING UNIT
25
DISTRIBUTION UNIT
PROCESSING DELAY CALCULATION UNIT
TRANSFER DESTINATION SETTING UNIT
38
TEST PACKET OUTPUT UNIT
INTERFACE UNIT
102
TRANSFER PROCESSING UNIT
103
LOOPBACK INTERFACE UNIT
101
APPLICATION PROCESSING UNIT
14
DISTRIBUTION CONTROL UNIT
15
TRANSPORT PROTOCOL PROCESSING UNIT
13
IP PROCESSING UNIT
12
TRANSFER DESTINATION SETTING UNIT
16
DISTRIBUTION TABLE
17

Europäisches Patentamt
European Patent Office
Office européen des brevets

# EUROPEAN SEARCH REPORT

Application Number
EP 15 18 2844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/213069 A1 (OGUCHI NAOKI [JP]) 23 August 2012 (2012-08-23) * paragraphs [0043], [0046], [0058], [0063], [0082], [0087]; figures 12,17,20 * | 1-15 | INV. H04L29/08 G06F9/455 H04L29/06 |
| X | US 2013/223254 A1 (OGUCHI NAOKI [JP]) 29 August 2013 (2013-08-29) * paragraphs [0041], [0043], [0055], [0065], [0092], [0093], [0031], [0144], [0145]; figures 7,14 * | 1-15 | |

TECHNICAL FIELDS SEARCHED (IPC)

H04L
G06F

The present search report has been drawn up for all claims

1

| Place of search | Date of completion of the search | Examiner |
|---|---|---|
| The Hague | 13 January 2016 | Lefebvre, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 18 2844

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2016

| Patent document cited in search report | Publication date | Patent family member(s) | Publication date |
|---|---|---|---|
| US 2012213069 A1 | 23-08-2012 | JP 2012175561 A | 10-09-2012 |
| | | US 2012213069 A1 | 23-08-2012 |
| US 2013223254 A1 | 29-08-2013 | JP 2013179502 A | 09-09-2013 |
| | | US 2013223254 A1 | 29-08-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013179502 A